# EUROPEAN PATENT APPLICATION

(11) **EP 4 645 105 A1**
(43) Date of publication of application: **05.11.2025**
(21) Application number: 23912152.8
(22) Date of filing: 26.12.2023
(51) Int. Cl.: G06F 16/20, G06F 16/383, G06Q 50/26

(54) **BUSINESS SUPPORT SYSTEM, BUSINESS SUPPORT METHOD, DATA MANAGEMENT PROGRAM, AND SEARCH PROGRAM**

(30) Priority: 27.12.2022 JP 2022209989
(71) Applicant: Takeda Pharmaceutical Company Limited, Osaka-shi, Osaka 541-0045 (JP)
(72) Inventor: KAKIZUME, Tomoyuki, Fujisawa-shi, Kanagawa 251-0012 (JP); MIZUMA, Koutarou, Osaka-shi, Osaka 541-0045 (JP); YAMASAKI, Fumihiro, Osaka-shi, Osaka 541-0045 (JP); NAKAYA, Ryo, Osaka-shi, Osaka 541-0045 (JP); SATO, Seiji, Osaka-shi, Osaka 541-0045 (JP)
(74) Representative: Jones, Nicholas Andrew
(86) International application number: PCT/JP2023/046690
(87) International publication number: WO 2024/143374

(57) **Abstract**

A framework for supporting a work on answer to an authority's inquiry is provided. A work support system includes: a division unit configured to generate a plurality of divided document data by dividing a plurality of inquiry items included in document data of an authority's inquiry per inquiry item; a first acquisition unit configured to acquire a plurality of filled-in divided document data in each of which an answer content for an inquiry content of a corresponding one of the plurality of inquiry items has been input; a second acquisition unit configured to acquire filled-in document data that is document data in one file format, generated from the plurality of filled-in divided document data acquired; and a storage unit configured to store each of the plurality of filled-in divided document data acquired, in a database in association with the filled-in document data.

## Description

### TECHNICAL FIELD

The present disclosure relates to a work support system, a work support method, a data management program, and a search program.

### BACKGROUND ART

In order to manufacture and sell pharmaceuticals and the like, it is necessary to apply for approval for manufacture and sales of pharmaceuticals and the like, and to obtain approval from the Minister of Health, Labour and Welfare. In foreign countries as well, it is necessary to obtain approval from authorities, such as the Food and Drug Administration, the European Medicines Agency, and the like. In addition, when there is an inquiry from the authority (authority's inquiry) into the content of an application in a review or the like of pharmaceuticals and the like, the applicant is required to answer appropriately to the authority's inquiry. In addition, when there is an authority's inquiry for a purpose other than a review or the like of pharmaceuticals and the like (hereinafter, pharmaceutical affairs inquiry), a company developing pharmaceuticals and the like is required to answer appropriately to the pharmaceutical affairs inquiry. In the following description, an authority's inquiry and an answer to the authority's inquiry include a pharmaceutical affairs inquiry and an answer to the pharmaceutical affairs inquiry.

### CITATION LIST

### PATENT LITERATURE

PTL 1: International Publication No. WO 2016/157467

### NON-PATENT LITERATURE

NPL 1: Pharmaceuticals and Medical Devices Agency, "Approval review activities (application, review, and the like", [online], [Searched October 21, 2022], Internet <URL:https://www.pmda.go.jp/review-services/drug-reviews/0001.html>

### SUMMARY OF THE INVENTION

### TECHNICAL PROBLEM

Here, the work on answer to an authority's inquiry has been performed so far based on the experience of the worker (who actually prepares an answer to each inquiry). Specifically, for example, the worker searches for the answers to past similar authority's inquiries by relying on his/her own memory, and prepares answers to the inquiries by referring to them.

In the meantime, for example, if it is possible to provide a framework for easily searching past similar cases of authority's inquiries for such a work process, the work efficiency of the worker will be improved and the work by the worker on answer will be supported.

An object of present disclosure is to provide a framework for supporting the work on answer to an authority's inquiry.

### SOLUTION TO THE PROBLEM

According to one embodiment, a work support system includes:
a division unit configured to generate a plurality of divided document data by dividing a plurality of inquiry items included in document data of an authority's inquiry per inquiry item;
a first acquisition unit configured to acquire a plurality of filled-in divided document data in each of which an answer content for an inquiry content of a corresponding one of the plurality of inquiry items has been input;
a second acquisition unit configured to acquire filled-in document data that is document data in one file format, generated from the plurality of filled-in divided document data acquired; and
a storage unit configured to store each of the plurality of filled-in divided document data acquired, in a database in association with the filled-in document data.

### ADVANTAGEOUS EFFECTS OF THE INVENTION

According to the present disclosure, it is possible to provide a framework for supporting work on answer to an authority's inquiry.

### BRIEF DESCRIPTION OF THE DRAWINGS

[FIG. 1] FIG. 1 is a first diagram showing an example of a system configuration of a work support system.
[FIG. 2] FIG. 2 is a second diagram showing an example of a system configuration of a work support system.
[FIG. 3] FIG. 3 is a diagram showing an example of a hardware configuration of a data management device and a server device.
[FIG. 4] FIG. 4 is a diagram showing an example of authority's inquiry document data.
[FIG. 5] FIG. 5 is a first diagram showing an example of a functional configuration of a management unit of a data management device.
[FIG. 6] FIG. 6 is a diagram showing a specific example of processing of a division unit included in the management unit of the data management device.
[FIG. 7] FIG. 7 is a diagram showing a specific example of processing of a distribution unit and a collection unit included in the management unit of the data management device.
[FIG. 8] FIG. 8 is a diagram showing a specific example of processing of the document data generation unit included in the management unit of the data management device.
[FIG. 9] FIG. 9 is a diagram showing a specific example of processing of the attribute information extraction unit included in the management unit of the data management device.
[FIG. 10] FIG. 10 is a diagram showing an example of registration data.
[FIG. 11] FIG. 11 is a first diagram showing an example of the functional configuration of a search unit of the server device.
[FIG. 12] FIG. 12 is a first diagram showing an example of a search screen displayed on a worker terminal.
[FIG. 13] FIG. 13 is a first sequence diagram showing the flow of processing in an accumulation phase of the work support system.
[FIG. 14] FIG. 14 is a first sequence diagram showing the flow of processing in the search phase of the work support system.
[FIG. 15] FIG. 15 is a third diagram showing an example of the system configuration of the work support system.
[FIG. 16] FIG. 16 is a fourth diagram showing an example of the system configuration of the work support system.
[FIG. 17] FIG. 17 is a diagram showing an example of the functional configuration of a training unit of a training device.
[FIG. 18] FIG. 18 is a diagram showing an example of the functional configuration of the management unit of the data management device and the functional configuration of a prediction unit of a prediction device.
[FIG. 19] FIG. 19 is a sequence diagram showing the flow of processing in a training phase of the work support system.
[FIG. 20] FIG. 20 is a second sequence diagram showing the flow of processing in the accumulation phase of the work support system.
[FIG. 21] FIG. 21 is a fifth diagram showing an example of the system configuration of the work support system.
[FIG. 22] FIG. 22 is a second diagram showing an example of the functional configuration of a search unit of the server device.
[FIG. 23] FIG. 23 is a second diagram showing an example of a search screen displayed on the worker terminal.
[FIG. 24] FIG. 24 is a first diagram showing a specific example of the processing of a first vectorization unit, a separation unit, and a second vectorization unit included in the search unit of the server device.
[FIG. 25] FIG. 25 is a second sequence diagram showing the flow of processing in a search phase of the work support system.
[FIG. 26] FIG. 26 is a third diagram showing an example of the functional configuration of the search unit of the server device.
[FIG. 27] FIG. 27 is a third diagram showing an example of the search screen displayed on the worker terminal.
[FIG. 28] FIG. 28 is a sixth diagram showing an example of the system configuration of the work support system.
[FIG. 29] FIG. 29 is a diagram for explaining the outline of processing in a feedback phase of the work support system.
[FIG. 30] FIG. 30 is a diagram showing an example of the functional configuration of an analysis unit of an analysis device.
[FIG. 31] FIG. 31 is a diagram showing a specific example of the processing of a training unit included in the analysis unit of the analysis device.
[FIG. 32] FIG. 32 is a second diagram showing a specific example of the processing of the first vectorization unit, the separation unit, and the second vectorization unit included in the search unit of the server device.
[FIG. 33] FIG. 33 is a sequence diagram showing the flow of processing in a feedback phase of the work support system.
[FIG. 34] FIG. 34 is a seventh diagram showing an example of the system configuration of the work support system.
[FIG. 35] FIG. 35 is a first diagram showing an example of an LM training data set.
[FIG. 36] FIG. 36 is a first sequence diagram showing the flow of processing in an LM training phase of the work support system.
[FIG. 37A] FIG. 37A is an eighth diagram showing an example of the system configuration of the work support system.
[FIG. 37B] FIG. 37B is a ninth diagram showing an example of the system configuration of the work support system.
[FIG. 38] FIG. 38 is a second diagram showing an example of the LM training data set.
[FIG. 39A] FIG. 39A is a second sequence diagram showing the flow of processing in the LM training phase of the work support system.
[FIG. 39B] FIG. 39B is a third sequence diagram showing the flow of processing in the LM training phase of the work support system.
[FIG. 40] FIG. 40 is a tenth diagram showing an example of the system configuration of the work support system.
[FIG. 41] FIG. 41 is a first sequence diagram showing the flow of processing in a generation phase of the work support system.
[FIG. 42] FIG. 42 is an eleventh diagram showing an example of the system configuration of the work support system.
[FIG. 43] FIG. 43 is a third diagram showing an example of the LM training data set.
[FIG. 44] FIG. 44 is a fourth sequence diagram showing the flow of processing in the LM training phase of the work support system.
[FIG. 45] FIG. 45 is a twelfth diagram showing an example of the system configuration of the work support system.
[FIG. 46] FIG. 46 is a sequence diagram showing the flow of processing in a pharmaceutical application phase of the work support system.
[FIG. 47] FIG. 47 is a thirteenth diagram showing an example of the system configuration of the work support system.
[FIG. 48A] FIG. 48A is a first sequence diagram showing the flow of processing in a pharmaceutical inquiry phase of the work support system.
[FIG. 48B] FIG. 48B is a second sequence diagram showing the flow of processing in the pharmaceutical inquiry phase of the work support system.
[FIG. 49A] FIG. 49A is a fourteenth diagram showing an example of the system configuration of the work support system.
[FIG. 49B] FIG. 49B is a fifteenth diagram showing an example of the system configuration of the work support system.
[FIG. 50A] FIG. 50A is a first sequence diagram showing the flow of processing in the search phase and the generation phase of the work support system.
[FIG. 50B] FIG. 50B is a second sequence diagram showing the flow of processing in the search phase and the generation phase of the work support system.

### DETAILED DESCRIPTION OF THE INVENTION

Each embodiment will be described below with reference to the attached drawings. In the present specification and the drawings, components having substantially the same functional configuration will be denoted by the same reference numerals, and duplicate descriptions will be omitted.

### [First Embodiment]

### <System Configuration of Work Support System>

First, the system configuration of a work support system according to a first embodiment will be described. In the first embodiment, since the work support system performs processing of an accumulation phase and processing of a search phase, the system configuration will be described here by dividing the system configuration into each phase.

### (1) Work Support System in Accumulation Phase

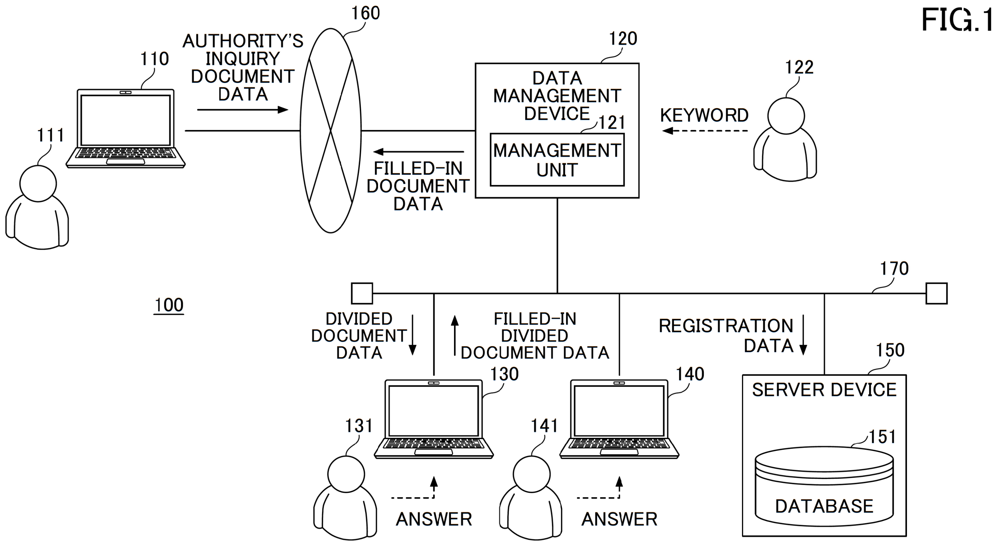

FIG. 1 is a first diagram showing an example of the system configuration of the work support system, and shows the system configuration in the accumulation phase. The accumulation phase is a phase to be performed in parallel with answer work to an inquiry from an authority, and is a phase of constructing a database to enable easy search of past similar cases of authority's inquiries.

As shown in FIG. 1, a work support system 100 in the accumulation phase includes an authority terminal 110, a data management device 120, worker terminals 130 and 140, and a server device 150. In the work support system 100, the authority terminal 110 and the data management device 120 are communicably connected via an external network 160. In the work support system 100, the data management device 120, the worker terminals 130 and 140, and the server device 150 are communicably connected via an internal network 170.

The authority terminal 110 is a terminal operated by a person 111 in charge, who received an application for approval for manufacture and sales of pharmaceuticals, when the person 111 in charge makes an inquiry (authority's inquiry) of an applicant 122 about the contents of the application. By being operated by the person 111 in charge, the authority terminal 110 transmits, for example, authority's inquiry document data (document data transmitted from the authority in an authority's inquiry) to the data management device 120 via the external network 160. In this embodiment, it will be assumed that an authority's inquiry by the person 111 in charge is carried out by transmission of the authority's inquiry document data, which is electronic data. However, the method of the authority's inquiry by the person 111 in charge is not limited to this. For example, the authority's inquiry may be carried out by facsimile transmission. In this case, the applicant 122 digitizes the authority's inquiry document, and the data management device 120 acquires the digitized authority's inquiry document data.

Also, the authority terminal 110 receives filled-in document data (i.e., document data that is the authority's inquiry document data in which the answer content has been input) from the data management device 120 via the external network 160 in response to the transmission of the authority's inquiry document data to the data management device 120.

A data management program is installed in the data management device 120, and when the program is executed in the accumulation phase, the data management device 120 functions as a management unit 121.

The management unit 121 operates based on an operation instruction from the applicant 122. Specifically, the management unit 121 receives authority's inquiry document data transmitted from the authority terminal 110, and generates a plurality of divided document data by dividing the received authority's inquiry document data per inquiry item. The management unit 121 transmits the generated plurality of divided document data to the corresponding worker terminals 130, 140, and the like.

In response to the transmission of the generated plurality of divided document data to the corresponding worker terminals 130, 140, and the like, the management unit 121 collects filled-in divided document data, in each of which the answer content to the inquiry content of a corresponding one of a plurality of inquiry items has been input, from the worker terminals 130, 140, and the like.

The management unit 121 generates filled-in document data by converting the collected filled-in divided document data into one file format, and transmits the generated filled-in document data to the authority terminal 110 via the external network 160. In this embodiment, it will be assumed that that the answer to the authority's inquiry is carried out by transmission of the filled-in document data, which is electronic data. However, the answer method by the applicant 122 is not limited to this. For example, there may be a case where the answer to the authority's inquiry is carried out by facsimile transmission.

Furthermore, the management unit 121 stores registration data including divided document data, filled-in divided document data, filled-in document data, and the like in a database 151 of the server device 150. When storing the registration data, the management unit 121 stores the registration data in association with a keyword assigned by the applicant 122 in order to facilitate search. The keyword is a word or a phrase imaginable from the inquiry content and the answer content included in the filled-in divided document data.

The worker terminals 130 and 140 receive the divided document data transmitted from the data management device 120 and display the inquiry contents. In response to displaying the inquiry contents, the worker terminals 130 and 140 receive answer contents that are input by workers 131 and 141 and generate the filled-in divided document data. Furthermore, the worker terminals 130 and 140 transmit the generated filled-in divided document data to the data management device 120.

The server device 150 receives the registration data transmitted from the data management device 120 and stores it in the database 151. In the accumulation phase, the server device 150 stores registration data in the database 151 every time the data management device 120 transmits filled-in document data to the authority terminal 110.

### (2) Work Support System in Search Phase

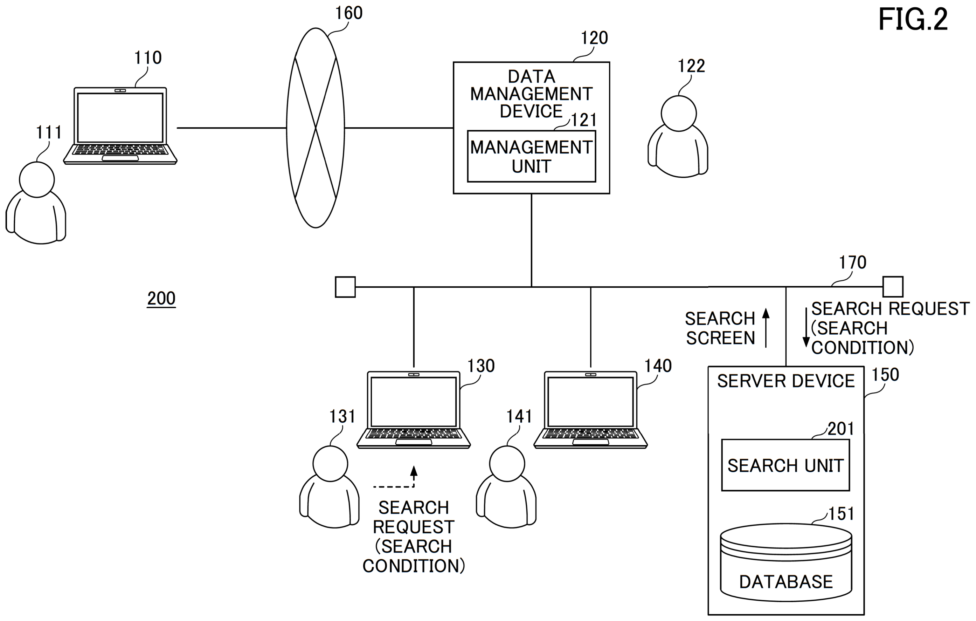

FIG. 2 is a second diagram showing an example of the system configuration of the work support system, and shows the system configuration in the search phase. The search phase is a phase executed in parallel with the work on the answer to the authority's inquiry from the authority, and is a phase in which the worker searches the database for past similar cases of an authority's inquiry in order to prepare an answer to the inquiry content.

The work support system 200 in the search phase is different from the system configuration in the accumulation phase in that the server device 150 functions as the search unit 201.

A search program is installed in the server device 150, and when the program is executed in the search phase, the server device 150 functions as the search unit 201.

The search unit 201 provides a search screen to the worker terminals 130 and 140. When search requests are received from the worker terminals 130 and 140 in response to the provision of the search screen, the search unit 201 searches the database 151 and acquires registration data matching the search conditions contained in the search requests. The acquired registration data is displayed on the search screen as the search result.

In FIG. 2, the work support system 200 in the search phase is different from the system configuration in the accumulation phase in that the worker terminals 130 and 140 function as search terminals.

Specifically, the worker terminals 130 and 140 display the search screen that is provided from the server device 150 by accessing the server device 150 based on operation instructions from the workers 131 and 141. Upon receiving input of the search conditions from the workers 131 and 141, and input of search instructions from the workers 131 and 141, the worker terminals 130 and 140 transmit search requests including the search conditions to the server device 150. In response to the transmission of the search requests, the worker terminals 130 and 140 display the search screen including the search results provided by the server device 150.

### <Hardware of Data Management Device and Server Device>

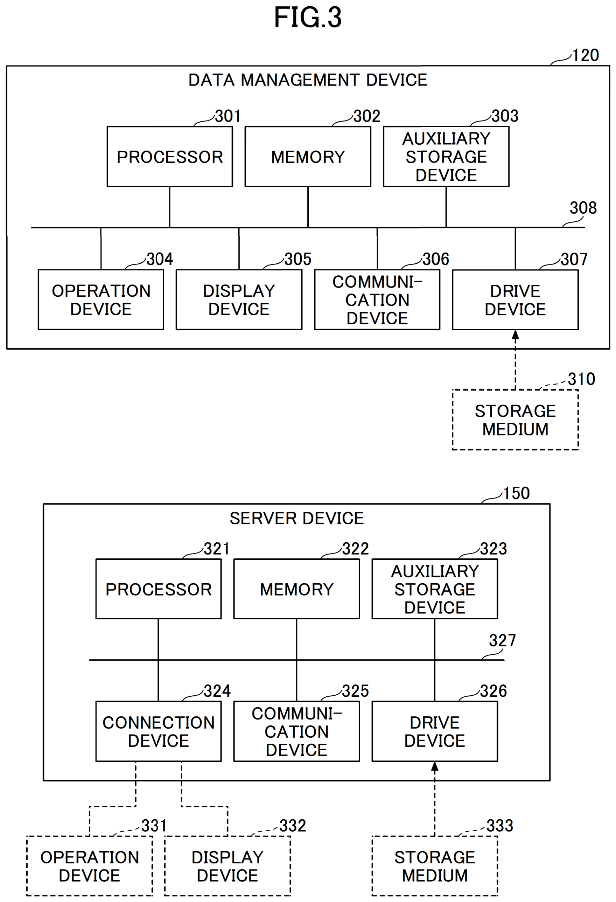

Next, hardware configurations of the data management device 120 and the server device 150 among the devices constituting the work support systems 100 and 200 will be described. FIG. 3 shows an example of the hardware configurations of the data management device and the server device.

As shown in FIG. 3, the data management device 120 includes a processor 301, a memory 302, an auxiliary storage device 303, an operation device 304, a display device 305, a communication device 306, and a drive device 307. The hardware components included in the data management device 120 are connected to each other via a bus 308.

The processor 301 includes various computing devices, such as a Central Processing Unit (CPU), a Graphics Processing Unit (GPU), and the like. The processor 301 reads various programs (for example, the data management program and the like) into the memory 302 and executes them.

The memory 302 includes main memory devices, such as Read Only Memory (ROM), a Random Access Memory (RAM), and the like. The processor 301 and the memory 302 form what is generally referred to as computer, and the computer realizes various functions by the processor 301 executing various programs read into the memory 302.

The auxiliary storage device 303 stores various programs and various information used when the various programs are executed by the processor 301.

The operation device 304 is used when the applicant 122 inputs various operation instructions into the data management device 120. The display device 305 displays the result of the processing of the data management device 120.

The communication device 306 is a communication device configured to communicate with the authority terminal 110 via the external network 160 or to communicate with the worker terminals 130 and 140, and the server device 150 via the internal network 170.

The drive device 307 is a device in which a storage medium 310 is set. The storage medium 310 here includes a medium for recording information optically, electrically, or magnetically, such as a CD-ROM, a flexible disk, a magneto-optical disk, and the like. The storage medium 310 may also include a semiconductor memory for recording information electrically, such as a ROM, a flash memory, or the like.

The various programs installed in the auxiliary storage device 303 are installed, for example, when a distributed storage medium 310 is set in the drive device 307 and the various programs recorded in the storage medium 310 are read out by the drive device 307. Alternatively, the various programs installed in the auxiliary storage device 303 may be installed by being downloaded from the external network 160 via the communication device 306.

As shown in FIG. 3, the server device 150 includes a processor 321, a memory 322, an auxiliary storage device 323, a connection device 324, a communication device 325, and a drive device 326. The hardware components included in the server device 150 are connected to each other via a bus 327.

The hardware components included in the server device 150 are roughly the same as the hardware components included in the data management device 120. A storage medium 333 set in the drive device 326 of the server device 150 is also the same as the storage medium 310 set in the drive device 307 of the data management device 120. Hardware configuration differences from the data management device 120 are that in the case of the server device 150, an operation device 331 and a display device 332 are connected to the server device 150 via the connection device 324, and in the case of the server device 150, the processor 321 reads out the search program into the memory 322 and executes it, and in the case of the server device 150, the database 151 is implemented in the auxiliary storage device 323.

### <Description of Authority's Inquiry Document Data>

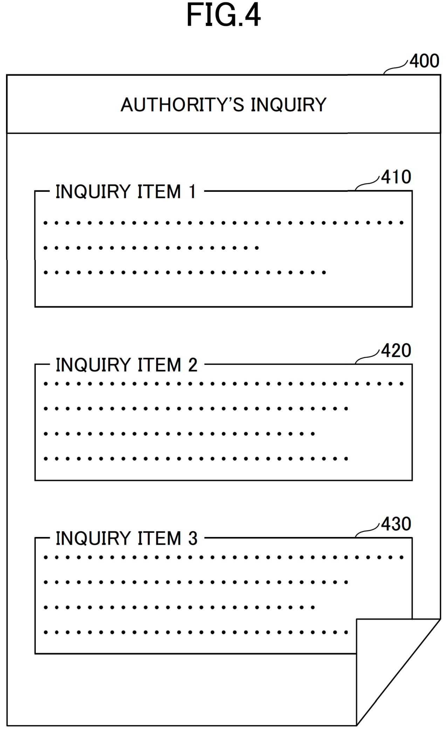

Next, a specific example of the authority's inquiry document data transmitted from the authority terminal 110 will be described. FIG. 4 is a diagram showing an example of the authority's inquiry document data. As shown in FIG. 4, authority's inquiry document data 400 includes a plurality of pairs of inquiry items and inquiry contents into which the authority inquires regarding the contents of the applicant 122's application for approval for manufacture and sales of pharmaceuticals. The example of FIG. 4 shows that three pairs of inquiry items and inquiry contents (three pairs of inquiry items 1 to 3 and inquiry contents denoted by reference numerals 410, 420 and 430) are included. It should be noted that the number of pairs of inquiry items and inquiry contents included in the authority's inquiry document data 400 may be any number, and in this embodiment, it is assumed that a plurality of pairs are included.

### <Functional Configuration of Management Unit of Data Management Device>

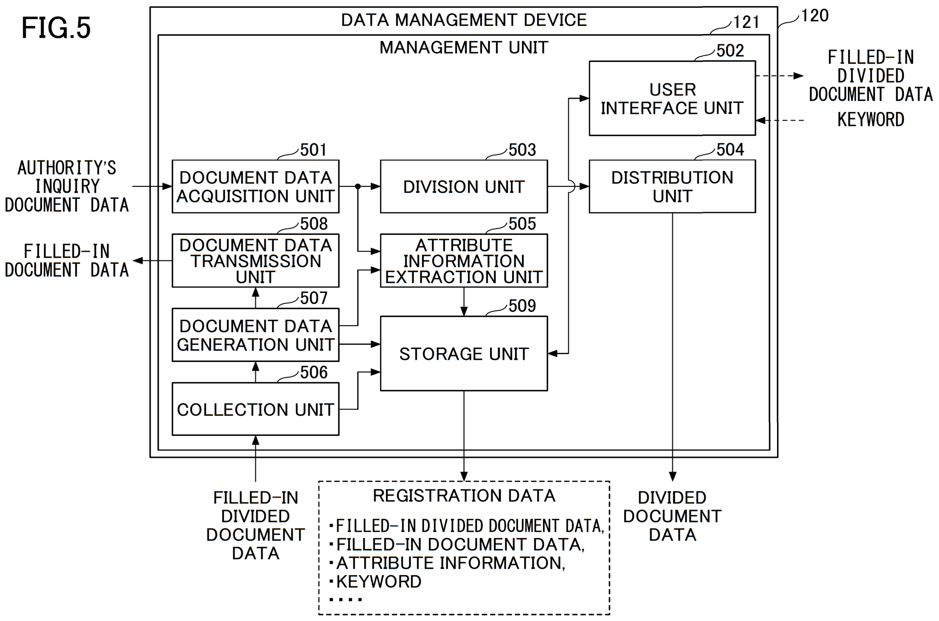

Next, the functional configuration of the management unit 121 of the data management device 120 will be described. FIG. 5 is a first diagram showing an example of the functional configuration of the management unit of the data management device. As described above, in the accumulation phase, the data management device 120 functions as the management unit 121. As shown in FIG. 5, the management unit 121 further includes:
- a document data acquisition unit 501;
- a user interface unit 502 (an example of a third acquisition unit);
- a division unit 503;
- a distribution unit 504;
- an attribute information extraction unit 505;
- a collection unit 506 (an example of a first acquisition unit),
- a document data generation unit 507 (an example of a second acquisition unit),
- a document data transmission unit 508, and
- a storage unit 509.

The document data acquisition unit 501 acquires authority's inquiry document data transmitted from the authority terminal 110 (digitized authority's inquiry document data, when the authority's inquiry is carried out by facsimile transmission), and notifies the acquired document data to the division unit 503.

The division unit 503 divides the authority's inquiry document data notified from the document data acquisition unit 501 in units of inquiry items and generates a plurality of divided document data. The division unit 503 notifies the generated divided document data to the distribution unit 504.

The distribution unit 504 transmits the plurality of divided document data notified by the division unit 503 to the worker terminals 130, 140, and the like. The destination to which the distribution unit 504 transmits the plurality of divided document data may be determined according to a predetermined rule or may be determined based on an operation instruction of the applicant 122.

The collection unit 506 collects a plurality of filled-in divided document data that are transmitted from the worker terminals 130, 140, and the like in response to the plurality of divided document data being transmitted by the distribution unit 504. The collection unit 506 notifies the collected plurality of filled-in divided document data to the document data generation unit 507 and the storage unit 509.

The document data generation unit 507 generates filled-in document data by converting the plurality of filled-in divided document data notified by the collection unit 506 into one file format. Specifically, the document data generation unit 507 generates filled-in document data by combining the plurality of filled-in divided document data in text format into one document data and converting it into a predetermined file format, such as pdf and the like. In addition, the document data generation unit 507 notifies the generated filled-in document data to the document data transmission unit 508 and the storage unit 509.

The document data transmission unit 508 transmits the filled-in document data notified by the document data generation unit 507 to the authority terminal 110 (or transmits it by facsimile transmission to the authority).

The attribute information extraction unit 505 extracts attribute information included in the authority's inquiry document data acquired by the document data acquisition unit 501. The attribute information extraction unit 505 extracts attribute information included in the filled-in document data generated by the document data generation unit 507. Furthermore, the attribute information extraction unit 505 notifies the extracted attribute information to the storage unit 509. The details of the attribute information extracted by the attribute information extraction unit 505 will be described later.

The user interface unit 502 displays the filled-in divided document data that are notified to the storage unit 509 from the collection unit 506 to the applicant 122. The user interface unit 502 acquires a keyword that is input by the applicant 122 in response to the filled-in divided document data being displayed. The user interface unit 502 notifies the acquired keyword to the storage unit 509. The keyword input by the applicant 122 is used as a part of a search condition in the search phase.

The storage unit 509 stores registration data in the database 151 of the server device 150. The registration data includes:
- the filled-in divided document data notified by the collection unit 506,
- the filled-in document data notified by the document data generation unit 507,
- the attribute information notified by the attribute information extraction unit 505,
- the keyword notified by the user interface unit 502, and
- the like.

### <Specific Example of Processing of Each Unit of Data Management Device>

Next, a specific example of processing of each unit included in the management unit 121 of the data management device 120 (here, the division unit 503, the distribution unit 504, the collection unit 506, the document data generation unit 507, and the attribute information extraction unit 505) will be described.

### (1) Specific Example of Processing of the Division Unit included in Management Unit of Data Management Device

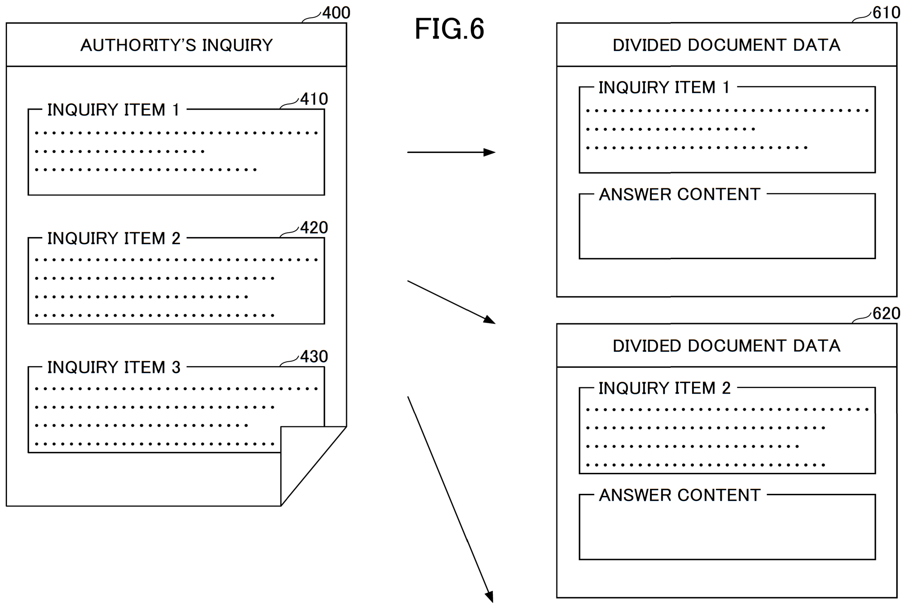

First, a specific example of processing of the division unit 503 included in the management unit 121 of the data management device 120 will be described. FIG. 6 is a diagram showing a specific example of processing of the division unit included in the management unit of the data management device.

As shown in FIG. 6, in the case of the authority's inquiry document data 400 including three pairs of inquiry items and inquiry contents (three pairs of inquiry items 1 to 3 and inquiry contents denoted by the reference numerals 410, 420 and 430), the division unit 503 divides the data into three pieces of divided document data 610, 620 and ···. In the example of FIG. 6, only two pieces of divided document data 610 and 620 are shown for the sake of space.

As shown in FIG. 6, the divided document data 610 includes one inquiry item and its corresponding inquiry content, and one answer content (blank). Similarly, the divided document data 620 includes one inquiry item and its corresponding inquiry content, and one answer content (blank).

### (2) Specific Examples of Processing of Distribution Unit and Collection Unit included in Management Unit of Data Management Device

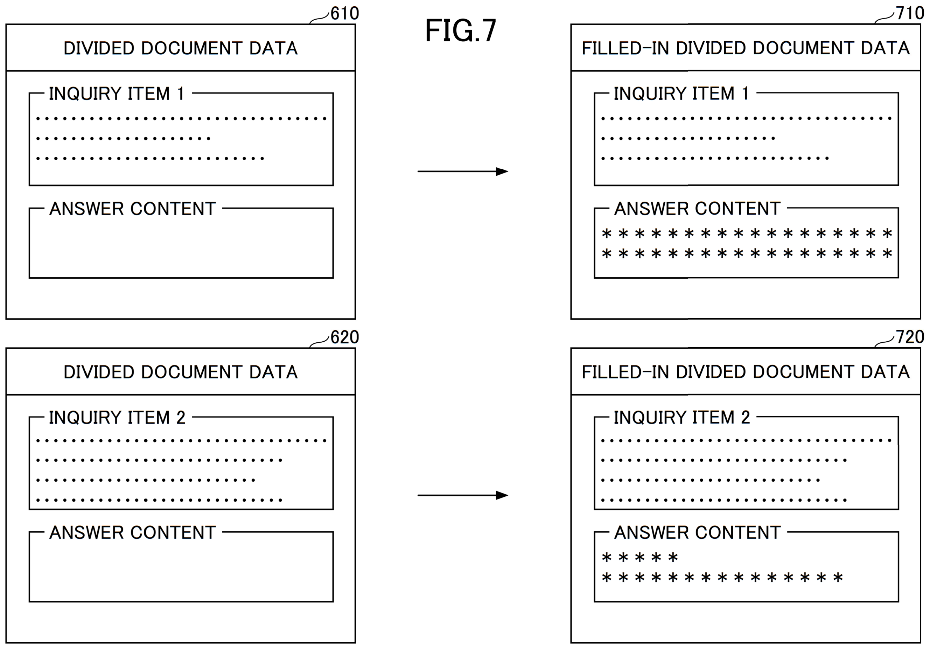

Next, a specific example of processing of the distribution unit 504 and the collection unit 506 included in the management unit 121 of the data management device 120 will be described. FIG. 7 is a diagram showing specific examples of processing of the distribution unit and the collection unit included in the management unit of the data management device.

As shown in FIG. 7, the divided document data 610 and 620 transmitted by the distribution unit 504 to the worker terminals 130, 140, and the like each include one inquiry item and its corresponding inquiry content, and one answer content (blank).

Further, as shown in FIG. 7, filled-in divided document data 710 and 720 collected from the worker terminals 130, 140, and the like by the collection unit 506 each include one inquiry item and its corresponding inquiry content, and one answer content. Note that the one answer content here is an answer content already filled in by the workers 131, 141, and the like.

### (3) Specific Example of Processing of Document Data Generation Unit included in Management Unit of Data Management Device

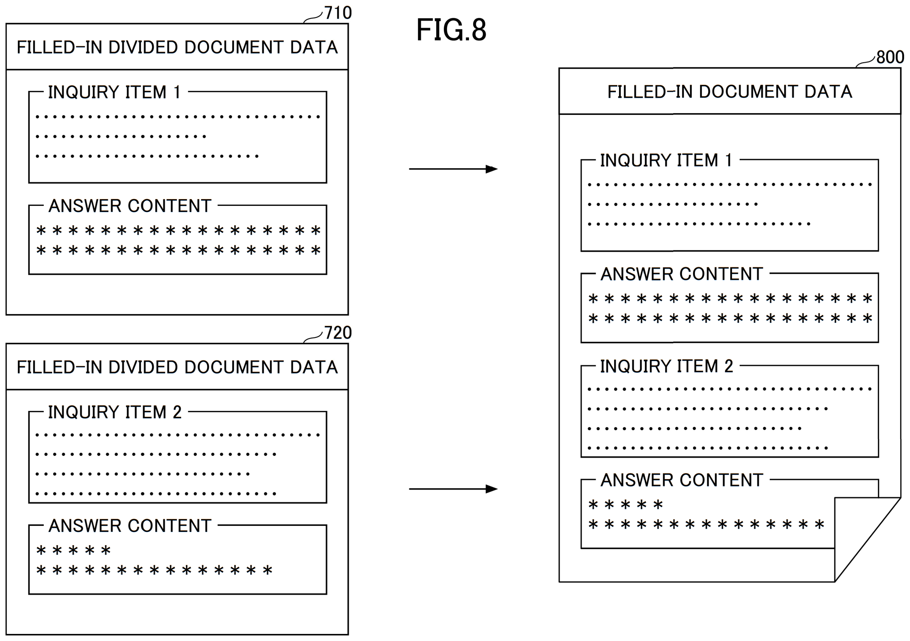

Next, a specific example of processing of the document data generation unit 507 included in the management unit 121 of the data management device 120 will be described. FIG. 8 is a diagram showing a specific example of processing of the document data generation unit included in the management unit of the data management device.

As shown in FIG. 8, the filled-in divided document data 710 and 720 collected by the collection unit 506 are converted into one file format by the document data generation unit 507, to generate filled-in document data 800.

The example of FIG. 8 shows a case where:
- filled-in divided document data 710 (or one inquiry item and its corresponding inquiry content, and one answer content included therein); and
- filled-in divided document data 720 (or one inquiry item and its corresponding inquiry content, and one answer content included therein)
are consecutively arranged in one page. However, the method of arranging filled-in divided document data in the filled-in document data 800 may be desirably selected. Therefore, a plurality of filled-in divided document data may be arranged in one page, or only one filled-in divided document data may be arranged in one page.

### (4) Specific Example of Processing of Attribute Information Extraction Unit included in Management Unit of Data Management Device

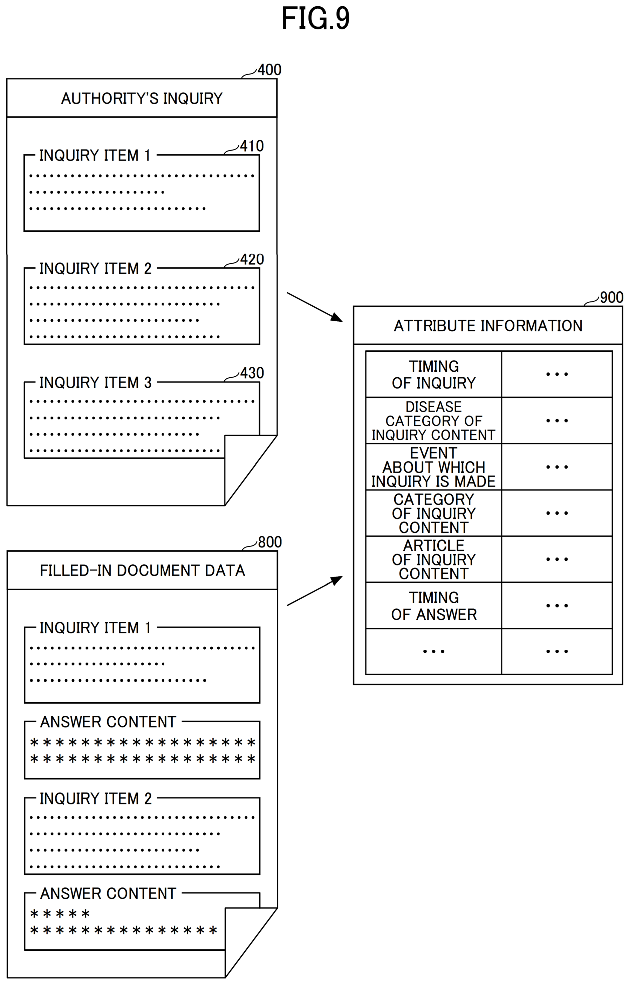

Next, a specific example of processing of the attribute information extraction unit 505 included in the management unit 121 of the data management device 120 will be described. FIG. 9 is a diagram showing a specific example of processing of the attribute information extraction unit included in the management unit of the data management device.

As shown in FIG. 9, the attribute information extraction unit 505 extracts attribute information 900 from the authority's inquiry document data 400 acquired by the document data acquisition unit 501 and from the filled-in document data 800 generated by the document data generation unit 507.

The example shown in FIG. 9 shows a state in which timing of inquiry, disease category of inquiry content, event about which the inquiry is made, category of inquiry content, article of inquiry content, timing of answer, and the like are extracted as attribute information 900. The items extracted as the attribute information 900 are desirably selected, and it is only needed that the attribute information includes at least one type of information selected from timing of inquiry, disease category of inquiry content, event about which the inquiry is made, category of inquiry content, article of inquiry content, and timing of answer. The disease category may include the range of responsibility of an authority's review unit and the purpose of use.

The timing of inquiry refers to the date on which the authority's inquiry document data 400 was received from the authority terminal 110. The disease category of inquiry content refers to the disease category to which the inquiry content belongs. The disease categories are defined in advance, and in this embodiment, the disease categories include, for example, digestive organs, circulatory organs, respiratory organs, central nervous system, vaccines, vitamins, antibodies, and the like. The event about which the inquiry is made refers to which of various events (face-to-face advice, clinical trial notification, approval review, reliability survey, and the like) included in an application for approval for manufacture and sales of pharmaceuticals is inquired. The article of inquiry content refers to, for example, the type of a pharmaceutical. The timing of answer refers to the date on which the filled-in document data 800 was transmitted to the authority terminal 110.

### <Description of Registration Data>

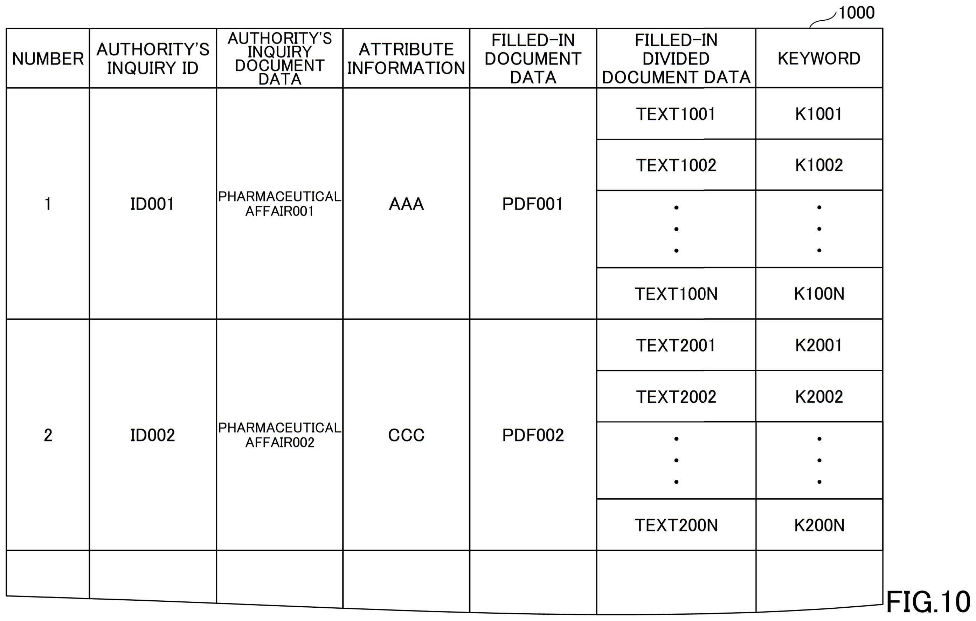

Next, a specific example of registration data stored in the database 151 of the server device 150 by the data management device 120 will be described. FIG. 10 is a diagram showing an example of registration data.

As shown in FIG. 10, registration data 1000 includes "number", "authority's inquiry ID", "authority's inquiry document data", "attribute information", "filled-in document data", "filled-in divided document data", and "keyword" as information items.

In the "number", a number indicating the order of storage when each registration data included in the registration data 1000 is stored in the database 151 is stored.

In "authority's inquiry ID", an identifier for identifying each authority's inquiry document data transmitted from the authority terminal 110 is stored.

In the "authority's inquiry document data", authority's inquiry document data transmitted from the authority terminal 110 is stored. In FIG. 10, "pharmaceutical affair 001" indicates, for example, the authority's inquiry document data 400.

In the "attribute information", attribute information extracted from the corresponding authority's inquiry document data or filled-in document data is stored. In FIG. 10, "AAA" indicates, for example, the attribute information 900.

In the "filled-in document data", filled-in document data generated based on the corresponding authority's inquiry document data is stored. In FIG. 10, "PDF 001" indicates, for example, the filled-in document data 800.

In the "filled-in divided document data", filled-in divided document data used to generate the corresponding filled-in document data is stored. In FIG. 10, "text 1001" indicates, for example, the filled-in divided document data 710. "Text 1002" indicates, for example, the filled-in divided document data 720. The "text 1001" may be the filled-in divided document data 710 itself or text data obtained by extracting the text data part from the filled-in divided document data 710. Similarly, "text 1002" may be the filled-in divided document data 720 itself or text data obtained by extracting the text data part from the filled-in divided document data 720.

In the "keyword", a keyword assigned by the applicant 122 based on the corresponding filled-in divided document data are stored. In FIG. 10, "K1001" indicates, for example, a keyword assigned by the applicant 122 based on the filled-in divided document data 710. "K1002" indicates, for example, a keyword assigned by the applicant 122 based on the filled-in divided document data 720.

### <Functional Configuration of Search Unit of Server Device>

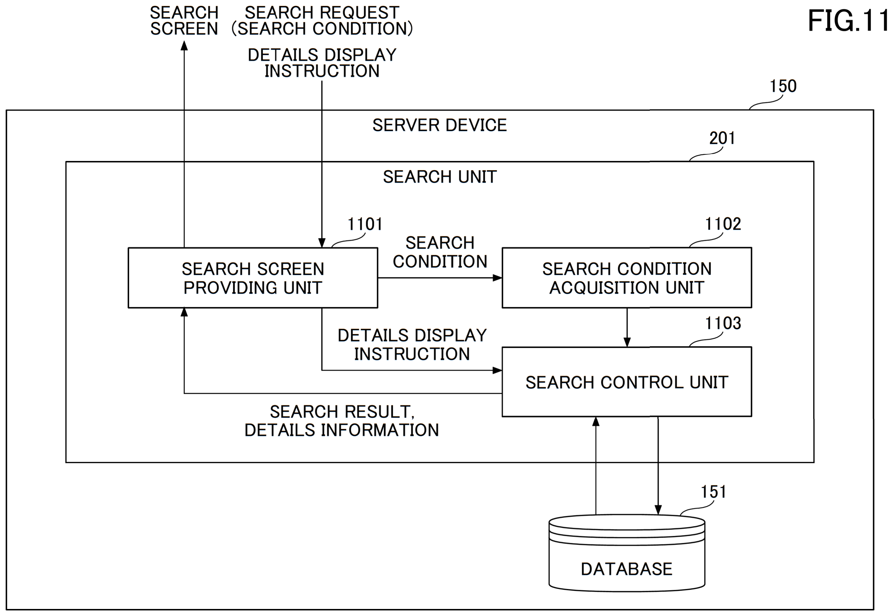

Next, the functional configuration of the search unit of the server device 150 will be described. FIG. 11 is a first diagram showing an example of the functional configuration of the search unit of the server device. As described above, in the search phase, the server device 150 functions as the search unit 201. As shown in FIG. 11, the search unit 201 further includes:
- a search screen providing unit 1101;
- a search condition acquisition unit 1102; and
- a search control unit 1103.

The search screen providing unit 1101 provides the search screen when there is an access from the worker terminals 130, 140, and the like. The search screen providing unit 1101 receives a search request from the worker terminals 130, 140, and the like, in response to providing the search screen. In addition, when a search result is notified by the search control unit 1103, the search screen providing unit 1101 provides the search screen to the worker terminals 130, 140, and the like by including the search result in the search screen. In response to providing the search screen including the search result, the search screen providing unit 1101 receives a details display instruction from the worker terminals 130, 140, and the like. In addition, when details information is notified by the search control unit 1103, the search screen providing unit 1101 provides the search screen to the worker terminals 130, 140, and the like by including the details information in the search screen.

The search condition acquisition unit 1102 acquires the search condition included in the search request received by the search screen providing unit 1101. The search condition acquisition unit 1102 notifies the acquired search condition to the search control unit 1103.

The search control unit 1103 searches the database 151 and acquires filled-in divided document data matching the search condition notified from the search condition acquisition unit 1102. The search control unit 1103 notifies the acquired filled-in divided document data to the search screen providing unit 1101 as a search result.

Further, upon acquiring a details display instruction received by the search screen providing unit 1101, the search control unit 1103 acquires from the database 151, registration data (attribute information, filled-in document data, a keyword, and the like) other than the filled-in divided document data that has been notified as the search result. The search control unit 1103 notifies the registration data (attribute information, filled-in document data, a keyword, and the like) other than the filled-in divided document data that has been notified as the search result to the search screen providing unit 1101 as details information.

### <Description of Search Screen>

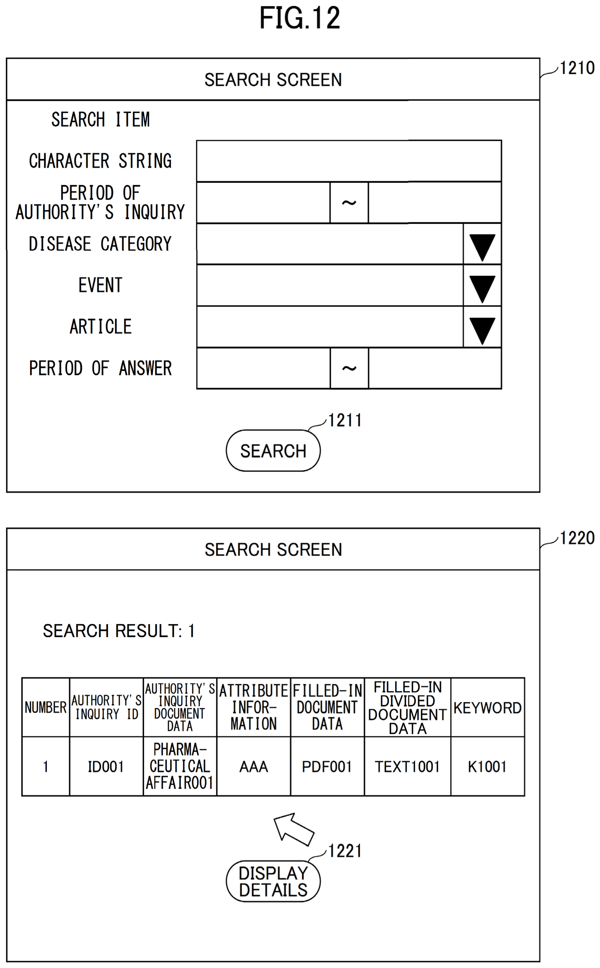

Next, the search screen provided by the server device 150 to the worker terminals 130, 140, and the like will be described. FIG. 12 is a first diagram showing an example of the search screen displayed on the worker terminal.

A search screen 1210 is a screen for inputting a search condition and transmitting a search request. For example, as shown in FIG. 12, the search screen 1210 includes "character string", "period of authority's inquiry", "disease category", "event", "article", and "period of answer" as search items.

"Character string" is an item that is input when searching for filled-in divided document data based on a character string included in the inquiry content in filled-in divided document data or a character string included in the keyword associated with filled-in divided document data.

"Period of authority's inquiry" and "period of answer" are items that are input when searching for filled-in divided document data based on attribute information associated with filled-in divided document data. The first day and the last day of the period are input into "period of authority's inquiry" and "period of answer". Thus, the search control unit 1103 can search out filled-in divided document data, of which the timing of authority's inquiry or the timing of answer falls within the input period.

In "disease category" to "article", options selected by the workers 131 and 141, and the like from predetermined options are input. Thus, the search control unit 1103 can search out filled-in divided document data with which pieces of attribute information matching the input options are associated.

The search screen 1210 includes a search button 1211. When the input into the search items is completed and the search button 1211 is pressed, a search request including the pieces of information input into the search items as the search conditions is transmitted to the server device 150.

A search screen 1220 is a screen displayed on the worker terminals 130, 140, and the like when the server device 150 provides a search screen including a search result, which is filled-in divided document data that the server device 150 has searched out as matching search conditions in response to a search request being transmitted thereto.

As shown in FIG. 12, the number of pieces of filled-in divided document data matching the search conditions is displayed on the search screen 1220. In addition, the filled-in divided document data matching the search conditions and the registration data other than the filled-in divided document data (however, only the file name of the registration data other than the filled-in divided document data) are displayed on the search screen 1220.

The search screen 1220 includes a "display details" button 1221, which is pressed when it is desired that the details of any of the registration data other than the filled-in divided document data matching the search conditions are displayed. The workers 131 and 141, and the like select the registration data (file name) that is other than the filled-in divided document data and details of which are desired to be displayed, and press the "display details" button 1221. As a result, a details display instruction for the selected registration data (file name) other than the filled-in divided document data is transmitted to the server device 150.

### <Processing of Work Support System (Accumulation Phase)>

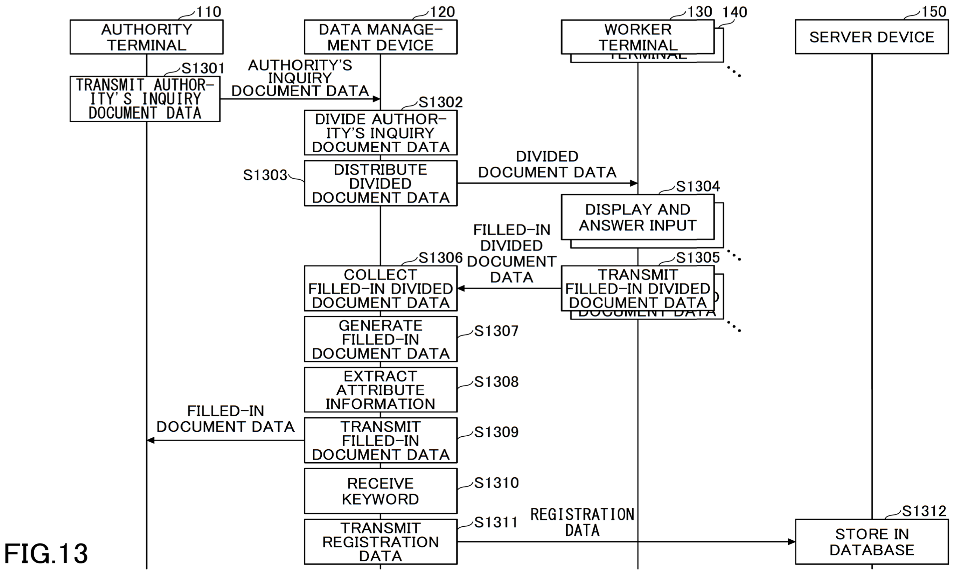

Next, the flow of processing in the accumulation phase of the work support system 100 will be described. FIG. 13 is a first sequence diagram showing the flow of processing in the accumulation phase of the work support system.

In step S1301, the authority terminal 110 transmits authority's inquiry document data including a plurality of inquiry items, and the data management device 120 receives the authority's inquiry document data transmitted from the authority terminal 110.

In step S1302, the data management device 120 divides the received authority's inquiry document data per inquiry item to generate a plurality of divided document data.

In step S1303, the data management device 120 transmits the generated plurality of divided document data to the corresponding worker terminals 130, 140, and the like, and the worker terminals 130, 140, and the like receive the divided document data transmitted from the data management device 120.

In step S1304, the worker terminals 130, 140, and the like each display the received divided document data to receive the answer contents to the inquiry contents, input by the workers 131, 141, and the like. Thus, the worker terminals 130, 140, and the like each generate filled-in divided document data.

In step S1305, the worker terminals 130, 140, and the like transmit the generated filled-in divided document data to the data management device 120.

In step S1306, the data management device 120 collects the filled-in divided document data transmitted from the worker terminals 130, 140, and the like.

In step S1307, the data management device 120 generates filled-in document data by converting the collected filled-in divided document data into one file format.

In step S1308, the data management device 120 extracts attribute information from the authority's inquiry document data and the filled-in document data.

In step S1309, the data management device 120 transmits the generated filled-in document data to the authority terminal 110.

In step S1310, the data management device 120 receives a keyword input by the applicant 122 based on the filled-in divided document data.

In step S1311, the data management device 120 transmits registration data to the server device 150.

In step S1312, the server device 150 stores the registration data transmitted from the server device 150 in the database 151.

### <Processing of Work Support System (Search Phase)>

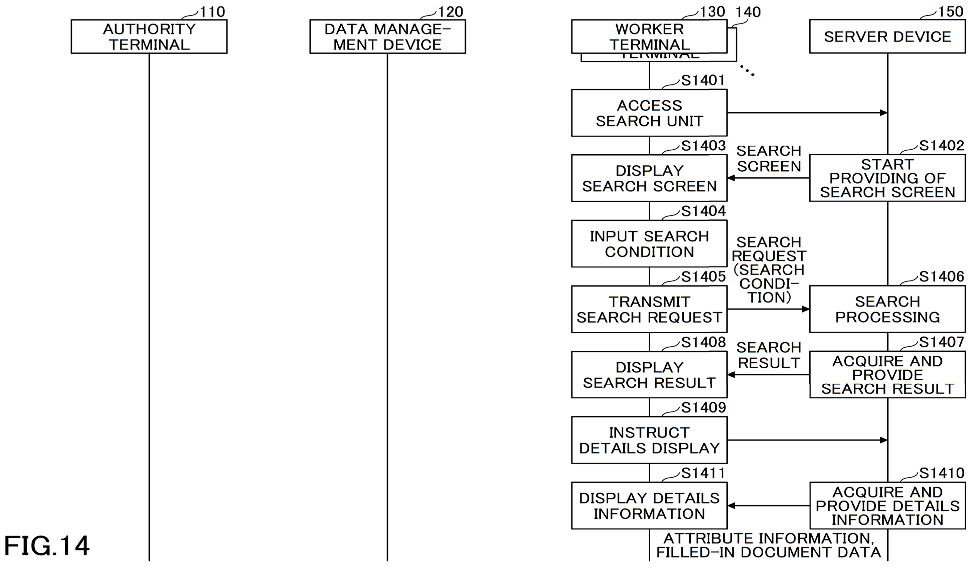

Next, the flow of processing in the search phase of the work support system 200 will be described. FIG. 14 is a first sequence diagram showing the flow of processing in the search phase of the work support system.

In step S1401, the worker terminals 130, 140, and the like access the search unit 201 of the server device 150.

In step S1402, the server device 150 starts providing of the search screen in response to the access by the worker terminals 130, 140, and the like.

In step S1403, the worker terminals 130, 140, and the like display the search screen provided by the server device 150.

In step S1404, the worker terminals 130, 140, and the like receive input of search conditions by the workers 131, 141, and the like.

In step S1405, the worker terminals 130, 140, and the like receive search instructions from the workers 131, 141, and the like. Thus, the worker terminals 130, 140, and the like transmit search requests including the input search conditions to the server device 150.

In step S1406, the server device 150 receives the search requests transmitted from the worker terminals 130, 140, and the like, and performs search processing based on the search conditions included in the received search requests.

In step S1407, the server device 150 acquires a search result and provides the search screen including the acquired search result to the worker terminals 130, 140, and the like.

In step S1408, the worker terminals 130, 140, and the like display the search screen including the search result.

In step S1409, the worker terminals 130, 140, and the like receive a details display instruction from the workers 131, 141, and the like. Thus, the worker terminals 130, 140, and the like transmit the details display instruction to the server device 150, and the server device 150 receives the details display instruction transmitted from the worker terminals 130, 140, and the like.

In step S1410, the server device 150 acquires details information based on the received details display instruction, and provides the search screen including the acquired details information to the worker terminals 130, 140, and the like.

In step S1411, the worker terminals 130, 140, and the like display the search screen including the details information.

### <Summary>

As is clear from the above description, in the accumulation phase, the work support system 100 according to the first embodiment
- generates a plurality of divided document data, by dividing a plurality of inquiry items included in authority's inquiry document data per inquiry item,
- acquires a plurality of filled-in divided document data in each of which an answer content to the inquiry content of a corresponding one of the plurality of inquiry items is input,
- acquire filled-in document data, which is document data in one file format generated from the acquired plurality of filled-in divided document, and
- stores each of the acquired plurality of filled-in divided document data in the database in association with the filled-in document data.

Thus, in the work support system 100 according to the first embodiment, a database for realizing easy search of past similar cases of authority's inquiries is constructed in the accumulation phase. Thus, according to the work support system 100 according to the first embodiment, the work efficiency when the worker performs searching is improved, and the work by the worker on answer can be supported. In other words, according to the first embodiment, it is possible to provide a framework for supporting the work on answer to the authority's inquiry.

### [Second Embodiment]

In the first embodiment, the filled-in divided document data is displayed to the applicant 122, and the applicant 122 assigns a keyword based on the displayed filled-in divided document data. However, the keyword assignment method is not limited to this, and a keyword may be assigned by using, for example, a trained keyword model generated by training a model with past cases. Hereinafter, a second embodiment will be described, mainly on the differences from the first embodiment.

### <System Configuration of Work Support System>

First, the system configuration of the work support system according to the second embodiment will be described. In the second embodiment, the work support system performs processing in a training phase and processing in an accumulation phase. Therefore, the system configuration will be described separately for each phase.

### (1) Work Support System in Training Phase

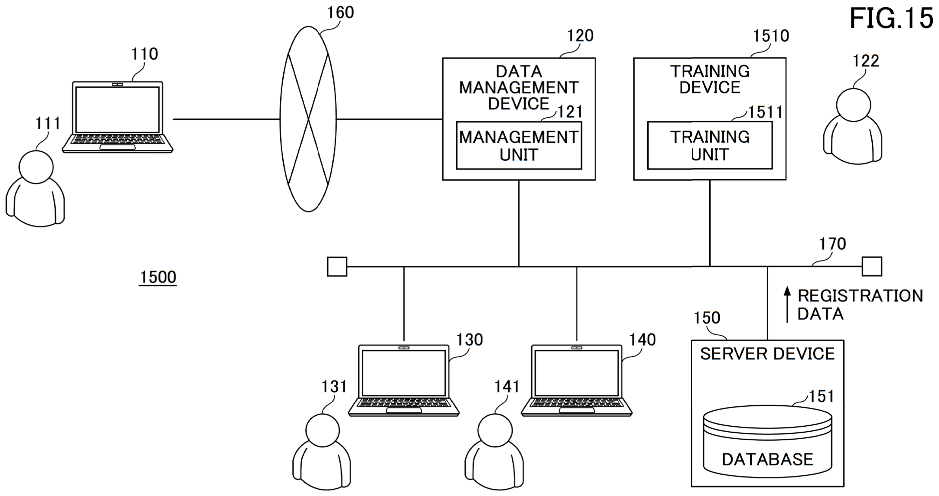

FIG. 15 is a third diagram showing an example of the system configuration of the work support system, and shows the system configuration in the training phase. The training phase is a phase performed separately from the work on answer to an authority's inquiry from the authority, and is a phase for generating a trained keyword model for automatically assigning keywords. The difference from the work support system 100 in the accumulation phase shown in FIG. 1 is that a work support system 1500 in the training phase includes a training device 1510.

A training program is installed in the training device 1510. When this program is executed in the training phase, the training device 1510 functions as a training unit 1511.

The training unit 1511 reads out registration data stored in the database 151 of the server device 150 and generates a training data set. The training data set generated by the training unit 1511 is a training data set in which filled-in divided document data is input data and its corresponding keyword is ground truth data.

The training unit 1511 performs training processing on a keyword model (a model for predicting a keyword) using the generated training data set, and generates a trained keyword model.

### (2) Work Support System in Accumulation Phase

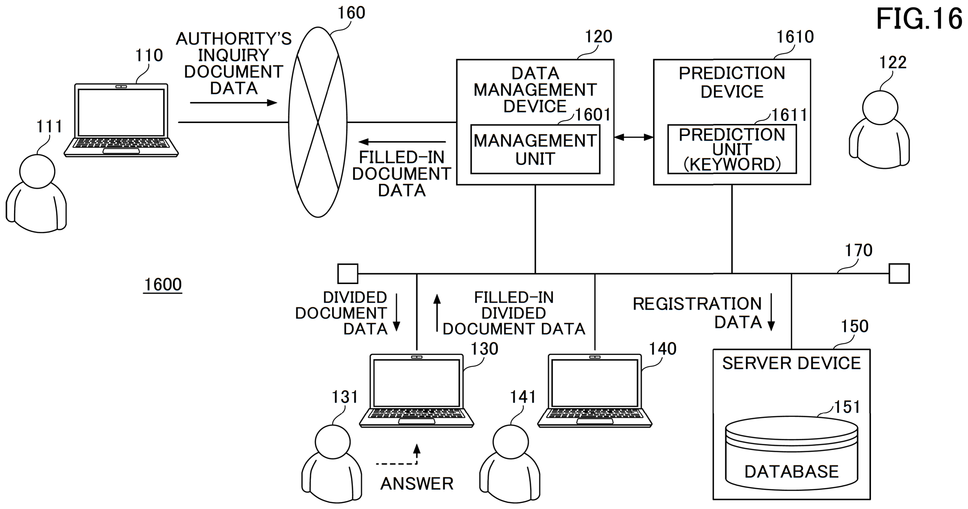

FIG. 16 is a fourth diagram showing an example of the system configuration of the work support system, and shows the system configuration in the accumulation phase.

The differences from the system configuration in the training phase are that in a work support system 1600 in the accumulation phase, a management unit 1601 of the data management device 120 functions differently, and that a prediction device 1610 is newly provided.

The management unit 1601 of the data management device 120 acquires a keyword suited to filled-in divided document data from the prediction device 1610.

A prediction program is installed in the prediction device 1610. When the program is executed in the accumulation phase, the prediction device 1610 functions as a prediction unit 1611.

The prediction unit 1611 includes the trained keyword model generated by the training unit 1511. Each time authority's inquiry document data is transmitted from the authority terminal 110 and filled-in divided document data are collected by the data management device 120, the prediction unit 1611 predicts a keyword and notifies the keyword to the data management device 120.

Specifically, each time collected filled-in divided document data are notified from the management unit 1601 of the data management device 120, the prediction unit 1611 predicts a keyword suited to the filled-in divided document data and notifies the keyword to the management unit 1601 of the data management device 120.

The keyword notified from the prediction unit 1611 is transmitted to the server device 150 in association with the filled-in divided document data. Thus, the server device 150 can store registration data that is assigned the keyword by the prediction unit 1611 in the database 151.

### <Functional Configuration of Training Unit of Training Device>

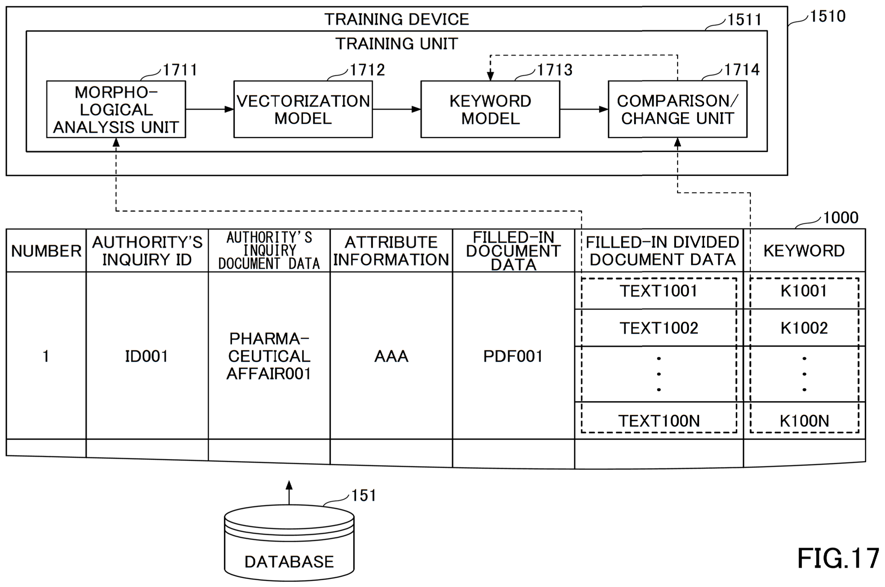

Next, the functional configuration of the training device 1510 will be described. FIG. 17 is a diagram showing an example of the functional configuration of the training unit of the training device. As shown in FIG. 17, the training unit 1511 reads out registration data 1000 from the database 151 and generates a training data set. The example in FIG. 17 shows generation of a training data set by including:
- as input data, the inquiry contents and the answer contents included in the filled-in divided document data based on the read registration data 1000; and
- as ground truth data, keywords imagined from the respective inquiry contents and answer contents included in the filled-in divided document data.

As shown in FIG. 17, the training unit 1511 includes a morphological analysis unit 1711, a vectorization model 1712, a keyword model 1713, and a comparison/change unit 1714.

The morphological analysis unit 1711 reads out the filled-in divided document data included in the training data set, and performs a morphological analysis on the sentences included in the inquiry contents and the answer contents in the filled-in divided document data. The morphological analysis unit 1711 notifies the analysis result of the morphological analysis to the vectorization model 1712.

The vectorization model 1712 processes the analysis result notified from the morphological analysis unit 1711 by using a vectorization technique, such as Term Frequency-Inverse Document Frequency (TF-IDF), Latent Semantic Indexing (LSI), Latent Dirichlet Allocation (LDA), Doc2Vec, Sent2Vec, Recurrent Neural Network (RNN), Long Short-Term Memory (LSTM), Gated-Recurrent Unit (GRU), Universal Sentence Encoder (USE), Bidirectional Encoder Representations from Transformers (BERT), Sentence-Transformers, and the like, and combinations of these techniques, to generate vector data. The vectorization model 1712 notifies the vector data to the keyword model 1713.

The keyword model 1713 processes the vector data notified from the vectorization model 1712 by using a categorization technique, such as a support vector machine, decision tree, k-means, nearest neighbors, logistic regression, random forest, gradient boosting decision tree, neural network, and deep learning (e.g., Recurrent Neural Network (RNN), Long Short-Term Memory (LSTM), Gated-Recurrent Unit (GRU), Seq2seq, Sentence-Transformers, and the like), and combinations of these techniques, and outputs output data.

The comparison/change unit 1714 compares the output data output from the keyword model 1713 with the keywords included in the training data set, and updates the model parameters of the keyword model 1713 such that the error between them is reduced. Thus, the training unit 1511 can generate a trained keyword model.

### <Functional Configuration of Management Unit of Data Management Device and Functional Configuration of Prediction Device>

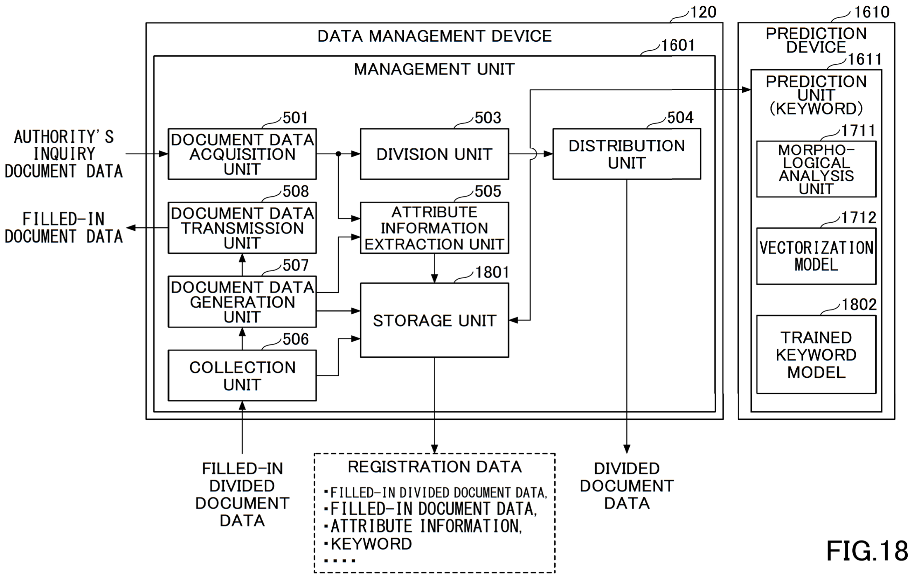

Next, the functional configuration of the management unit 1601 of the data management device 120 and the functional configuration of the prediction unit 1611 of the prediction device 1610 will be described. FIG. 18 is a diagram showing an example of the functional configuration of the management unit of the data management device and the functional configuration of the prediction unit of the prediction device.

Similarly to the management unit 121 shown in FIG. 5, the management unit 1601 of the data management device 120 includes:
- a document data acquisition unit 501;
- a division unit 503;
- a distribution unit 504;
- an attribute information extraction unit 505;
- a collection unit 506;
- a document data generation unit 507;
- a document data transmission unit 508; and
- a storage unit 1801.

Of these, the document data acquisition unit 501 to the document data transmission unit 508 have already been described with reference to FIG. 5, so their description will be omitted here.

When notified of filled-in divided document data from the collection unit 506, the storage unit 1801 notifies the notified filled-in divided document data to the prediction device 1610. The storage unit 1801 acquires a keyword notified from the prediction device 1610 in response to notifying the filled-in divided document data.

Like the storage unit 509, the storage unit 1801 stores registration data in the database 151 of the server device 150. The registration data includes:
- the filled-in divided document data notified by the collection unit 506;
- filled-in document data notified by the document data generation unit 507;
- attribute information notified by the attribute information extraction unit 505;
- the keyword notified by the prediction device 1610; and
the like.

The prediction unit 1611 of the prediction device 1610 includes:
- the morphological analysis unit 1711;
- the vectorization model 1712; and
- the trained keyword model 1802.

Of these, the morphological analysis unit 1711 and the vectorization model 1712 have already been described with reference to FIG. 17, so their description is omitted here.

The trained keyword model 1802 is a model generated by the training unit 1511, and predicts a keyword when notified of vector data from the vectorization model 1712. The keyword predicted by the trained keyword model 1802 is notified to the storage unit 1801.

### <Processing of Work Support System (Training Phase)>

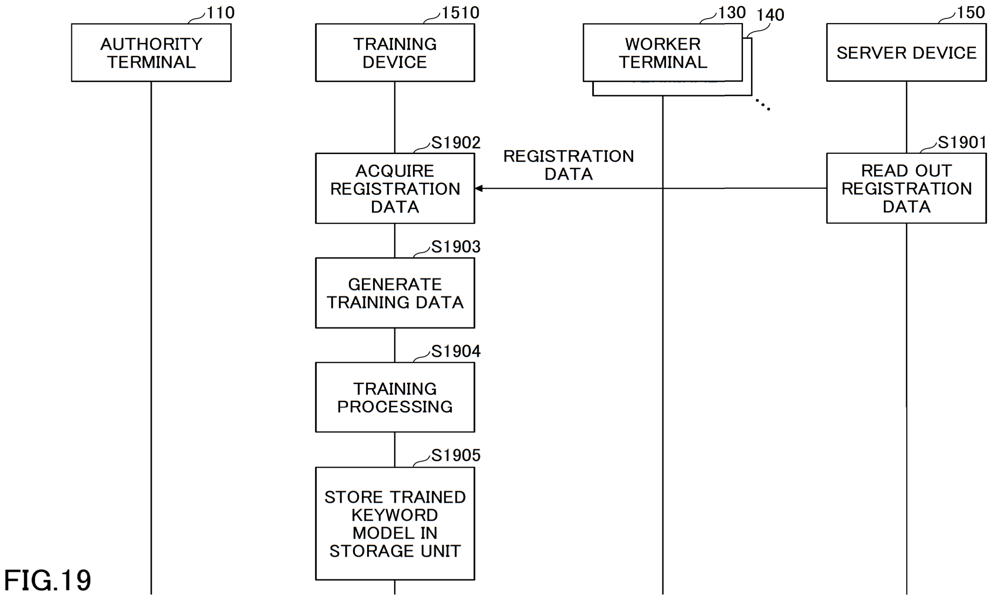

Next, the flow of processing by the work support system 1500 in the training phase will be described. FIG. 19 is a sequence diagram showing the flow of processing in the training phase of the work support system.

In step S1901, the server device 150 reads out registration data stored in the database 151 and transmits it to the training device 1510.

In step S1902, the training device 1510 acquires the transmitted registration data.

In step S1903, the training device 1510 generates a training data set based on the acquired registration data.

In step S1904, the training device 1510 performs training processing on the keyword model 1713 using the generated training data set to generate a trained keyword model.

In step S1905, the training device 1510 stores the generated trained keyword model together with the morphological analysis unit 1711 and the vectorization model 1712 in a memory unit of the prediction device 1610.

### <Processing of Work Support System (Accumulation Phase)>

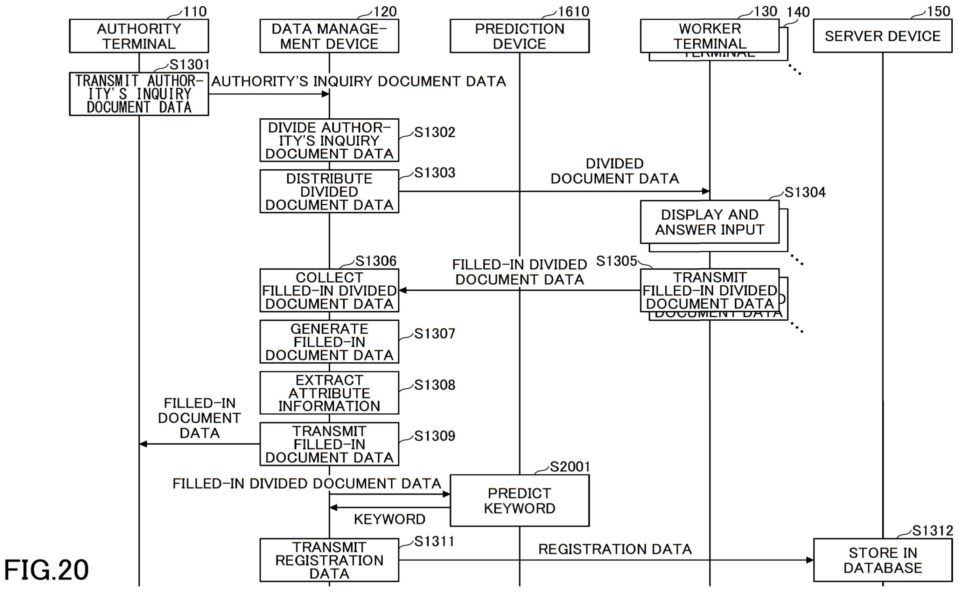

Next, the flow of processing by the work support system 1600 in the accumulation phase will be described. FIG. 20 is a second sequence diagram showing the flow of processing in the accumulation phase of the work support system.

Since steps S1301 to S1309, S1311, and S1312 in FIG. 20 are the same as steps S1301 to S1309, S1311, and S1312 in FIG. 13, description thereof will be omitted here.

In step S2001, the prediction device 1610 predicts keywords based on filled-in divided document data notified from the data management device 120, and notifies the predicted keywords to the data management device 120.

### <Summary>

As is clear from the above description, in the training phase, the work support system 1500 according to the second embodiment
- generates a training data set including the inquiry contents and the answer contents included in the filled-in divided document data read from the database, and keywords imagined from the inquiry contents and the answer contents included in the filled-in divided document data, and
- generates a trained keyword model by performing training processing using the training data set.

In the accumulation phase, the work support system 1600 according to the second embodiment
- predicts keywords imaginable from the inquiry contents and the answer contents included in the filled-in document data by using the trained keyword model.

Thus, in the accumulation phase, the work support system 1600 according to the second embodiment is configured to automatically assign keywords when constructing a database for realizing easy search of past similar cases of authority's inquiries.

Thus, according to the second embodiment, it is possible to reduce the workload when the applicant stores the registration data in the database.

### [Third Embodiment]

In the first and second embodiments described above, for example, a case in which the workers 131, 141, and the like input search conditions into the search items shown in the search screen 1210 of FIG. 12 to search for past similar cases of the inquiry contents contained in the authority's inquiry document data has been described.

However, the search method for searching for past similar cases of the inquiry contents contained in the authority's inquiry document data is not limited to this. For example, searching for past similar cases may be by inputting the inquiry content itself included in the authority's inquiry document data. Hereinafter, a third embodiment will be described mainly on the differences from the first and second embodiments described above.

### <System Configuration of Work Support System >

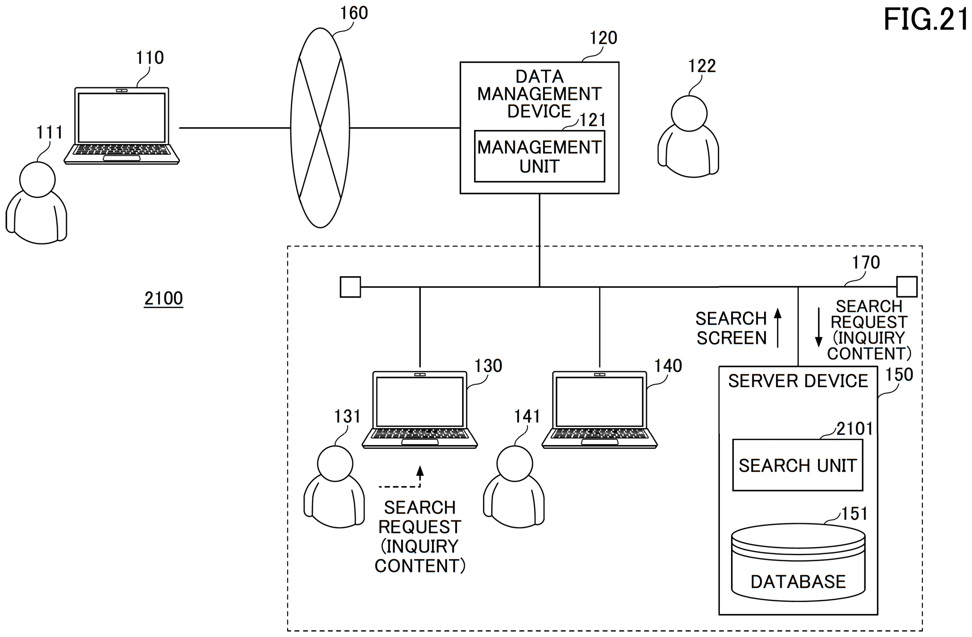

First, as the work support system according to the third embodiment, the system configuration of the work support system in the search phase will be described. FIG. 21 is a fifth diagram showing an example of the system configuration of the work support system.

A work support system 2100 in the search phase shown in FIG. 21 is different from the work support system 200 in the search phase shown in FIG. 2 in that the inquiry content itself included in the authority's inquiry document data to be processed is input, when making a search request.

The work support system 2100 in the search phase shown in FIG. 21 is also different from the work support system 200 in the search phase shown in FIG. 2 in that the function of a search unit 2101 is different from the function of the search unit 201. Specifically, the search unit 2101 vectorizes the inquiry content included in the search request (the inquiry content in the authority's inquiry document data to be processed) and generates vector data. The search unit 2101 vectorizes the inquiry contents included in filled-in divided document data stored in the database 151 and generates vector data. Furthermore, the search unit 2101 searches for filled-in divided document data including the inquiry content similar to the inquiry content included in the search request, by calculating the degree of similarity of the vector data.

### <Functional Configuration of Search Unit of Server Device>

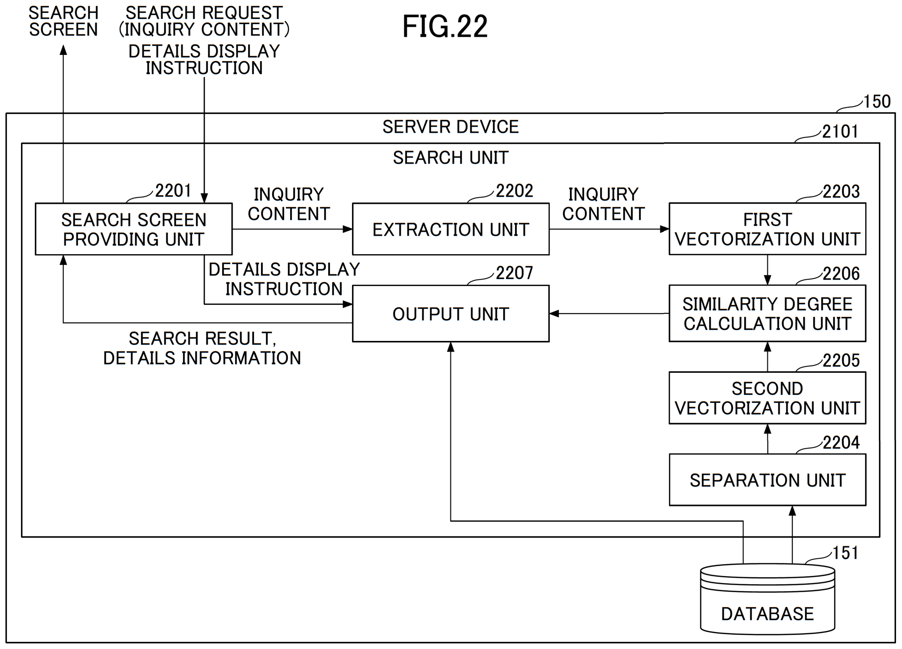

Next, the functional configuration of the search unit 2101 of the server device 150 will be described. FIG. 22 is a second diagram showing an example of the functional configuration of the search unit of the server device. As described above, in the search phase of the third embodiment, the server device 150 functions as the search unit 2101. As shown in FIG. 22, the search unit 2101 further includes:
- a search screen providing unit 2201;
- an extraction unit 2202;
- a first vectorization unit 2203;
- a separation unit 2204;
- a second vectorization unit 2205,
- a similarity degree calculation unit 2206, and
- an output unit 2207.

The search screen providing unit 2201 provides a search screen when there is an access from the worker terminals 130, 140, and the like. The search screen providing unit 2201 receives a search request from the worker terminals 130, 140, and the like in response to providing the search screen. When notified of a search result from the output unit 2207, the search screen providing unit 2201 provides the search screen to worker terminals 130, 140, and the like by including the search result in the search screen. The search screen providing unit 2201 receives a details display instruction from the worker terminals 130, 140, and the like in response to providing the search screen including the search result. When notified of details information from the output unit 2207, the search screen providing unit 2201 provides the search screen to the worker terminals 130, 140, and the like by including the details information in the search screen.

The extraction unit 2202 extracts the inquiry content included in the search request received by the search screen providing unit 2201. The extraction unit 2202 notifies the extracted inquiry content to the first vectorization unit 2203.

The first vectorization unit 2203 vectorizes the inquiry content notified by the extraction unit 2202 and generates vector data. The first vectorization unit 2203 notifies the generated vector data to the similarity degree calculation unit 2206.

The separation unit 2204 reads out filled-in divided document data from the database 151, and separates the read-out filled-in divided document data into inquiry contents and answer contents. The separation unit 2204 also notifies the inquiry contents, of the separated inquiry contents and answer contents, to the second vectorization unit 2205.

The second vectorization unit 2205 vectorizes the inquiry contents notified from the separation unit 2204 and generates vector data. The second vectorization unit 2205 notifies the generated vector data to a similarity degree calculation unit 2206.

The similarity degree calculation unit 2206 calculates the similarity between the vector data notified from the first vectorization unit 2203 and the vector data notified from the second vectorization unit 2205. The similarity degree calculation unit 2206 notifies the calculated similarity degree to the output unit 2207.

The output unit 2207 searches for the similarity degree satisfying a predetermined similarity condition (for example, the highest similarity degree, or the top n similarity degrees (where n is an arbitrary number)) from the similarity degrees notified from the similarity degree calculation unit 2206, and identifies the corresponding filled-in divided document data. The output unit 2207 notifies the identified filled-in divided document data to the search screen providing unit 2201 as a search result.

Upon acquiring a details display instruction received by the search screen providing unit 2201, the output unit 2207 acquires registration data (attribute information, filled-in document data, keywords, and the like) other than the filled-in divided document data notified as a search result from the database 151. The output unit 2207 notifies the registration data (attribute information, filled-in document data, keywords, and the like) other than the filled-in divided document data notified as the search result to the search screen providing unit 2201 as details information. That is, the output unit 2207 notifies the data other than the filled-in divided document data included in the registration data corresponding to the searched-out inquiry contents to the search screen providing unit 2201 as details information.

### <Description of Search Screen>

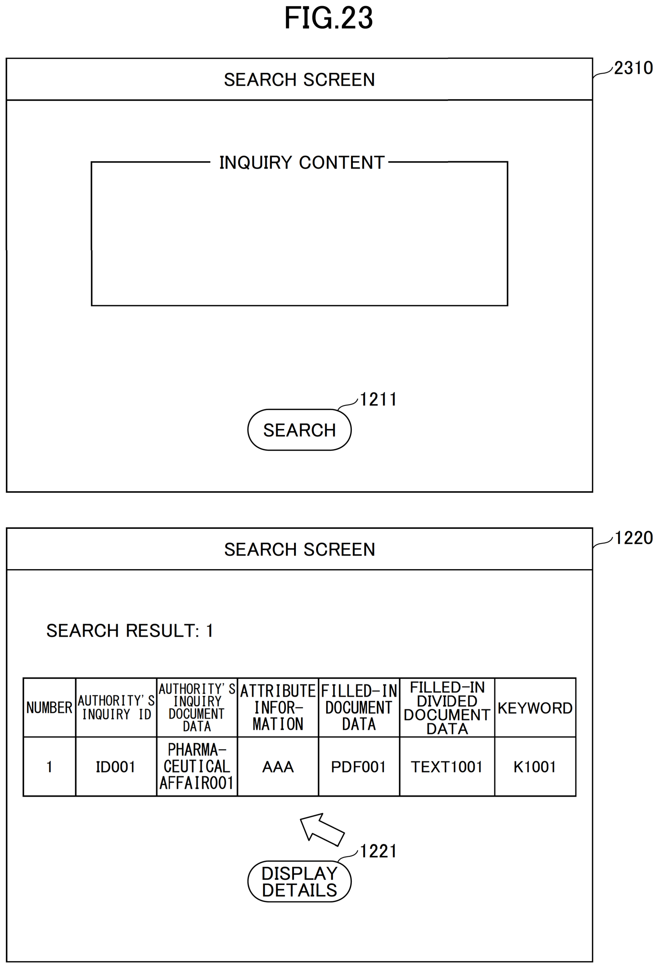

Next, search screens provided to the worker terminals 130, 140, and the like by the server device 150 will be described. FIG. 23 is a second diagram showing an example of the search screens displayed on the worker terminals.

Of these, a search screen 2310 is a screen for inputting an inquiry content and transmitting a search request. As shown in FIG. 23, the search screen 2310 includes a field inputting an inquiry content.

The workers 131, 141 and the like input an inquiry content into the field for inputting an inquiry content by copying and pasting an inquiry content included in the authority's inquiry document data to be processed (actually, an inquiry content contained in divided document data transmitted from the data management device 120).

The search screen 2310 includes a search button 1211. When the input of the inquiry content into the field for inputting an inquiry content is completed and the search button 1211 is pressed, a search request including the inquiry content is transmitted to the server device 150.

A search screen 1220 is a screen that is displayed on the worker terminals 130, 140, and the like in response to the server device 150 providing a search screen including a search result, which is filled-in divided document data including inquiry contents similar to the inquiry content included in the search request, searched out in response to the search request being transmitted.

Since the search screen 1220 shown in FIG. 23 is the same as the search screen 1220 shown in FIG. 12, description thereof is omitted here.

### <Specific Example of Processing of Each Unit included in Search Unit of Server Device>

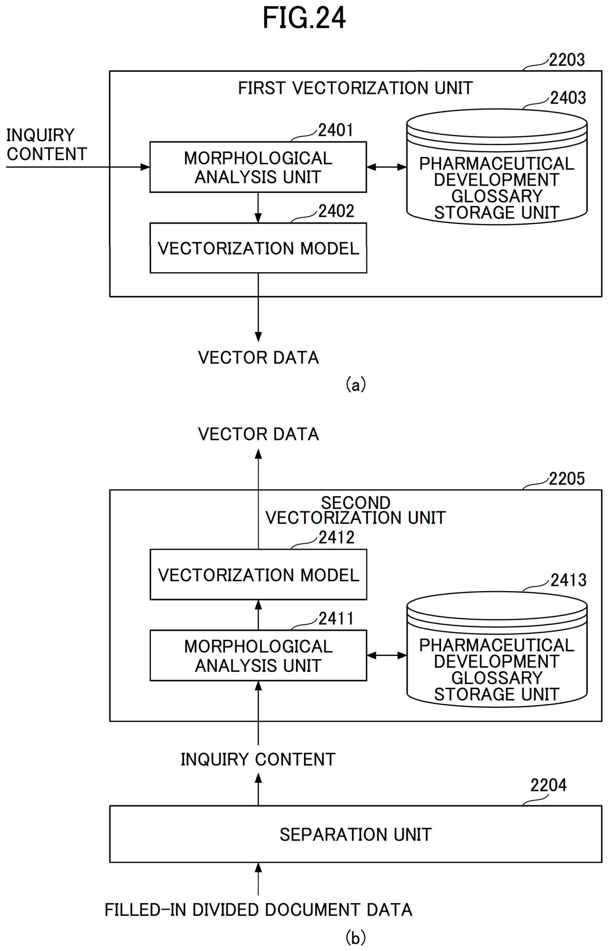

Next, a specific example of the processing of each unit included in the search unit 2101 of the server device 150 (here, the first vectorization unit 2203, the separation unit 2204, and the second vectorization unit 2205) will be described. FIG. 24 is a first diagram showing a specific example of the processing of the first vectorization unit, the separation unit, and the second vectorization unit included in the search unit of the server device.

As shown in FIG. 24 (a), the first vectorization unit 2203 includes a morphological analysis unit 2401 and a vectorization model 2402.

When notified of an inquiry content from the extraction unit 2202, the morphological analysis unit 2401 performs a morphological analysis on each sentence included in the notified inquiry content using a pharmaceutical development glossary stored in a pharmaceutical development glossary storage unit 2403. The pharmaceutical development glossary is a glossary including terms specific to pharmaceutical development. The morphological analysis unit 2401 notifies the analysis result of the morphological analysis to the vectorization model 2402.

The vectorization model 2402 is an example of the vectorization unit, and generates vector data by processing the analysis result of the morphological analysis notified from the morphological analysis unit 2401. Specifically, for example, the vectorization model 2402 vectorizes each word extracted from the inquiry content with a value matching the frequency of appearance of the word by using TF-IDF and the like, to generate vector data. Specifically, for generation of vector data, a vectorization technique, such as TF-IDF, Latent Semantic Indexing (LSI), Latent Dirichlet Allocation (LDA), Doc2Vec, Sent2Vec, Word2Vec, Recurrent Neural Networks (RNN), Long Short-Term Memory (LSTM), Gated-Recurrent Unit (GRU), Universal Sentence Encoder (USE), Bidirectional Encoder Representations from Transformers (BERT), Sentence-Transformers, and the like, and combinations of these techniques may be used.

As shown in FIG. 24 (b), the separation unit 2204 sequentially reads out filled-in divided document data from the database 151, separates the inquiry contents from the read-out filled-in divided document data, and notifies the separated inquiry contents to the second vectorization unit 2205.

The second vectorization unit 2205 includes a morphological analysis unit 2411 and a vectorization model 2412. When notified of the inquiry contents from the separation unit 2204, the morphological analysis unit 2411 performs a morphological analysis on each sentence included in the notified inquiry contents by using a pharmaceutical development glossary stored in the pharmaceutical development glossary storage unit 2413. The morphological analysis unit 2411 notifies the analysis result of the morphological analysis to the vectorization model 2412.

The vectorization model 2412 is an example of the vectorization unit, and generates vector data by processing the analysis result of the morphological analysis notified from the morphological analysis unit 2411. Specifically, for example, the vectorization model 2412 vectorizes each word extracted from the inquiry contents with a value matching the frequency of appearance of the word by using TF-IDF and the like, to generate vector data. Specifically, for generation of vector data, a vectorization technique, such as TF-IDF, Latent Semantic Indexing (LSI), Latent Dirichlet Allocation (LDA), Doc2Vec, Sent2Vec, Word2Vec, Recurrent Neural Networks (RNN), Long Short-Term Memory (LSTM), Gated-Recurrent Unit (GRU), Universal Sentence Encoder (USE), Bidirectional Encoder Representations from Transformers (BERT), Sentence-Transformers, and the like, and combinations of these techniques may be used.

In FIG. 24, for convenience of explanation, the respective vectorization models and the respective morphological analysis units are shown separately as two functional blocks. However, it is preferable that the vectorization model and the morphological analysis unit for processing the inquiry contents included in the search request, and the vectorization model and the morphological analysis unit for processing the inquiry contents separated from the filled-in divided document data are respectively the same vectorization model and the same morphological analysis unit, although they may be different.

Similarly, in FIG. 24, for convenience of explanation, two pharmaceutical development glossary storage units are shown. However, it is preferable that the pharmaceutical development glossary used for processing the inquiry contents included in the search request, and the pharmaceutical development glossary used for processing the inquiry contents separated from the filled-in divided document data are the same, although they may be different.

### <Processing of Work Support System (Search Phase)>

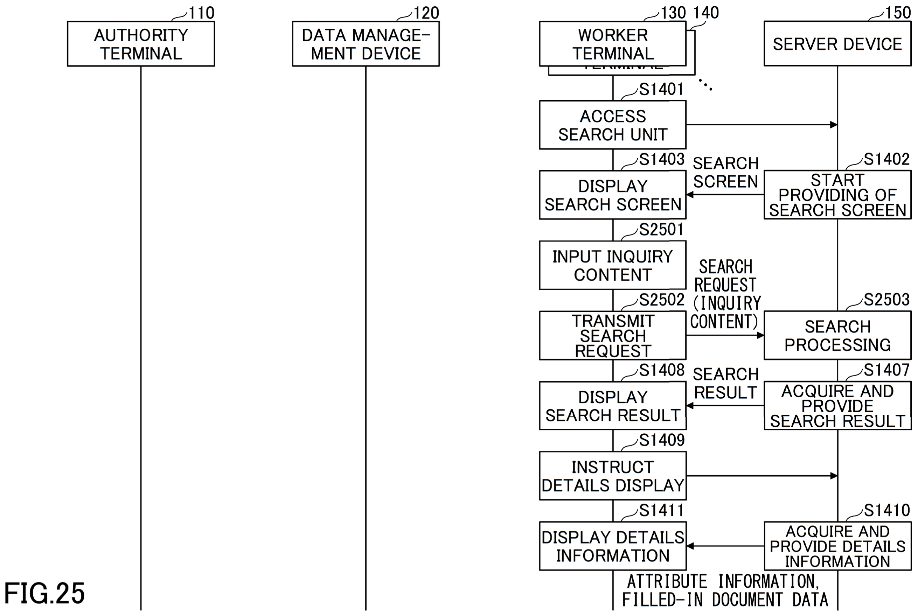

Next, the flow of processing in the search phase of the work support system 2100 will be described. FIG. 25 is a second sequence diagram showing the flow of processing in the search phase of the work support system. The differences from the processing in the search phase of the work support system 200 described with reference to FIG. 14 are steps S2501 to S2503.

In step S2501, the worker terminals 130, 140, and the like receive input of inquiry contents by the workers 131, 141, and the like.

In step S2502, the worker terminals 130, 140, and the like receive search instructions from the workers 131, 141, and the like. Accordingly, the worker terminals 130, 140, and the like transmit search requests including the input inquiry contents to the server device 150.

In step S2503, the server device 150 receives the search requests transmitted from the worker terminals 130, 140, and the like, and searches for filled-in divided document data including the inquiry contents similar to the inquiry contents included in the received search requests.

### <Summary>

As is clear from the above description, in the search phase, the work support system 2100 according to the third embodiment
- performs a morphological analysis of the inquiry contents included in the authority's inquiry document data to be processed, by using a glossary including terms specific to pharmaceutical development,
- vectorizes the inquiry contents included in the authority's inquiry document data to be processed, based on each word extracted from the inquiry contents included in the authority's inquiry document data to be processed, by morphological analysis, and
- calculates the similarity degree with respect to the vector data generated based on the inquiry contents included in the authority's inquiry document data to be processed, and searches for filled-in divided document data including similar inquiry contents.

Thus, in the search phase, the work support system 2100 according to the third embodiment is configured to perform searching by inputting an inquiry content itself instead of inputting a search condition, in order to realize easy search of past similar cases of an authority's inquiry.

Thus, according to the work support system 2100 according to the third embodiment, the work efficiency when the worker performs searching is improved, and the work by the worker on answer can be supported. That is, according to the third embodiment, it is possible to provide a framework for supporting the work on answer to an authority's inquiry.

### [Fourth Embodiment]

In the third embodiment, searching of filled-in divided document data including similar inquiry contents is by inputting the inquiry content included in the authority's inquiry document data. However, the method for searching for filled-in divided document data including similar inquiry contents is not limited to this. For example, searching for filled-in divided document data including inquiry contents similar to an input inquiry content may be performed after filled-in divided document data, which are the searching targets, are narrowed down by inputting a predetermined search condition. This can improve the searching accuracy. Hereinafter, the fourth embodiment will be described mainly on the differences from the third embodiment.

### <Functional Configuration of Search Unit of Server Device>

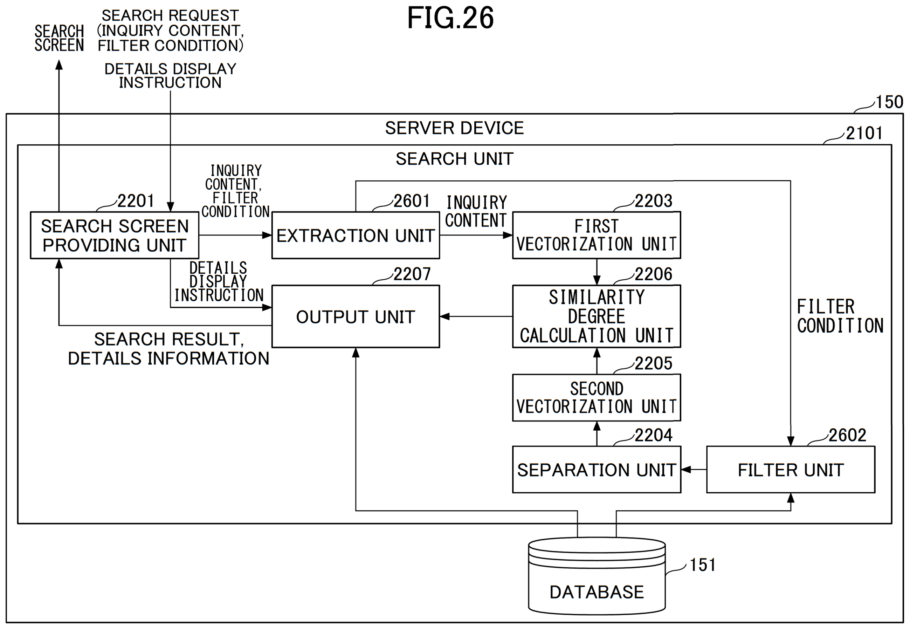

First, the functional configuration of the search unit 2101 of the server device 150 according to the fourth embodiment will be described. FIG. 26 is a third diagram showing an example of the functional configuration of the search unit of the server device. The search unit 2101 shown in FIG. 26 is different from the functional configuration shown in FIG. 22 in that the function of an extraction unit 2601 differs from that of the extraction unit 2202 shown in FIG. 22. Also, the search unit 2101 shown in FIG. 26 is different from the functional configuration shown in FIG. 22 in that it includes a filter unit 2602.

The extraction unit 2601 extracts a search condition (in this embodiment, referred to as a filter condition because it is used to narrow down the search targets) and an inquiry content included in a search request received by the search screen providing unit 2201. The extraction unit 2601 notifies the extracted filter condition to the filter unit 2602 and notifies the extracted inquiry content to the first vectorization unit 2203.

When notified of the filter condition from the extraction unit 2601, the filter unit 2602 searches the database 151 and acquires filled-in divided document data matching the filter condition. The filter unit 2602 notifies the acquired filled-in divided document data to the separation unit 2204.

As a result, the separation unit 2204 notifies the inquiry content included in the filled-in divided document data acquired by the filter unit 2602 to the second vectorization unit 2205, such that the similarity degree calculation unit 2206 can narrow down the targets for calculating the similarity degree.

### <Description of Search Screen>

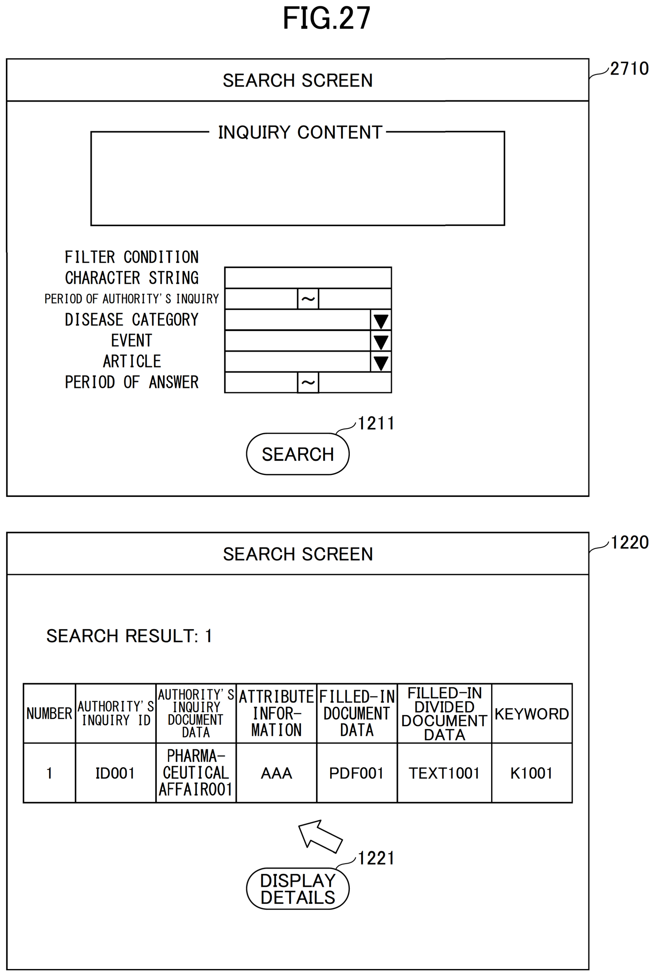

Next, search screens provided to the worker terminals 130, 140, and the like by the server device 150 according to the fourth embodiment will be described. FIG. 27 is a third diagram showing an example of the search screens displayed on the worker terminal.

Of these, a search screen 2710 is a screen for inputting an inquiry content and a filter condition, and transmitting a search request.

As shown in FIG. 27, the search screen 2710 includes a field for inputting the inquiry content and fields for inputting filter conditions. For example, the workers 131, 141 and the like input the inquiry content in the field for inputting an inquiry content by copying and pasting the inquiry content included in the authority's inquiry document data.

As shown in FIG. 27, the search screen 2710 includes "character string", "period of authority's inquiry", "disease category", "event", "article" and "period of answer" as filter conditions. Since the "character string", "period of authority's inquiry", "disease category", "event", "article" and "period of answer" to be input as filter conditions have already been described with reference to FIG. 12, description thereof is omitted here.

A search screen 1220 is a screen that is displayed on the worker terminals 130, 140, and the like in response to the server device 150 providing a search screen including a search result, which is filled-in divided document data including an inquiry content similar to the inquiry content included in the search request, searched out in response to the search request being transmitted.

Since the search screen 1220 shown in FIG. 27 is the same as the search screen 1220 shown in FIG. 12, description thereof is omitted here.

### <Summary>

As is clear from the above description, in the search phase, in the work support system 2100 according to the fourth embodiment,
- the inquiry contents included in filled-in divided document data that satisfy a predetermined filter condition are searched out from among the plurality of filled-in divided document data included in the registration data stored in the database 151, and
- the filter conditions include the period of authority's inquiry, period of answer to the authority's inquiry, disease category, event about which the inquiry is made, and article.

Thus, in the search phase, the work support system 2100 according to the fourth embodiment is configured to perform searching by inputting the inquiry content itself and also inputting filter conditions, in order to realize easy search of past similar cases of the authority's inquiry. Thus, according to the fourth embodiment, it is possible to improve the searching accuracy when the worker performs searching. In particular, when performing searching, it has conventionally been necessary to become proficient in the search techniques, such as selecting appropriate search terms, using Boolean operators, and the like. Here, it will become possible to easily search past similar cases by simply inputting authority's inquiries.

### [Fifth Embodiment]

In the work support system according to the third and fourth embodiments, filled-in divided document data including the inquiry content similar to the inquiry content included in the authority's inquiry document data is displayed on the worker terminals 130, 140, and the like as a search result. However, the configuration of the work support system is not limited to this. For example, when a search result is displayed on the worker terminals 130, 140, and the like, input of evaluation for the search result may be received, and the received evaluation may be fed back. Hereinafter, the fifth embodiment will be described mainly on the differences from the third and fourth embodiments described above.

### <System Configuration of Work Support System>

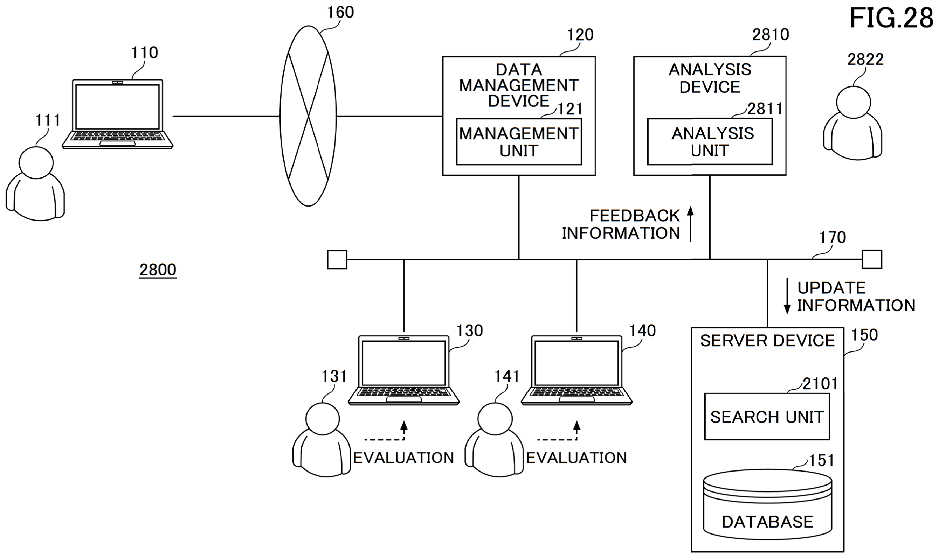

First, the system configuration of the work support system according to the fifth embodiment will be described. In the fifth embodiment, the work support system performs processing in a feedback phase. FIG. 28 is a sixth diagram showing an example of the system configuration of the work support system. The feedback phase is a phase performed separately from the work on answer to an authority's inquiry from the authority, and is a phase in which the search unit 2101 is updated to improve the searching accuracy when a certain amount of feedback information has been accumulated.

The work support system 2800 in the feedback phase is different from the work support system 100 in the accumulation phase shown in FIG. 1 in that it includes an analysis device 2810, and in that the work support system 2800 in the feedback phase is configured such that evaluation of a search result is input by the workers 131, 141, and the like.

An analysis program is installed in the analysis device 2810. When the program is executed in the feedback phase, the analysis device 2810 functions as an analysis unit 2811. The analysis unit 2811 may perform various processes under the operation instructions of an analyst 2822.

Specifically, the analysis unit 2811 acquires feedback information from the worker terminals 130, 140, and the like. Based on the acquired feedback information, the analysis unit 2811 updates the pharmaceutical development glossaries stored in the pharmaceutical development glossary storage units 2403 and 2413 of the search unit 2101.

The analysis unit 2811 also updates hyperparameters of the vectorization models 2402 and 2412 of the search unit 2101 based on the acquired feedback information.

The analysis unit 2811 updates the vectorization models 2402 and 2412 themselves of the search unit 2101 to new trained vectorization models based on the acquired feedback information.

The analysis unit 2811 realizes the updating by transmitting update information to the server 150.

Upon receiving input of evaluation for the search result, the worker terminals 130, 140, and the like acquire the input evaluation result and corresponding information. The information corresponding to the evaluation result includes the inquiry content included in the search request, the inquiry content in the search result, keywords corresponding to the inquiry content and the answer content in the search result, category, period, and the like. The worker terminals 130, 140, and the like transmit the input evaluation result and the corresponding information (keywords, category, period, and the like) to the analysis device 2810 as feedback information.

When update information is transmitted from the analysis device 2810, the server device 150 updates the search unit 2101 in accordance with the transmitted update information.

### <Overview of Processing of Work Support System (Feedback Phase)>

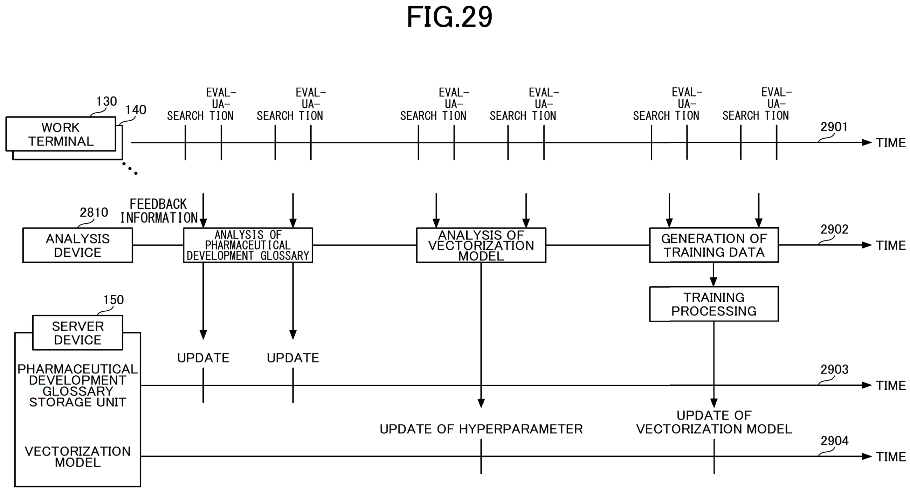

Next, an overview of processing by the work support system 2800 in the feedback phase will be described. FIG. 29 is a diagram for explaining an overview of processing in the feedback phase of the work support system.

In FIG. 29, the time axis 2901 indicates the contents of operations and timings of the operations performed by the workers 131, 141, and the like on the worker terminals 130, 140, and the like in the accumulation phase. As shown in FIG. 29, in the accumulation phase, the workers 131, 141, and the like repeat search operations and operations for inputting results of evaluations on search results. The worker terminals 130, 140, and the like transmit feedback information to the analysis device 2810 every time an operation for inputting an evaluation result is performed.

In FIG. 29, the time axis 2902 indicates the contents of processing and the timing of processing performed by the analysis device 2810 in the feedback phase.

As shown in FIG. 29, in the feedback phase, each time feedback information is transmitted from the worker terminals 130, 140, and the like, the analysis device 2810 analyzes the pharmaceutical development glossaries, and adds new terms and deletes unnecessary terms.

In the feedback phase, when the pharmaceutical development glossaries have been analyzed for a fixed period of time, the analysis device 2810 analyzes the vectorization models 2402 and 2412 using a fixed amount of feedback information accumulated. Specifically, the analysis device 2810 adjusts the hyperparameters of the vectorization models 2402 and 2412.

In the feedback phase, when the vectorization models 2402 and 2412 have been analyzed for the fixed period of time and the hyperparameters are adjusted, the analysis device 2810 generates a training data set using the accumulated fixed amount of feedback information. Furthermore, the analysis device 2810 generates new trained vectorization models for generating vector data from inquiry contents by performing training processing using the generated training data set.

In FIG. 29, the time axis 2903 indicates the timings for updating the pharmaceutical development glossary storage units 2403 and 2413 of the server 150.

As shown in FIG. 29, in the feedback phase, the analysis device 2810 transmits instructions for adding new terms and deleting unnecessary terms as update information. Thus, the search unit 2101 of the server device 150 updates the pharmaceutical development glossaries.

In FIG. 29, the time axis 2904 indicates the contents about which and the timings at which the vectorization models 2402 and 2412 of the server device 150 are updated.

As shown in FIG. 29, in the feedback phase, the analysis device 2810 transmits the adjusted hyperparameters as update information. Thus, the search unit 2101 of the server device 150 updates the hyperparameters of the vectorization models 2402 and 2412 to the adjusted hyperparameters.

Furthermore, in the feedback phase, the analysis device 2810 transmits the trained vectorization models as update information. Thus, the search unit 2101 of the server device 150 updates the vectorization models 2402 and 2412 to the trained vectorization model.

### <Functional Configuration of Analysis Unit of Analysis Device>

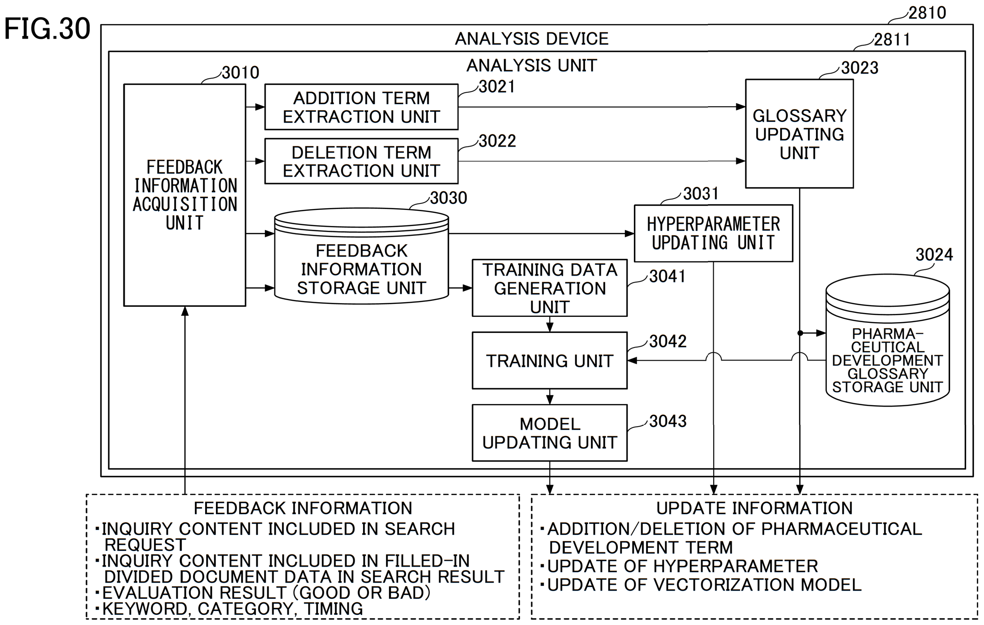

Next, the functional configuration of the analysis unit 2811 of the analysis device 2810 will be described. FIG. 30 is a diagram showing an example of the functional configuration of the analysis unit of the analysis device. As described above, the analysis device 2810 functions as the analysis unit 2811 in the feedback phase. As shown in FIG. 30, the analysis unit 2811 further includes:
- a feedback information acquisition unit 3010;
- an addition term extraction unit 3021;
- a deletion term extraction unit 3022;
- a glossary updating unit 3023 (an example of a first updating unit);
- a hyperparameter updating unit 3031 (an example of a second updating unit);
- a training data generation unit 3041;
- a training unit 3042; and
- a model updating unit 3043 (an example of a third updating unit).

The feedback information acquisition unit 3010 acquires feedback information notified from the worker terminals 130, 140, and the like. The feedback information notified from the worker terminals 130, 140, and the like includes:
- the inquiry content included in a search request;
- the inquiry content included in filled-in divided document data in a search result;
- an evaluation result;
- a keyword associated with the filled-in divided document data in the search result;
- a category associated with the filled-in divided document data in the search result; and
- the timing of inquiry and the timing of answer associated with the filled-in divided document data in the search result.

The addition term extraction unit 3021 extracts a term to be added to the pharmaceutical development glossaries based on feedback information acquired by the feedback information acquisition unit 3010. The addition term extraction unit 3021 notifies the extracted term to the glossary updating unit 3023.

The deletion term extraction unit 3022 extracts a term to be deleted from the pharmaceutical development glossaries based on feedback information acquired by the feedback information acquisition unit 3010. The deletion term extraction unit 3022 notifies the extracted term to the glossary updating unit 3023.

The glossary updating unit 3023 instructs the server device 150 to add the term notified by the addition term extraction unit 3021 to the pharmaceutical development glossaries. The glossary updating unit 3023 adds the term notified by the addition term extraction unit 3021 to a pharmaceutical development glossary storage unit 3024. In the analysis unit 2811, the latest pharmaceutical development glossaries stored in the pharmaceutical development glossary storage units 2403 and 2413 of the search unit 2101 of the server device 150 are also stored in the pharmaceutical development glossary storage unit 3024.

The hyperparameter updating unit 3031 adjusts the hyperparameters of the vectorization model 2402 and the vectorization model 2412 based on the feedback information accumulated in a feedback information storage unit 3030.

The hyperparameter updating unit 3031 instructs the server device 150 to update the vectorization model 2402 of the first vectorization unit 2203 and the vectorization model 2412 of the second vectorization unit 2205 based on the adjusted hyperparameters.

The training data generation unit 3041 generates a training data set based on feedback information acquired by the feedback information acquisition unit 3010 and accumulated in the feedback information storage unit 3030. Specifically, the training data generation unit 3041 generates a training data set in which the inquiry content included in a search request and the inquiry content included in filled-in divided document data in a search result are input data and an evaluation result is ground truth data.

The training unit 3042 performs training processing on the vectorization models using the training data set generated by the training data generation unit 3041. When inputting the input data of the training data set into the vectorization model, the training unit 3042 performs a morphological analysis. Here, the training unit 3042 performs the morphological analysis using the latest pharmaceutical development glossary stored in the pharmaceutical development glossary storage unit 3024.

The model updating unit 3043 instructs the server device 150 to update the vectorization model 2402 and the vectorization model 2412 based on the trained vectorization models generated by the training processing performed by the training unit 3042.

In this way, the update information transmitted from the analysis unit 2811 to the server device 150 includes:
- an instruction to add a term to the pharmaceutical development glossaries, and an instruction to delete a term from the pharmaceutical development glossaries;
- an instruction to update the hyperparameters of the vectorization model 2402 of the first vectorization unit 2203 and the vectorization model 2412 of the second vectorization unit 2205; and
- an instruction to update the vectorization model 2402 of the first vectorization unit 2203 and the vectorization model 2412 of the second vectorization unit 2205 to new trained vectorization models.

### <Specific Example of Processing of Training unit included in Analysis Unit of Analysis Device>

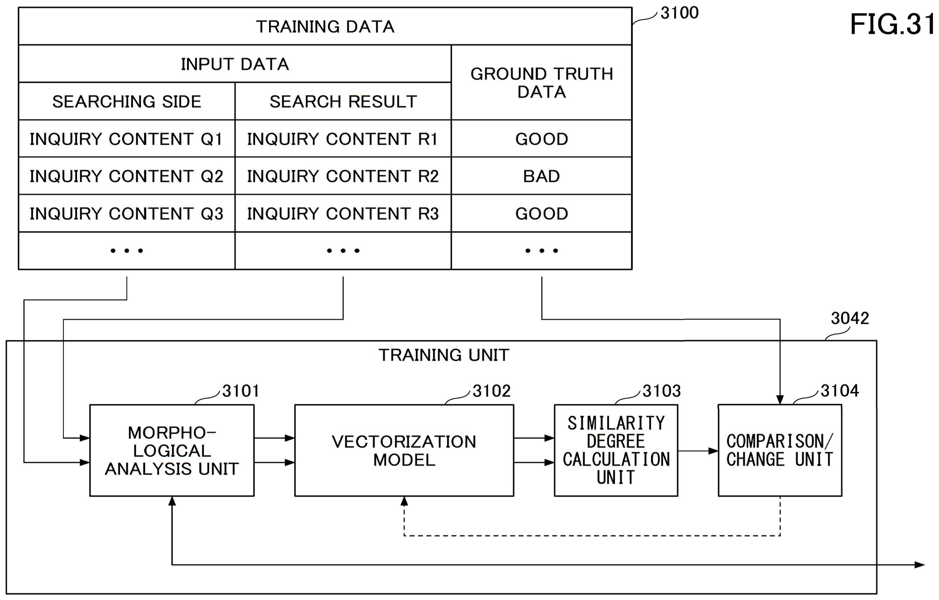

Next, a specific example of processing of the training unit 3042 included in the analysis unit 2811 of the analysis device 2810 will be described. FIG. 31 is a diagram showing a specific example of processing of the training unit included in the analysis unit of the analysis device.

As shown in FIG. 31, the training data set 3100 includes "input data" and "ground truth data" as items of information.

The "input data" further includes "searching side" and "search result". The inquiry content included in the search request among the feedback information is stored in "searching side". The inquiry content included in the filled-in divided document data in the search result among the feedback information is stored in the "search result".

The evaluation result among the feedback information is stored in the "ground truth data". The example of FIG. 31 shows a case where the evaluation result is stored as "good" or" bad". However, the evaluation result may be stored as a numerical value of, for example, 0 to 100.

As shown in FIG. 31, the training unit 3042 further includes a morphological analysis unit 3101, a vectorization model 3102, a similarity degree calculation unit 3103, and a comparison/change unit 3104.

The input data of the training data set 3100 is input into the morphological analysis unit 3101, and the morphological analysis unit 3101 performs a morphological analysis on the inputted input data (i.e., the inquiry content included in the search request, and the inquiry content included in the filled-in divided document data in the search result). When performing the morphological analysis, the morphological analysis unit 3101 uses the latest pharmaceutical development glossary stored in the pharmaceutical development glossary storage unit 3024.

The analysis result of the morphological analysis on the input data is input into the vectorization model 3102, which outputs vector data. Specifically, upon receiving the analysis result of the morphological analysis on the inquiry content included in the search request as an input, the vectorization model 3102 outputs vector data of the inquiry content included in the search request. Upon receiving the analysis result of the morphological analysis on the inquiry content included in the filled-in divided document data in the search result as an input, the vectorization model 3102 outputs vector data of the inquiry content included in the filled-in divided document data in the search result.

The type of the vectorization model 3102 may be desirably selected. For example, transformers, such as Sentence-Transformers, may be used as the vectorization model 3102. Alternatively, TF-IDF, Latent Semantic Indexing (LSI), Latent Dirichlet Allocation (LDA), Doc2Vec, Sent2Vec, Word2Vec, Recurrent Neural Networks (RNN), Long Short-Term Memory (LSTM), Gated-Recurrent Unit (GRU), Universal Sentence Encoder (USE), Bidirectional Encoder Representations from Transformers (BERT), Sentence-Transformers, and the like, and combinations of these may be used as the vectorization model 3102.

The similarity degree calculation unit 3103 calculates the similarity degree between the vector data of the inquiry content included in the search request and the vector data of the inquiry content included in the filled-in divided document data in the search result, output from the vectorization model 3102. The similarity degree calculation unit 3103 notifies the calculated similarity degree to the comparison/change unit 3104.

The comparison/change unit 3104 reads out the evaluation result corresponding to the input data from among the evaluation results stored in the "ground truth data" of the training data set 3100, and compares it with the similarity degree notified by the similarity degree calculation unit 3103.

When the ground truth data is "good", the comparison/change unit 3104 updates the model parameter of the vectorization model 3102 such that the similarity degree to be notified from the similarity degree calculation unit 3103 will increase.

When the ground truth data is "bad", the comparison/change unit 3104 updates the model parameter of the vectorization model 3102 such that the similarity degree to be notified from the similarity degree calculation unit 3103 will decrease.

### <Specific Example of Processing of Each Unit included in Search Unit of Server Device>

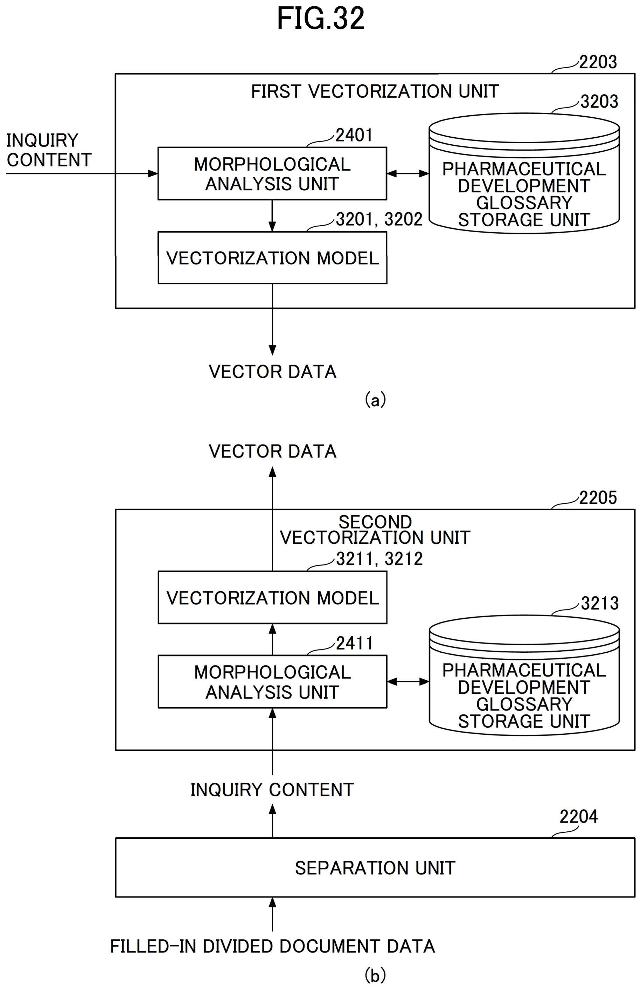

Next, a specific example of the processing of each unit included in the updated search unit 2101 of the server device 150, which is updated in the feedback phase (here, each unit being the first vectorization unit 2203, the separation unit 2204, and the second vectorization unit 2205), will be described. FIG. 32 is a second diagram showing a specific example of the processing of the first vectorization unit, the separation unit, and the second vectorization unit included in the search unit of the server device.

As shown in FIG. 32, when update information is transmitted from the analysis device 2810 in the feedback phase, the pharmaceutical development glossary storage unit 2403 of the first vectorization unit 2203 is updated to a pharmaceutical development glossary storage unit 3203.

As shown in FIG. 32, when update information is transmitted from the analysis device 2810 in the feedback phase, the adjusted hyperparameters are applied as the hyperparameters of the vectorization model 2402. Thus, the vectorization model 2402 is updated to a vectorization model 3201. Similarly, when update information is transmitted from the analysis device 2810 in the feedback phase, the adjusted hyperparameters are applied as the hyperparameters of the vectorization model 2412. Thus, the vectorization model 2412 is updated to a vectorization model 3211.

As shown in FIG. 32, when update information is transmitted from the analysis device 2810 in the feedback phase, a new trained vectorization model is applied as the vectorization model 3201. As a result, the vectorization model 3201 is updated to a vectorization model 3202 (trained vectorization model). Similarly, when update information is transmitted from the analysis device 2810 in the feedback phase, a new trained vectorization model is applied as the vectorization model 3211. As a result, the vectorization model 3211 is updated to a vectorization model 3212 (trained vectorization model).

### <Processing of Work Support System (Feedback Phase)>

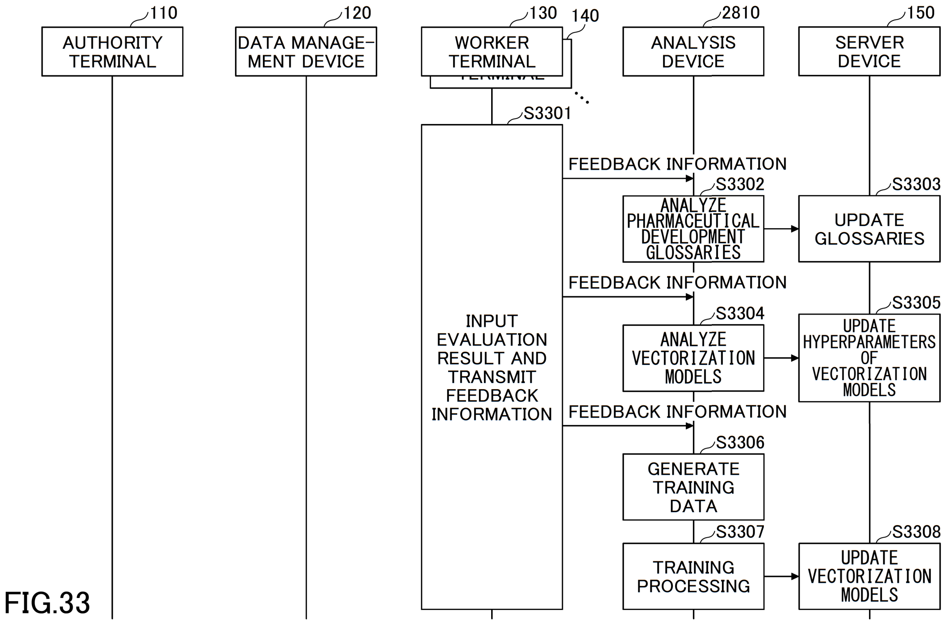

Next, the flow of processing in the feedback phase of the work support system 2800 will be described. FIG. 33 is a sequence diagram showing the flow of processing in the feedback phase of the work support system.

In step S3301, the worker terminals 130, 140, and the like receive the results of evaluation on the search results input by the workers 131, 141, and the like, and transmit feedback information to the analysis device 2810.

In step S3302, the analysis device 2810 analyzes the pharmaceutical development glossaries every time it receives feedback information, and transmits update information including addition of new terms and deletion of unnecessary terms to the server device 150.

In step S3303, the server device 150 updates the pharmaceutical development glossaries based on the update information from the analysis device 2810.

In step S3304, the analysis device 2810 adjusts the hyperparameters of the vectorization models 2402 and 2412 based on accumulated feedback information, and transmits update information including the adjusted hyperparameters to the server device 150.

In step S3305, the server device 150 updates the hyperparameters of the vectorization model 2402 of the first vectorization unit 2203 and the vectorization model 2412 of the second vectorization unit 2205 based on the update information from the analysis device 2810.

In step S3306, the analysis device 2810 generates a training data set based on the accumulated feedback information.

In step S3307, the analysis device 2810 generates new trained vectorization models for generating vector data from inquiry contents, by performing training processing on the vectorization models by using the generated training data set. The analysis device 2810 transmits update information including the generated trained vectorization models to the server device 150.

In step S3308, the server device 150 updates the vectorization model 2402 of the first vectorization unit 2203 and the vectorization model 2412 of the second vectorization unit 2205 to the new trained vectorization models based on the update information from the analysis device 2810.

### <Summary>

As is clear from the above description, the work support system 2800 according to the fifth embodiment
- updates the pharmaceutical development glossaries based on the result of evaluation on the inquiry content included in searched-out filled-in divided document data;
- updates the hyperparameters used when the vectorization model of the first vectorization unit and the vectorization model of the second vectorization unit generate vector data, based on the result of evaluation on the inquiry content included in the searched-out filled-in divided document data;
- generates a training data set in which the inquiry content included in the search request and the inquiry content included in the filled-in divided document data in the search result are input data and the evaluation result is ground truth data; and
- generates new trained vectorization models by performing training processing using the training data set, and updates the vectorization model of the first vectorization unit and the vectorization model of the second vectorization unit using the generated trained vectorization models.

Thus, the work support system 2800 according to the fifth embodiment is configured to update the search unit 2101 of the server device 150 by feeding back the result of evaluation on the search result in the feedback phase. Thus, according to the fifth embodiment, the searching accuracy when the worker performs searching can be improved.

### [Sixth Embodiment]

In the above-described embodiments, the system configuration of each phase is illustrated using FIGS. 1, 2, 15, 16, 21, 28, etc. However, the system configuration of each phase is not limited to those shown in the above-described embodiments. For example, in the accumulation phase of the above-described second embodiment, the data management device 120 and the prediction device 1610 are configured as separate bodies in FIG. 16. However, the data management device 120 and the prediction device 1610 may be configured integrally.

In the second and fifth embodiments, the hardware configuration of the training device 1510, the prediction device 1610, and the analysis device 2810 is not mentioned. However, their hardware configurations may be the same as or similar to, for example, the data management device 120 shown in FIG. 3. Therefore, for example, the memory unit of the prediction device 1610, in which the morphological analysis unit 1711, the vectorization model 1712, and the trained keyword model 1802 are stored, may be realized by the auxiliary storage device 303 shown in FIG. 3.

In the fifth embodiment, the feedback information has been described as being used to update the search unit 2101. However, for example, the feedback information may be used to update the prediction unit 1611 described in the second embodiment.

### [Seventh Embodiment]

In the embodiments described above, it has been assumed that the workers 131 and 141 generate the answer content of the filled-in divided document data. However, the answer content of the filled-in divided document data may be generated by a Language Model (LM), such as a Large Language Model (LLM) and the like, instead of being generated by the workers 131 and 141. In this case, the workers 131 and 141 only need to input the inquiry content, confirm the answer content generated by the language model, and correct the answer content as needed. Thus, the workload for generating the filled-in divided document data can be greatly reduced. Hereinafter, a seventh embodiment will be described mainly on the differences from the embodiments described above.

### <System Configuration of Work Support System (LM Training Phase 1)>

First, the system configuration of the work support system according to the seventh embodiment will be described. In the seventh embodiment, the work support system performs processing in an LM training phase and processing in a generation phase. Thus, the system configuration of the work support system in the LM training phase will be described here.

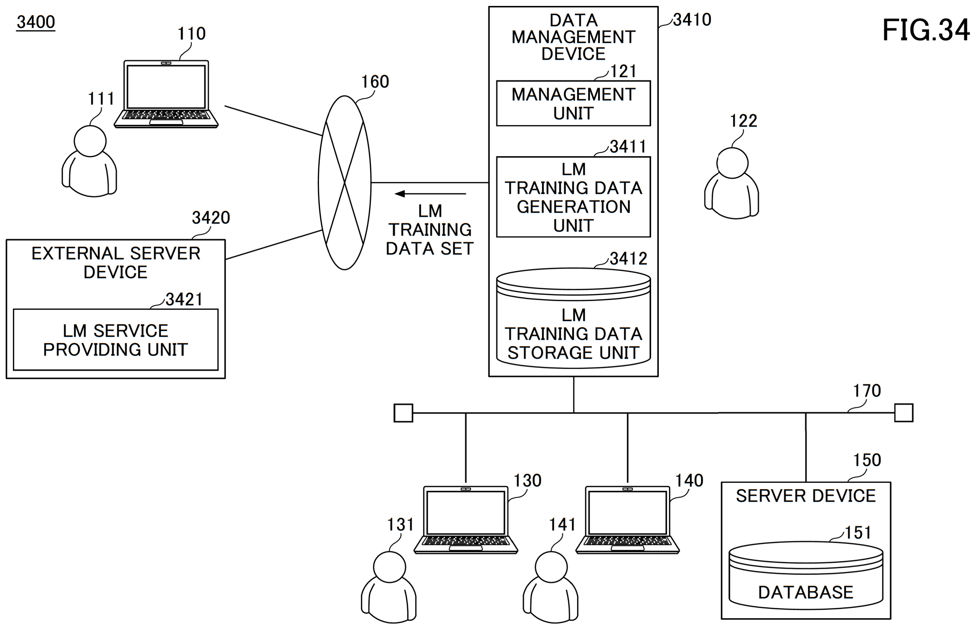

FIG. 34 is a seventh diagram showing an example of the system configuration of the work support system, and shows the system configuration in the LM training phase. The LM training phase is a phase in which training processing on a language model is performed. A work support system 3400 of FIG. 34 is different from the work support system 2100 according to the third embodiment described with reference to FIG. 21 in that:
- the function of a data management device 3410 is different from the function of the data management device 120;
- the server device 150 does not include the search unit 2101; and
- an external server device 3420 is connected to the external network 160.

Specifically, the data management device 3410 includes an LM training data generation unit 3411 (an example of a first generation unit). The LM training data generation unit 3411 reads out filled-in divided document data stored in the database 151 of the server device 150, generates an LM training data set in which the inquiry contents are input data and the answer contents are ground truth data, and stores the LM training data set in an LM training data storage unit 3412.

The LM training data generation unit 3411 transmits the stored LM training data set to the external server device 3420, thereby causing the external server device 3420 to perform training processing on a language model included in the external server device 3420.

The external server device 3420 functions as an LM service providing unit 3421. The LM service providing unit 3421 provides services corresponding to various language processing tasks by executing the language model. In the seventh embodiment, the language model of the external server device 3420 is subjected to training processing using an LM training data set transmitted from the LM training data generation unit 3411. Thus, the language model is fine-tuned for generation of answer contents.

In the work support system 3400 shown in FIG. 34, the external server device 3420 is shown as being deployed on the external network 160. However, for example, the external server device 3420 may be deployed on the internal network 170.

### <Explanation of LM Training data set>

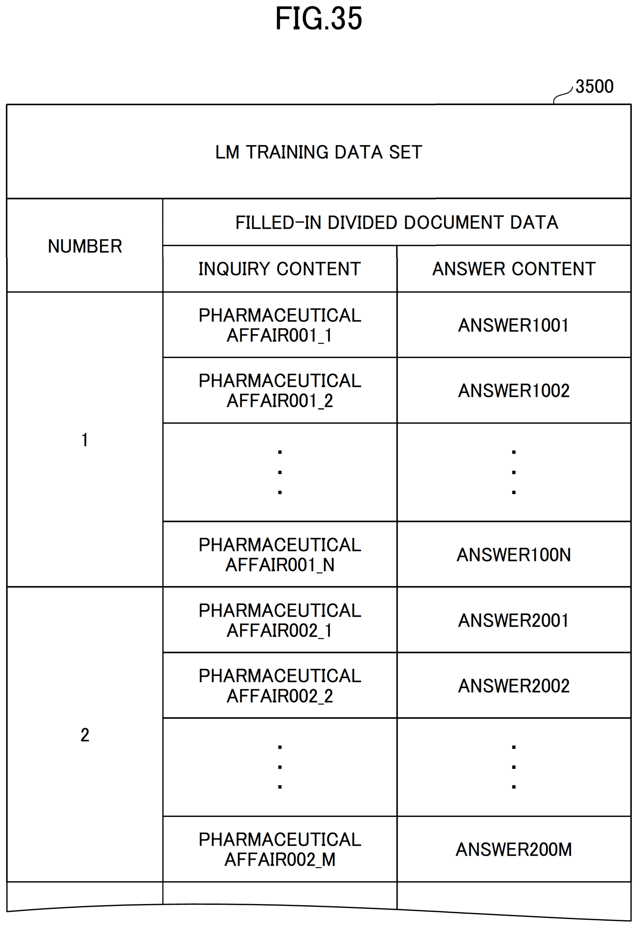

Next, an LM training data set used for fine-tuning the language model of the external server device 3420 for generation of answer contents will be described. FIG. 35 is a first diagram showing an example of the LM training data set.

As shown in FIG. 35, an LM training data set 3500 includes "number" and "filled-in divided document data" as items of information. The number assigned to registration data 1000 stored in the database 151 of the server device 150 is stored in the "number". The "filled-in divided document data" further includes "inquiry content" and "answer content" as items of information.

The "inquiry content" stores the inquiry content included in the filled-in divided document data corresponding to the "number" among the filled-in divided document data included in the registration data 1000. The "answer content" stores the answer content corresponding to the inquiry content included in the filled-in divided document data corresponding to the "number" among the filled-in divided document data included in the registration data 1000.

### <Processing of Work Support System (LM Training Phase 1)>

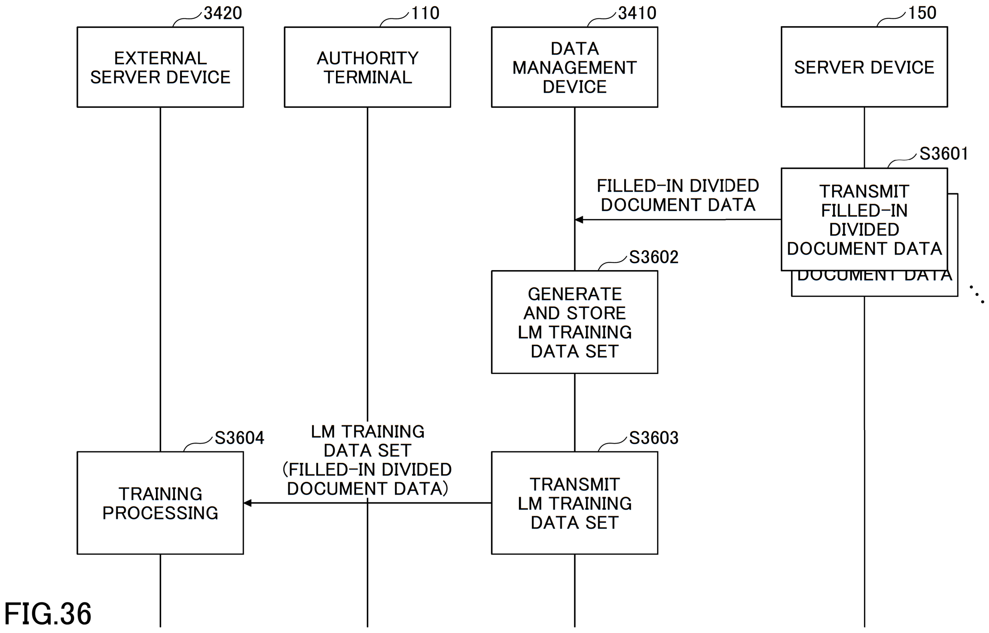

Next, the flow of processing in the LM training phase of the work support system 3400 will be described. FIG. 36 is a first sequence diagram showing the flow of processing in the LM training phase of the work support system.

In step S3601, the server device 150 transmits filled-in divided document data including inquiry contents and answer contents to the data management device 3410 from the registration data 1000 stored in the database 151. The transmission of the filled-in divided document data by the server device 150 to the data management device 3410 may be performed at every predetermined cycle or every time filled-in divided document data is newly stored in the registration data 1000.

In step S3602, the data management device 3410 generates the LM training data set 3500 based on the filled-in divided document data transmitted from the server device 150 and stores it in the LM training data storage unit 3412.

In step S3603, the data management device 3410 transmits the LM training data set 3500 stored in the LM training data storage unit 3412 to the external server device 3420. In this way, the data management device 3410 instructs training processing to be performed on the language model included in the external server device 3420. The data management device 3410 may transmit the LM training data set 3500 to the external server device 3420 at every predetermined cycle. Alternatively, the data management device 3410 may transmit the LM training data set 3500 to the external server device 3420 every time filled-in divided document data is transmitted from the server device 150 and the LM training data set 3500 is updated.

In step S3604, the external server device 3420 performs training processing on the language model by using the LM training data set 3500 transmitted from the data management device 3410, thereby fine-tuning the language model for generation of answer contents.

### <System Configuration of Work Support System (LM Training Phase 2)>

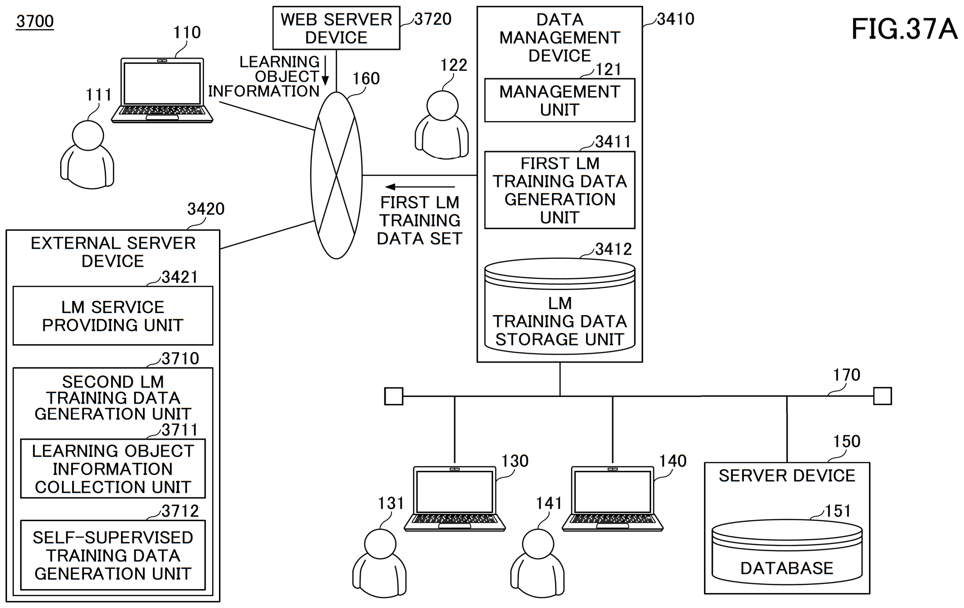

Next, as the work support system according to the seventh embodiment, a system configuration of the work support system different from the work support system shown in FIG. 34 will be described. FIG. 37A is an eighth diagram showing an example of the system configuration of the work support system, and shows another system configuration in the LM training phase. The difference from the work support system 3400 described with reference to FIG. 34 is that in the case of a work support system 3700 of FIG. 37A,
- the data management device 3410 includes a first LM training data generation unit 3411 (another example of the first generation unit) instead of the LM training data generation unit 3411, and
- the external server device 3420 includes a second LM training data generation unit 3710 (an example of a second generation unit).

The first LM training data generation unit 3411 reads out filled-in divided document data stored in the database 151 of the server device 150. The first LM training data generation unit 3411 generates a first LM training data set in which inquiry contents of the read-out filled-in divided document data are input data and the answer contents thereof are ground truth data, and stores the first LM training data set in the LM training data storage unit 3412. The first LM training data set is an example of a first training data set.

The first LM training data generation unit 3411 transmits the stored first LM training data set to the external server device 3420, thereby causing training processing to be performed on the language model included in the LM service providing unit 3421 of the external server device 3420.

A second LM training data generation unit 3710 included in the external server device 3420 further includes a learning object information collection unit 3711 and a self-supervised training data generation unit 3712.

The learning object information collection unit 3711 accesses a Web server device 3720 via the external network 160 to collect learning object information. The learning object information refers to arbitrary information that contributes to the LM service providing unit 3421 in generating answer contents catching up with the latest information. The learning object information collection unit 3711 is configured to automatically collect learning object information from a preset access destination at a preset timing. Alternatively, the learning object information collection unit 3711 may be configured to collect learning object information from an access destination designated by the applicant 122 at a timing designated by the applicant 122. The learning object information collection unit 3711 may be configured to receive input from the applicant 122 when login is required to access the designated access destination.

The self-supervised training data generation unit 3712 generates a second LM training data set based on the learning object information collected by the learning object information collection unit 3711. For example, the self-supervised training data generation unit 3712 generates a second LM training data set including: a masked document in which a part of the collected learning object information is masked; and a document (ground truth document) composed of the collected learning object information (unmasked learning object information). The second LM training data set is an example of a second training data set.

The self-supervised training data generation unit 3712 notifies the generated second LM training data set to the LM service providing unit 3421 and causes training processing to be performed on the language model included in the LM service providing unit 3421.

In the work support system 3700 shown in FIG. 37A, the external server device 3420 is shown as being deployed on the external network 160. However, for example, the external server device 3420 may be deployed on the internal network 170.

In the work support system 3700 shown in FIG. 37A, the second LM training data generation unit 3710 is shown as being implemented in the external server device 3420. However, for example, the second LM training data generation unit 3710 may be implemented in a desirable device deployed on the internal network 170 (for example, in the data management device 3410). The second LM training data generation unit 3710 may be implemented in both the external server device 3420 and a desirable device deployed on the internal network 170 (for example, the data management device 3410). In other words, the second LM training data generation unit 3710 may be implemented in a plurality of devices.

Description of the work support system 3700 shown in FIG. 37A has been made on the assumption that the LM service providing unit 3421 includes one language model. However, the LM service providing unit 3421 may include three language models.

Specifically, the LM service providing unit 3421 includes:
- a language model that is fine-tuned using the first LM training data set;
- a language model that is fine-tuned using the second LM training data set; and
- a language model that is fine-tuned using both the first LM training data set and the second LM training data set.

### <System Configuration of Work Support System (LM Training Phase 3)>

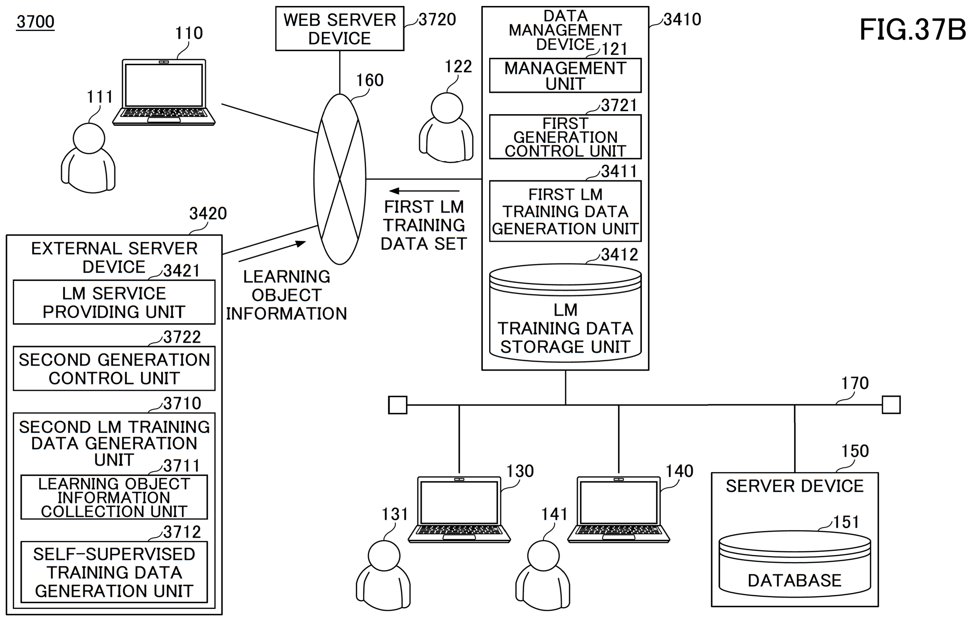

Next, as the work support system according to the seventh embodiment, a modification of the work support system shown in FIG. 37A will be described. FIG. 37B is a ninth diagram showing an example of the system configuration of the work support system, and shows another system configuration in the LM training phase. The difference from the work support system 3700 described with reference to FIG. 37A is that in the case of the work support system 3700 of FIG. 37B,
- the data management device 3410 include a first generation control unit 3721; and
- the external server device 3420 includes a second generation control unit 3722.

The first generation control unit 3721 appropriately selects or rejects first LM training data sets stored in the LM training data storage unit 3412 by referring to learning object information collected by the learning object information collection unit 3711 of the external server device 3420. This is because first LM training data sets include those that are not appropriate for fine-tuning the language model for generation of answer contents in light of the latest information.

The second generation control unit 3722 appropriately changes the collection source from which the learning object information collection unit 3711 collects learning object information, by referring to the first LM training data sets generated by the first LM training data generation unit 3411 of the data management device 3410. This is because it is important that the learning object information to be collected by the learning object information collection unit 3711 is information for replacing the first LM training data sets with the latest information.

### <Explanation of LM Training data set>

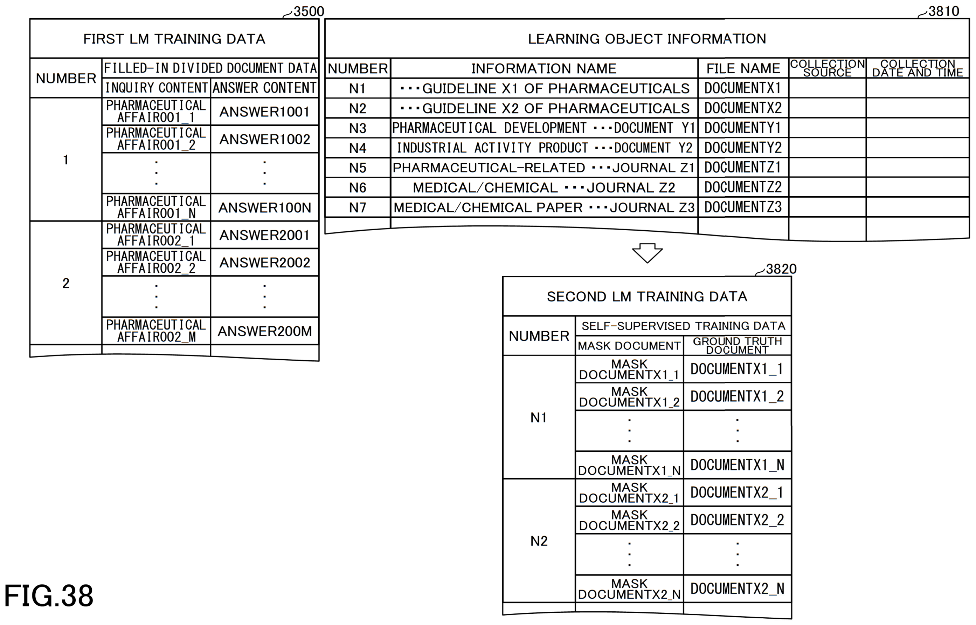

Next, the first LM training data set and the second LM training data set used for fine-tuning the language model of the external server device 3420 for generation of answer contents will be described. FIG. 38 is a second diagram showing an example of the LM training data set.

In FIG. 38, the first LM training data set 3500 is the same as the LM training data set 3500 shown in FIG. 35, and description will be omitted here.

In FIG. 38, a second LM training data set 3820 is a training data set generated by the self-supervised training data generation unit 3712 based on learning object information 3810 collected by the learning object information collection unit 3711.

The learning object information 3810 includes "number", "information name", "file name", "collection source", and "collection date and time" as items of information.

The "number" stores a number assigned to each document collected as the learning object information. The name of the document collected as the learning object information is stored in the "information name". In the example shown in FIG. 38, the documents to be collected as the learning object information include: for example,
- a document showing pharmaceutical guidelines;
- a document related to pharmaceutical development;
- a document related to industrial activity products;
- a pharmaceutical journal;
- a medical/chemical journal;
- a journal containing medical/chemical papers; and the like.

The file name of the document stored in the "information name" is stored in the "file name". The destination accessed when the document stored in the "information name" was collected is stored in the "collection source". The collection date and time when the document stored in the "information name" was collected is stored in the "collection date and time".

The second LM training data set 3820 includes "number" and "self-supervised training data" as items of information. The number assigned to the learning object information used when the second LM training data set is generated by the self-supervised training data generation unit 3712 is stored in the "number".

The "self-supervised training data" further includes "mask document" and "ground truth document" as items of information. A mask document that is partially masked and is included in the learning object information identified by the corresponding "number" (for example, "N1") is stored in the "mask document". A document, which is the corresponding mask document before being masked, is stored in the "ground truth document". As shown in FIG. 38, a combination of a plurality of mask documents and a plurality of ground truth documents may be generated from one document of the learning object information.

When the learning object information 3810 is collected, the self-supervised training data generation unit 3712 generates the second LM training data set 3820 automatically (i.e., without the involvement of the applicant 122).

### <Processing of Work Support System (LM Training Phase 2)>

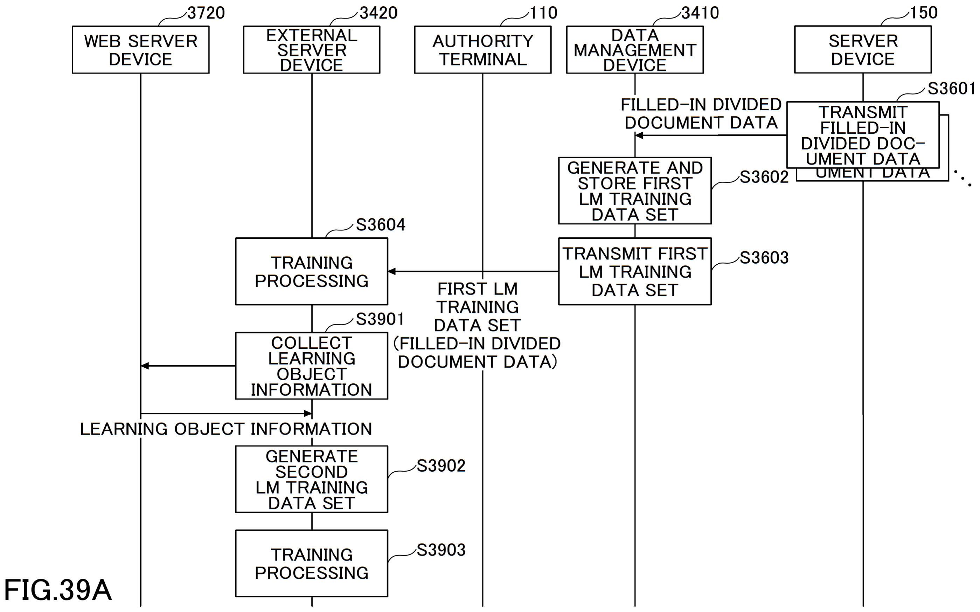

Next, the flow of processing in the LM training phase of the work support system 3700 will be described. FIG. 39A is a second sequence diagram showing the flow of processing in the LM training phase of the work support system, and shows the flow of processing in the LM training phase of the work support system 3700 shown in FIG. 37A.

In FIG. 39A, the processing of steps S3601 to S3604 is generally the same as the processing of steps S3601 to S3604 shown in FIG. 36. Thus, description thereof will be omitted here.

In step S3901, the external server device 3420 accesses the Web server device 3720 via the external network 160 to collect learning object information.

In step S3902, the external server device 3420 generates a second LM training data set based on the collected learning object information.

In step S3903, the external server device 3420 performs training processing on the language model using the generated second LM training data set, thereby fine-tuning the language model for generation of answer contents.

In FIG. 39A, transmission of the first LM training data set to the external server device 3420 by the data management device 3410 may be performed at every predetermined cycle. Alternatively, transmission of the first LM training data set to the external server device 3420 by the data management device 3410 may be performed every time filled-in divided document data is transmitted from the server device 150 and the first LM training data set is updated.

In addition, in FIG. 39A, the external server device 3420 may perform training processing using the second LM training data set (step S3903) at every predetermined cycle. Further, the external server device 3420 may perform the training processing using the second LM training data set (step S3903) in the same cycle as the training processing using the first LM training data set (step S3604) or in a different cycle.

The external server device 3420 repeatedly performs the training processing using the first LM training data set (step S3604) and the training processing using the second LM training data set (step S3903). As a result, the LM service providing unit 3421 can output an answer content that is based on past filled-in divided document data in which the latest information is taken into consideration. Alternatively, when outputting an answer content taking the latest information into consideration, the LM service providing unit 3421 can output an answer content taking the expressions in the recent filled-in divided document data into consideration.

### <Processing of Work Support System (LM Training phase 3)>

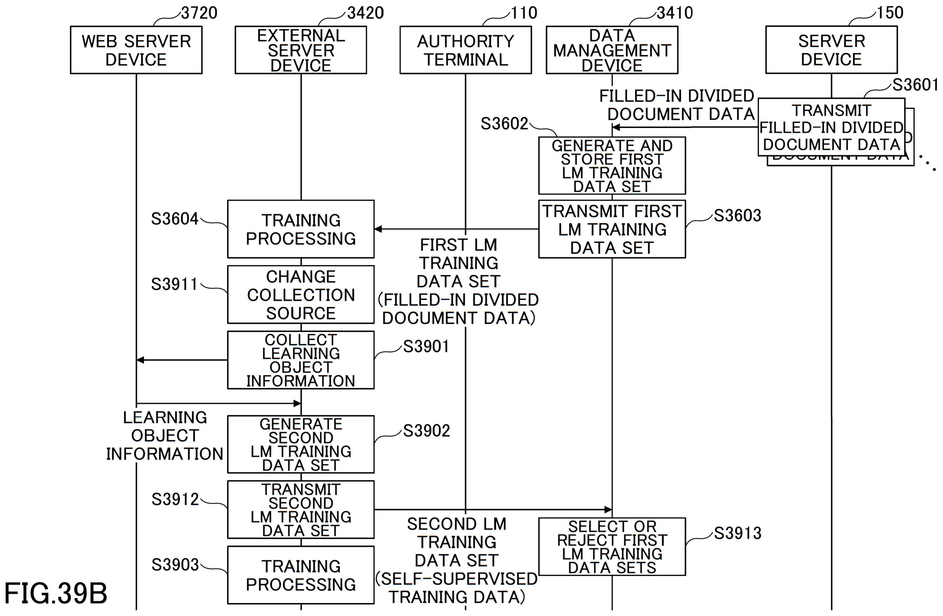

Next, the flow of processing in the LM training phase of the work support system 3700 will be described. FIG. 39B is a third sequence diagram showing the flow of processing in the LM training phase of the work support system, and shows the flow of processing in the LM training phase of the work support system 3700 shown in FIG. 37B.

In FIG. 39B, the processing of steps S3601 to S3604 is generally the same as the processing of steps S3601 to S3604 in FIG. 36. Therefore, description thereof is omitted here.

In step S3911, the external server device 3420 changes the collection source from which the learning object information collection unit 3711 collects the learning object information, by referring to the first LM training data set generated by the data management device 3410.

The processing of steps S3901 to S3902 and S3903 is the same as the processing of steps S3901 to S3902 and S3903 in FIG. 39A. Thus, description thereof is omitted here.

In step S3912, the external server device 3420 transmits the second LM training data set generated in step S3902 to the data management device 3410.

In step S3913, the data management device 3410 selects or rejects the first LM training data set by referring to the learning object information included in the second LM training data set.

### <System Configuration of Work Support System (Generation Phase)>

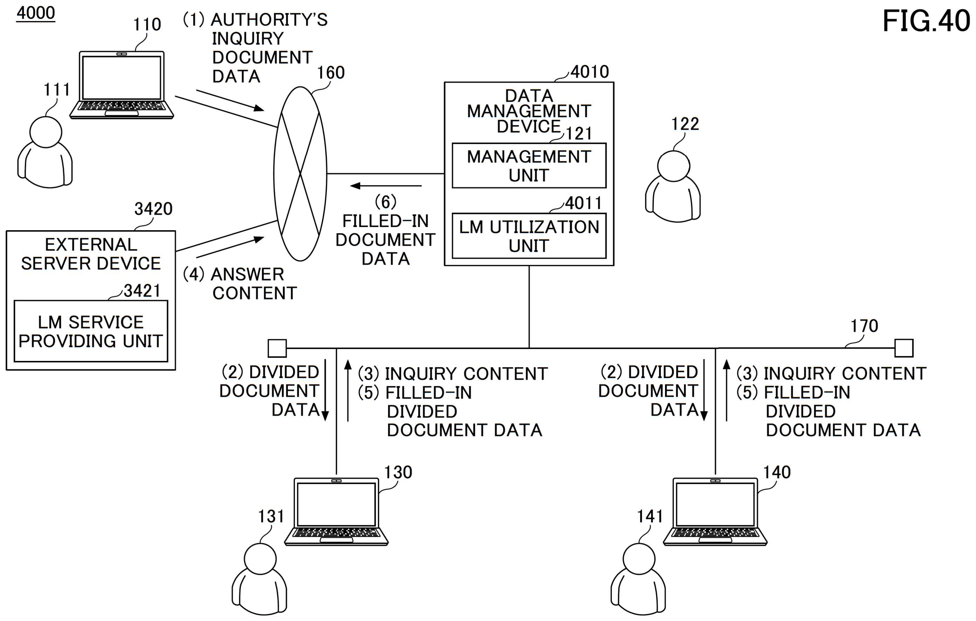

Next, the system configuration in the generation phase of the work support system according to a seventh embodiment will be described. FIG. 40 is a tenth diagram showing an example of the system configuration of the work support system, and shows the system configuration in the generation phase. The generation phase is a phase of generating filled-in document data using a language model fine-tuned for generation of answer contents. The difference from the work support system 3400 in the LM training phase described with reference to FIG. 34 is that in the case of a work support system 4000 in FIG. 40,
- the function of a data management device 4010 is different from the function of the data management device 3410,
- the data management device 4010 includes an LM utilization unit 4011, and
- the data management device 4010 does not include the LM training data storage unit 3412.

As shown in FIG. 40, when authority's inquiry document data is transmitted from the authority terminal 110 ((1)), the management unit 121 of the data management device 4010 divides the received authority's inquiry document data per inquiry item to generate a plurality of divided document data. The management unit 121 of the data management device 4010 transmits the generated plurality of divided document data to the corresponding worker terminals 130, 140, and the like ((2)).

When the divided document data is transmitted from the data management device 4010, the worker 131 extracts the inquiry content from the divided document data and generates a prompt including the extracted inquiry content. The worker 131 transmits the generated prompt to the LM utilization unit 4011 of the data management device 4010 via the worker terminal 130 to instruct generation of an answer content for the extracted inquiry content ((3)).

The LM utilization unit 4011 transmits the inquiry content to the external server device 3420 based on the prompt received from the worker terminal 130 and instructs generation of the answer content for the transmitted inquiry content.

The LM service providing unit 3421 of the external server device 3420 includes a language model fine-tuned for generation of answer contents. Upon receiving the inquiry content and the instruction for generation of the answer content for the inquiry content from the data management device 4010, the LM service providing unit 3421 of the external server device 3420 generates the answer content in accordance with the generation instruction.

The answer content generated by the external server device 3420 is acquired by the LM utilization unit 4011 of the data management device 4010 ((4)) and transmitted to the worker terminal 130 that is the instruction issuer. Thus, the worker 131 inputs an answer content for the inquiry content while referring to the answer content generated by the language model fine-tuned for generation of answer contents, to generate filled-in divided document data.

The filled-in divided document data generated by the worker 131 is transmitted to the management unit 121 of the data management device 4010 via the worker terminal 130 ((5)).

The management unit 121 of the data management device 4010 generates filled-in document data based on the filled-in divided document data collected from the worker terminal 130, the worker terminal 140, and the like, and transmits the filled-in document data to the authority terminal 110 via the external network 160 ((6)).

Thus, according to the work support system 4000, when generating filled-in divided document data, the worker 131, the worker 141, and the like can generate the filled-in divided document data while referring to the answer content acquired by using the language model fine-tuned for generation of answer contents. That is, the work support system 4000 can support the worker 131, the worker 141, and the like in the work to generate filled-in divided document data.

### <Processing of Work Support System (Generation Phase)>

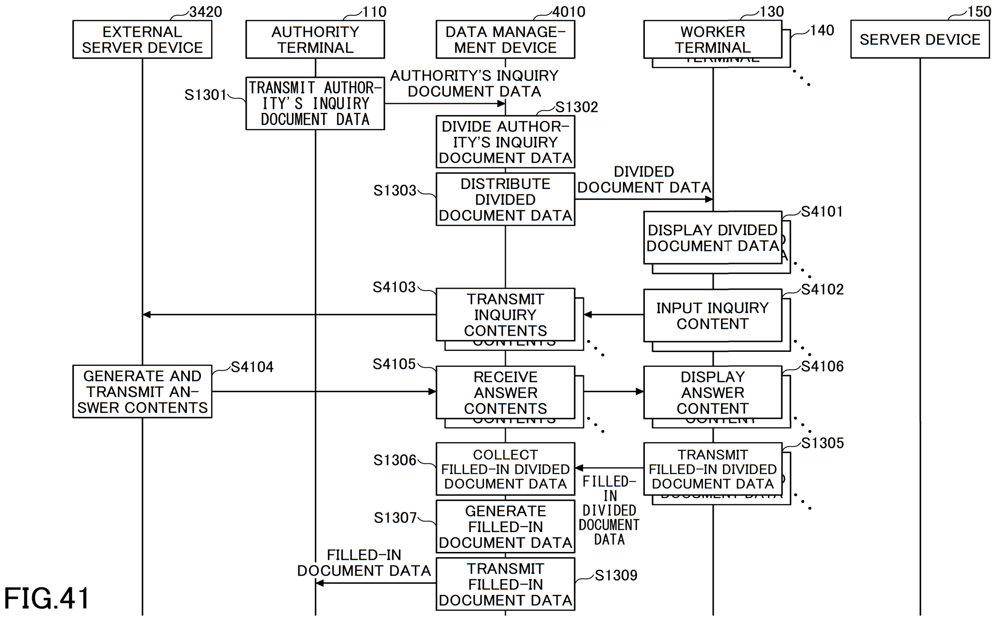

Next, the flow of processing in the generation phase of the work support system 4000 will be described. FIG. 41 is a first sequence diagram showing the flow of processing in the generation phase of the work support system.

The processing of steps S1301 to S1303 and S1305 to S1309 is the same as the processing of steps S1301 to S1303 and S1305 to S1309 in FIG. 13. Thus, description thereof will be omitted here.

In step S4101, the worker terminals 130, 140, and the like display received divided document data, respectively.

In step S4102, when there is input of a prompt including an inquiry content and an instruction to generate an answer content for the inquiry content from the worker 131, 141, and the like in response to the display of the divided document data, the worker terminals 130, 140, and the like receive the input prompt. In addition, the worker terminals 130, 140, and the like transmit the received prompt to the data management device 4010.

In step S4103, the data management device 4010 transmits the inquiry content and the instruction to generate an answer content to the inquiry content to the external server device 3420.

In step S4104, upon receiving the inquiry content and the instruction to generate an answer content for the inquiry content from the data management device 4010, the external server device 3420 executes the language model fine-tuned for generation of answer contents, to generate the answer content. In addition, the external server device 3420 transmits the generated answer content to the data management device 4010.

In step S4105, the data management device 4010 receives answer contents transmitted from the external server device 3420 and transmits them to the worker terminals 130, 140, and the like.

In step S4106, the worker terminals 130, 140, and the like display the answer contents transmitted from the data management device 4010. Thus, the workers 131, 141, and the like can generate filled-in divided document data while referring to the answer contents displayed on the worker terminals 130, 140, and the like.

### <Summary>

As is clear from the above description, the work support system 3400 according to the seventh embodiment
- generates training data sets in which inquiry contents and answer contents included in a plurality of filled-in divided document data are associated with each other, and transmits the generated training data sets to perform training processing on the language model.

Further, the work support system 4000 according to the seventh embodiment
- transmits the inquiry contents of a plurality of inquiry items to a language model subjected to training processing when a plurality of divided document data are generated for authority's inquiry document data to be processed, and acquires answer contents for the inquiry contents of the plurality of inquiry items, and
- acquires a plurality of filled-in divided document data generated based on the acquired answer contents.

Thus, according to the work support system according to the seventh embodiment, it is possible to support the work of the workers to generate filled-in divided document data.

### [Eighth Embodiment]

In the seventh embodiment, when fine-tuning the language model, the LM training data set 3500 including the inquiry contents and the answer contents is used. However, the LM training data set used when fine-tuning the language model is not limited to the LM training data set 3500. For example, an LM training data set including: an authority submitted document (example of submitted document data) submitted to the authority before authority's inquiry document data is transmitted from the authority terminal 110; and an inquiry content sent from the authority terminal 110 may be used. Hereinafter, an eighth embodiment will be described mainly on the differences from the seventh embodiment.

### <System Configuration of Work Support System (LM Training Phase)>

First, the system configuration of the work support system according to the eighth embodiment will be described. In the eighth embodiment, the work support system performs processing in an LM training phase, processing in a pharmaceutical affairs application phase, and processing in a pharmaceutical affairs inquiry phase. Here, the system configuration of the work support system in the LM training phase will be described.

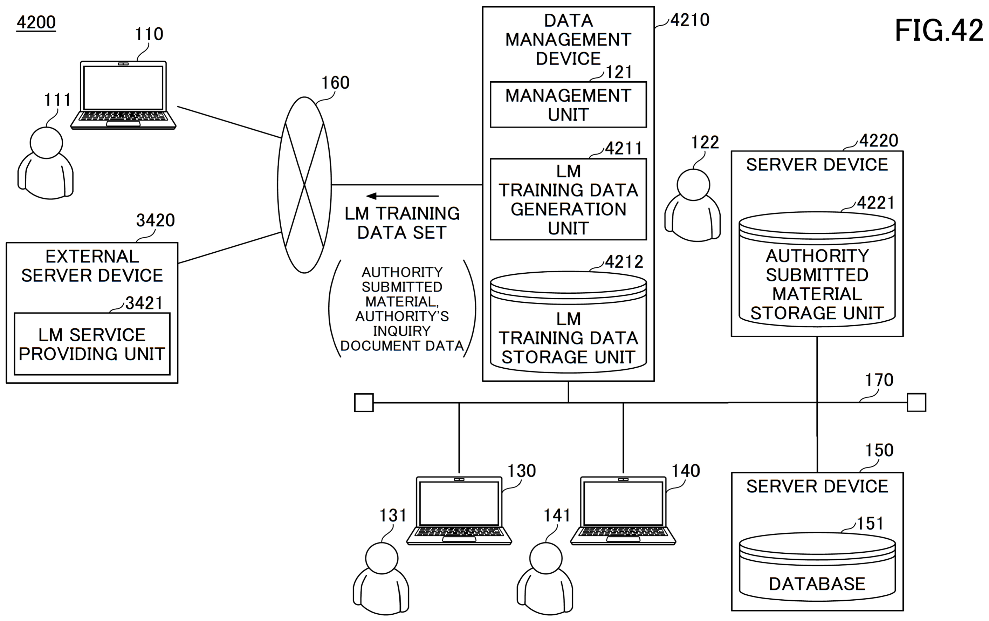

FIG. 42 is an eleventh diagram showing an example of the system configuration of the work support system, and shows the system configuration in the LM training phase. The differences from the work support system 3400 described with reference to FIG. 34 in the seventh embodiment are that in the case of a work support system 4200 of FIG. 42:
- the function of a data management device 4210 is different from the function of the data management device 3410; and
- a server device 4220 is connected to the internal network 170.

Specifically, the data management device 4210 includes an LM training data generation unit 4211. The LM training data generation unit 4211 reads out an authority submitted material stored in an authority submitted material storage unit 4221 of the server device 4220.

The LM training data generation unit 4211 reads out an inquiry content included in the authority's inquiry document data transmitted from the authority in response to the submission of the authority submitted material to the authority from the database 151 of the server device 150. Furthermore, the LM training data generation unit 4211 generates an LM training data set in which the read-out authority submitted material is input data and the read-out inquiry content is ground truth data, and stores the LM training data set in an LM training data storage unit 4212.

Furthermore, the LM training data generation unit 4211 transmits the stored LM training data set to the external server device 3420 to cause training processing to be performed on the language model included in the external server device 3420.

In the eighth embodiment, the language model of the external server device 3420 is subjected to training processing using the LM training data set transmitted from the LM training data generation unit 4211. Thus, the language model is fine-tuned for generation of inquiry contents.

In the eighth embodiment, the "authority submitted material" includes, for example, a "main material", such as an application document for approval for manufacture and sales of pharmaceuticals and the like, and an "annexed material" submitted to the authority in connection with the submission of the application document for approval for manufacture and sales of pharmaceuticals and the like. The "annexed material" means, for example, consultation records, test result data, and the like. However, internal materials that have not been submitted to the authority as "annexed materials" are not included in the LM training data set, even if the materials fall within consultation records, test result data, and the like.

When the authority submitted material includes data other than text information, such as images, graphs, tables, and the like, the LM training data generation unit 4211 may generate an LM training data set by annotating the data other than the text information. Alternatively, assuming that authority submitted materials include data other than text information, such as images, graphs, tables, and the like, the LM service providing unit 3421 may include a multimodal model instead of a language model.

### <Explanation of LM Training data set>

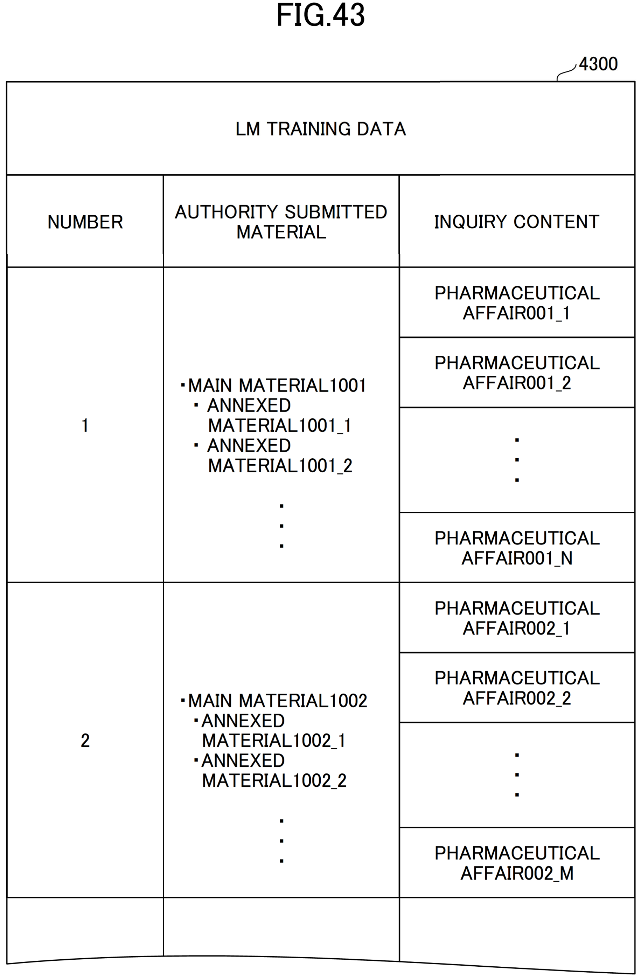

Next, the LM training data set used for fine-tuning the language model of the external server device 3420 for generation of inquiry contents will be described. FIG. 43 is a third diagram showing an example of the LM training data set.

As shown in FIG. 43, the LM training data set 4300 includes "number", "authority submitted material", and "inquiry content" as information items. A number assigned to each authority submitted document is stored in the "number". A main material submitted to the authority and an annexed material submitted to the authority in connection with the submission of the main material are stored in the "authority submitted material". Each inquiry content included in authority's inquiry document data transmitted from the authority in response to the submission of the main material and the annexed material is stored in the "inquiry content".

### <Processing of Work Support System (LM Training Phase)>

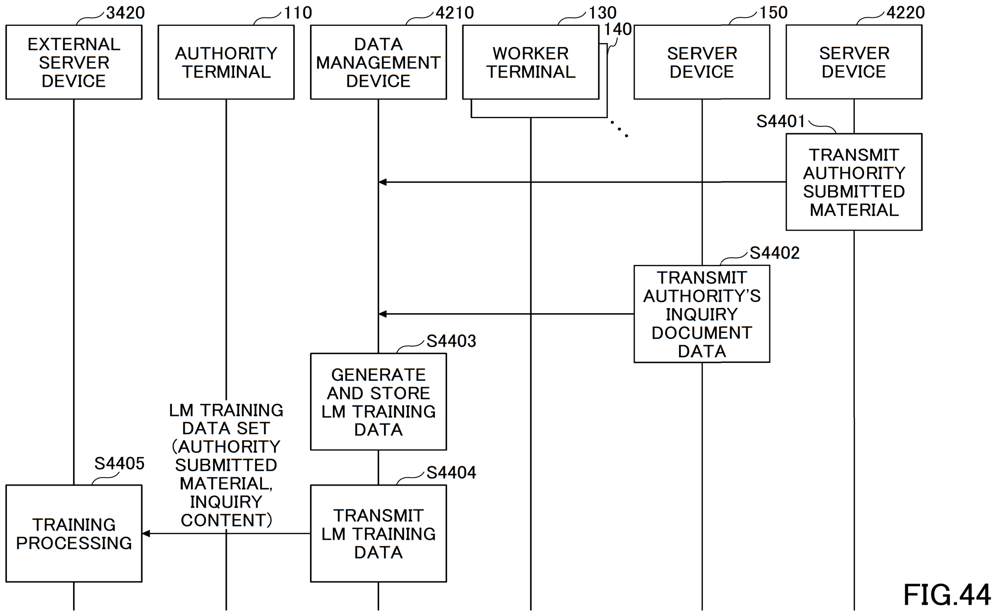

Next, the flow of processing in the LM training phase of the work support system 4000 will be described. FIG. 44 is a fourth sequence diagram showing the flow of processing in the LM training phase of the work support system.

In step S4401, the server device 4220 transmits an authority submitted material stored in the authority submitted material storage unit 4221 to the data management device 4210. The transmission of the authority submitted material by the server device 4220 to the data management device 4210 may be performed at every predetermined cycle or every time an authority submitted material is newly stored in the authority submitted material storage unit 4221.

In step S4402, the server device 150 transmits authority's inquiry document data to the data management device 4210 from the registration data 1000 stored in the database 151. The transmission of the authority's inquiry document data by the server device 150 to the data management device 4210 may be performed at every predetermined cycle or every time filled-in divided document data is newly stored in the registration data 1000.

In step S4403, the data management device 4210 generates an LM training data set 4300 based on the authority submitted material transmitted from the server device 4220 and the authority's inquiry document data transmitted from the server device 150. The data management device 3410 stores the generated LM training data set 4300 in the LM training data storage unit 4212.

In step S4404, the data management device 4210 transmits the LM training data set 4300 stored in the LM training data storage unit 4212 to the external server device 3420. In this way, the data management device 4210 causes training processing to be performed on the language model included in the external server device 3420. The transmission of the LM training data set 4300 by the data management device 4210 to the external server device 3420 may be performed at every predetermined cycles or every time the LM training data set 4300 is updated.

In step S4405, the external server device 3420 fine-tunes the language model for generation of inquiry contents by performing training processing on the language model using the LM training data set 4300 transmitted from the data management device 4210.

### <System Configuration of Work Support System (Pharmaceutical Affairs Application Phase)>

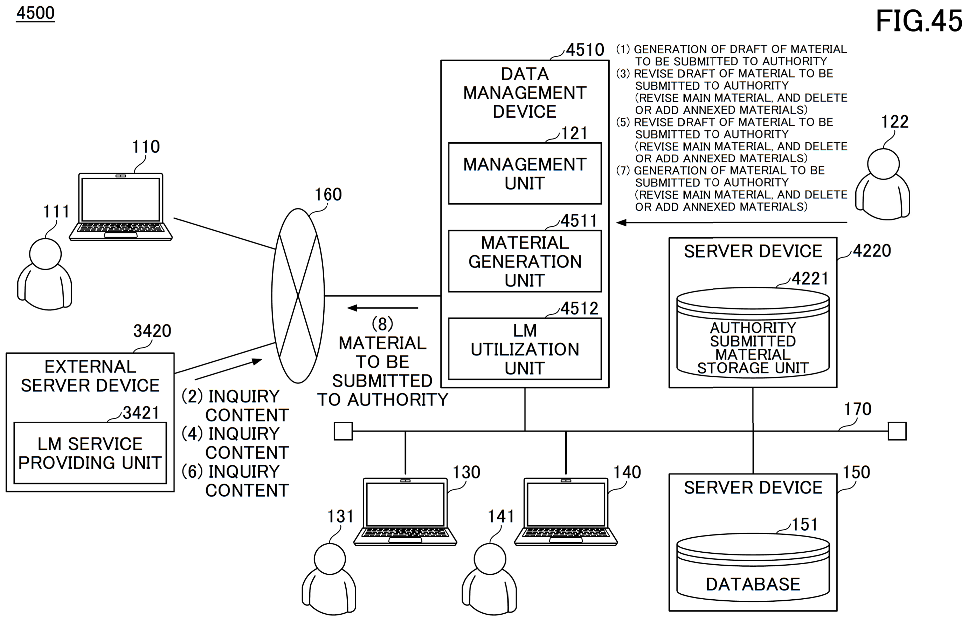

Next, the system configuration in the pharmaceutical affairs application phase of the work support system according to the eighth embodiment will be described. FIG. 45 is a twelfth diagram showing an example of the system configuration of the work support system, and shows the system configuration in the pharmaceutical affairs application phase. The pharmaceutical affairs application phase is a phase for generating a material to be submitted to the authority when applying for approval for manufacture and sales of pharmaceuticals and the like, using a language model fine-tuned for generation of inquiry contents. The differences from the work support system 4200 in the LM training phase described with reference to FIG. 42 are that in the case of a work support system 4500 o FIG. 45,
- the function of a data management device 4510 is different from the function of the data management device 4210,
- the data management device 4510 includes a material generation unit 4511 and an LM utilization unit 4512, and
- the data management device 4510 does not include the LM training data storage unit 4212.

As shown in FIG. 45, first, the applicant 122 generates a draft of the material to be submitted to the authority for applying for approval for manufacture and sales of pharmaceuticals and the like via the material generation unit 4511 ((1)). Subsequently, the applicant 122 generates a prompt including the generated draft of the material to be submitted to the authority, and inputs the generated prompt into the LM utilization unit 4512 to instruct generation of an inquiry content about the draft of the material to be submitted to the authority.

The LM utilization unit 4512 transmits the draft of the material to be submitted to the authority to the external server 3420 based on the prompt input by the applicant 122, and instructs generation of an inquiry content about the transmitted draft of the material to be submitted to the authority.

The LM service providing unit 3421 of the external server device 3420 includes a language model fine-tuned for generation of inquiry contents. Upon receiving the draft of the material to be submitted to the authority and the instruction for generation of the inquiry content about the draft of the material to be submitted to the authority from the data management device 4510, the LM service providing unit 3421 of the external server device 3420 generates the inquiry content in accordance with the generation instruction.

The inquiry content generated by the external server device 3420 is acquired by the LM utilization unit 4512 of the data management device 4510 ((2)) and displayed to the applicant 122. Thus, the applicant 122 revises the draft of the material to be submitted to the authority while referring to the inquiry content about the draft of the material to be submitted to the authority. Specifically, the applicant 122 revises the main material, and deletes or adds annexed materials such that no authority's inquiry document data including the displayed inquiry content will be transmitted from the authority ((3)).

Subsequently, the applicant 122 generates a prompt including the revised draft of the material to be submitted to the authority, and inputs the generated prompt into the LM utilization unit 4512 to instruct generation of an inquiry content about the revised draft of the material to be submitted to the authority.

The LM utilization unit 4512 transmits the revised draft of the material to be submitted to the authority to the external server 3420 based on the prompt input by the applicant 122, to instruct generation of an inquiry content about the transmitted revised draft of the material to be submitted to the authority.

Upon receiving a revised draft of the material to be submitted to the authority and the instruction for generation of an inquiry content about the revised draft of the material to be submitted to the authority from the data management device 4510, the LM service providing unit 3421 of the external server device 3420 generates an inquiry content in accordance with the generation instruction.

The inquiry content generated by the external server device 3420 is acquired by the LM utilization unit 4512 of the data management device 4510 ((4)) and displayed to the applicant 122. Thus, the applicant 122 re-revises the revised draft of the material to be submitted to the authority while referring to the inquiry content about the revised draft of the material to be submitted to the authority. Specifically, the applicant 122 revises the main document, and deletes or adds annexed materials such that no authority's inquiry document data including the displayed inquiry content will be transmitted from the authority ((5)).

Subsequently, the applicant 122 generates a prompt including the re-revised draft of the material to be submitted to the authority, and inputs the generated prompt into the LM utilization unit 4512 to instruct generation of an inquiry content about the re-revised draft of the material to be submitted to the authority.

The LM utilization unit 4512 transmits the re-revised draft of the material to be submitted to the authority to the external server 3420 based on the prompt input by the applicant 122, to instruct generation of an inquiry content about the transmitted re-revised draft of the material to be submitted to the authority.

Upon receiving the re-revised draft of the material to be submitted to the authority and the instruction for generation of an inquiry content about the re-revised draft of the material to be submitted to the authority from the data management device 4510, the LM service providing unit 3421 of the external server device 3420 generates an inquiry content in accordance with the generation instruction.

The inquiry content generated by the external server device 3420 is acquired by the LM utilization unit 4512 of the data management device 4510 ((6)) and displayed to the applicant 122. Thus, the applicant 122 re-re-revises the draft of the material to be submitted to the authority while referring to the inquiry content about the re-re-revised draft of the material to be submitted to the authority. Specifically, the applicant 122 revises the main material, and deletes or adds annexed materials ((7)) such that no authority's inquiry document data including the displayed inquiry content will be transmitted from the authority, and completes the material to be submitted to the authority.

The material to be submitted to the authority thus completed is transmitted to the authority terminal 110 via the material generation unit 4511, to complete the application for approval for manufacture and sales of pharmaceuticals and the like ((8)).

Thus, according to the work support system 4500, when generating a material to be submitted to the authority, the applicant 122 can generate the material to be submitted to the authority while referring to the inquiry contents acquired by using the language model fine-tuned for generation of inquiry contents. That is, according to the work support system 4500, it is possible to support the applicant 122 in the work to generate documents to be submitted to the authority.

### <Processing of Work Support System (Pharmaceutical Affairs Application Phase)>

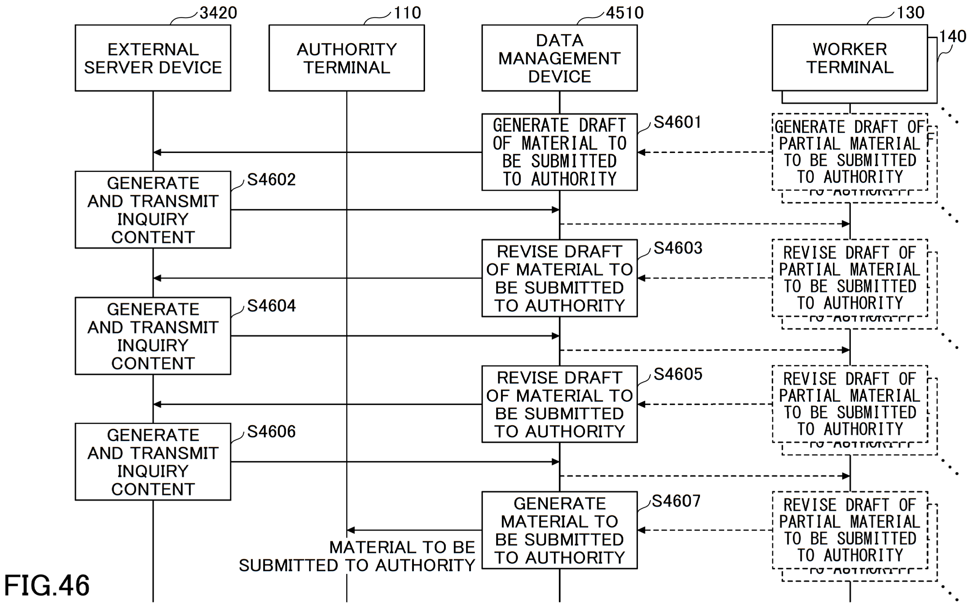

Next, the flow of processing in the pharmaceutical affairs application phase of the work support system 4500 will be described. FIG. 46 is a sequence diagram showing the flow of processing in the pharmaceutical affairs application phase of the work support system.

In step S4601, the data management device 4510 receives a prompt including a draft of a material to be submitted to the authority generated by the applicant 122, when it is input. The data management device 4510 transmits the draft of the material to be submitted to the authority and an instruction for generation of an inquiry content about the draft of the material to be submitted to the authority to the external server 3420. The draft of the material to be submitted to the authority generated by the applicant 122 may be generated based on a draft of a partial material to be submitted to the authority generated by the worker 131 or the worker 141 via the worker terminal 130 or the worker terminal 140.

In step S4602, upon receiving the draft of the material to be submitted to the authority and instruction for generation of an inquiry content about the draft of the material to be submitted to the authority from the data management device 4510, the external server device 3420 executes the language model fine-tuned for generation of inquiry contents. Thus, the external server device 3420 generates an inquiry content. The external server device 3420 transmits the generated inquiry content to the data management device 4510.

In step S4603, the data management device 4510 receives a prompt including the draft of the material to be submitted to the authority revised by the applicant 122, when it is input. Furthermore, the data management device 4510 transmits the revised draft of the material to be submitted to the authority and an instruction for generation of an inquiry content about the revised draft of the material to be submitted to the authority to the external server device 3420. The draft of the material to be submitted to the authority revised by the applicant 122 may be revised based on the draft of the partial material to be submitted to the authority revised by the worker 131 or the worker 141 via the worker terminal 130 or the worker terminal 140.

In step S4604, upon receiving the revised draft of the material to be submitted to the authority and the instruction for generation of an inquiry content about the revised draft of the material to be submitted to the authority from the data management device 4510, the external server device 3420 generates an inquiry content. Furthermore, the external server device 3420 transmits the generated inquiry content to the data management device 4510.

In step S4605, the data management device 4510 receives a prompt including the draft of the material to be submitted to the authority re-revised by the applicant 122, when it is input. In addition, the data management device 4510 transmits the re-revised draft of the material to be submitted to the authority and an instruction for generation of an inquiry content about the re-revised draft of the material to be submitted to the authority to the external server device 3420. The draft of the material to be submitted to the authority re-revised by the applicant 122 may be re-revised based on the draft of the partial material to be submitted to the authority re-revised by the worker 131 or the worker 141 via the worker terminal 130 and the worker terminal 140.

In step S4606, upon receiving the re-revised draft of the material to be submitted to the authority and an instruction for generation of an inquiry content about the re-revised draft of the material to be submitted to the authority from the data management device 4510, the external server device 3420 generates an inquiry content. In addition, the external server device 3420 transmits the generated inquiry content to the data management device 4510.

In step S4607, the data management device 4510 receives the material to be submitted to authority completed by being re-revised by the applicant 122. In addition, the data management device 4510 transmits the completed material to be submitted to the authority to the authority terminal 110 to submit the material to be submitted to the authority to the authority. The draft of the material to be submitted to the authority to be re-revised by the applicant 122 may be re-revised based on the draft of the partial material to be submitted to the authority re-revised by the worker 131 or the worker 141 via the worker terminal 130 or the worker terminal 140.

### <System Configuration of Work Support System (Pharmaceutical Affairs Inquiry Phase)>

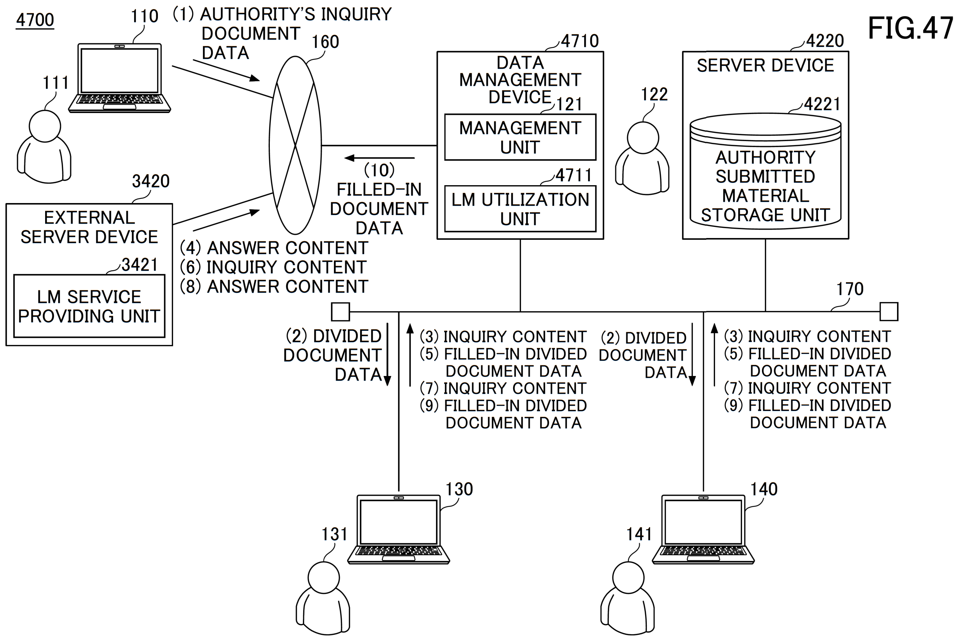

Next, the system configuration in the pharmaceutical affairs inquiry phase of the work support system according to the eighth embodiment will be described. FIG. 47 is a thirteenth diagram showing an example of the system configuration of the work support system, and shows the system configuration in the pharmaceutical affairs inquiry phase. The pharmaceutical affairs inquiry phase is a phase for generating filled-in document data using a language model fine-tuned for generation of inquiry contents. This phase is basically the same as the generation phase described in the seventh embodiment, but is different in that the language model used for generation of filled-in document data is fine-tuned for generation of inquiry contents. For this reason, the differences from the work support system 4000 in the generation phase described with reference to FIG. 40 are that:
- the function of a data management device 4710 is different from the function of the data management device 4010; and
- the server device 4220 is connected.

As shown in FIG. 47, when authority's inquiry document data is transmitted from the authority terminal 110 ((1)), the management unit 121 of the data management device 4710 divides the received authority's inquiry document data per inquiry item to generate a plurality of divided document data. The management unit 121 of the data management device 4710 transmits the generated plurality of divided document data to the corresponding worker terminals 130, 140, and the like ((2)).

When the divided document data is transmitted from the data management device 4710, the worker 131 extracts the inquiry content from the divided document data and generates a prompt including the extracted inquiry content. The worker 131 transmits the generated prompt to the LM utilization unit 4711 of the data management device 4710 via the worker terminal 130 to instruct generation of an answer content for the extracted inquiry content ((3)).

The LM utilization unit 4711 transmits the inquiry content to the external server device 3420 based on the prompt received from the worker terminal 130 and instructs generation of an answer content for the transmitted inquiry content.

Upon receiving the inquiry content and the instruction for generation of an answer content for the inquiry content from the data management device 4710, the LM service providing unit 3421 of the external server device 3420 generates an answer content in accordance with the generation instruction.

The answer content generated by the external server device 3420 is acquired by the LM utilization unit 4711 of the data management device 4710 ((4)), and transmitted to the worker terminal 130 that is the instruction issuer. Thus, the worker 131 inputs an answer content for the inquiry content while referring to the answer content generated by the language model, to generate filled-in divided document data.

Subsequently, the worker 131 generates a prompt including the generated filled-in divided document data. The worker 131 transmits the generated prompt to the LM utilization unit 4711 of the data management device 4710 via the worker terminal 130, thereby instructing generation of an inquiry content for the generated filled-in divided document data ((5)).

The LM utilization unit 4711 transmits the filled-in divided document data to the external server device 3420 based on the prompt received from the worker terminal 130, and instructs generation of an inquiry content for the transmitted filled-in divided document data.

Upon receiving the filled-in divided document data and the instruction for generation of an inquiry content for the filled-in divided document data from the data management device 4710, the LM service providing unit 3421 of the external server device 3420 generates an inquiry content in accordance with the generation instruction.

The inquiry content generated by the external server device 3420 is acquired by the LM utilization unit 4711 of the data management device 4710 ((6)) and transmitted to the worker terminal 130 that is the instruction issuer.

Subsequently, the worker 131 generates a prompt including the inquiry content and transmits the generated prompt to the LM utilization unit 4711 of the data management device 4710 via the worker terminal 130 to instruct generation of an answer content for the inquiry content ((7)).

The LM utilization unit 4711 transmits the inquiry content to the external server device 3420 based on the prompt received from the worker terminal 130 and instructs generation of an answer content for the transmitted inquiry content.

Upon receiving the inquiry content and the instruction for generation of an answer content for the inquiry content from the data management device 4710, the LM service providing unit 3421 of the external server device 3420 generates an answer content in accordance with the generation instruction.

The answer content generated by the external server device 3420 is acquired by the LM utilization unit 4711 of the data management device 4710 ((8)) and transmitted to the worker terminal 130 that is the instruction issuer. Thus, the worker 131 inputs an answer content for the inquiry content while referring to the answer content generated by the language model, and generates filled-in divided document data.

Subsequently, the worker 131 transmits the generated filled-in divided document data to the management unit 121 of the data management device 4710 via the worker terminal 130 ((9)).

The management unit 121 of the data management device 4710 generates filled-in document data based on the filled-in divided document data collected from the worker terminal 130, the worker terminal 140, and the like, and transmits it to the authority terminal 110 via the external network 160 ((10)).

Thus, according to the work support system 4700, when generating filled-in divided document data, the worker 131, the worker 141, and the like repeatedly acquire inquiry contents and answer contents by using the language model fine-tuned for generation of inquiry contents. Thus, the worker 131, the worker 141, and the like can generate filled-in divided document data that are less likely to receive further inquiries from the authority. In other words, according to the work support system 4700, it is possible to support the worker 131, the worker 141, and the like in the work to generate filled-in divided document data.

### <Processing of Work Support System (Pharmaceutical Affairs Inquiry Phase)>

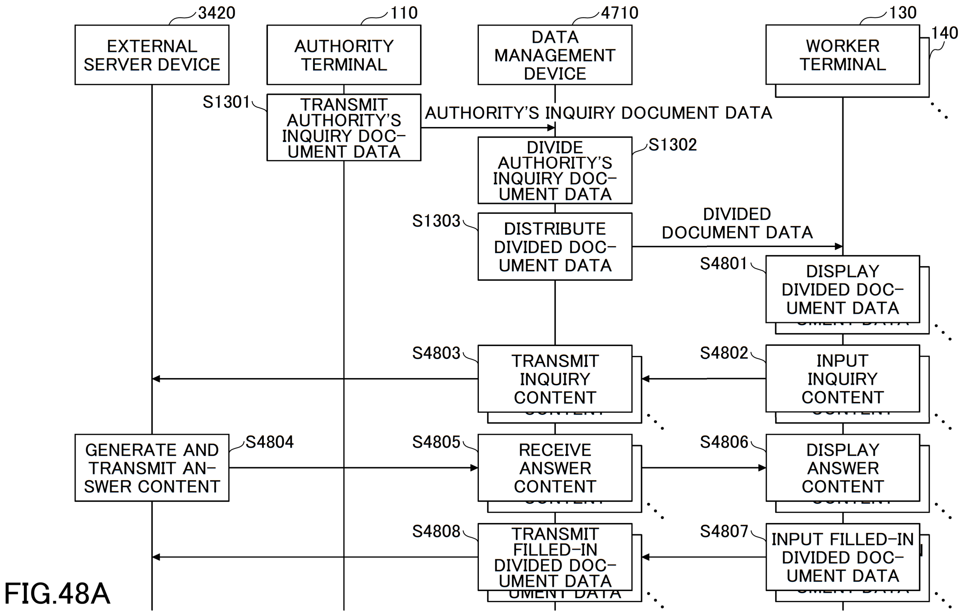

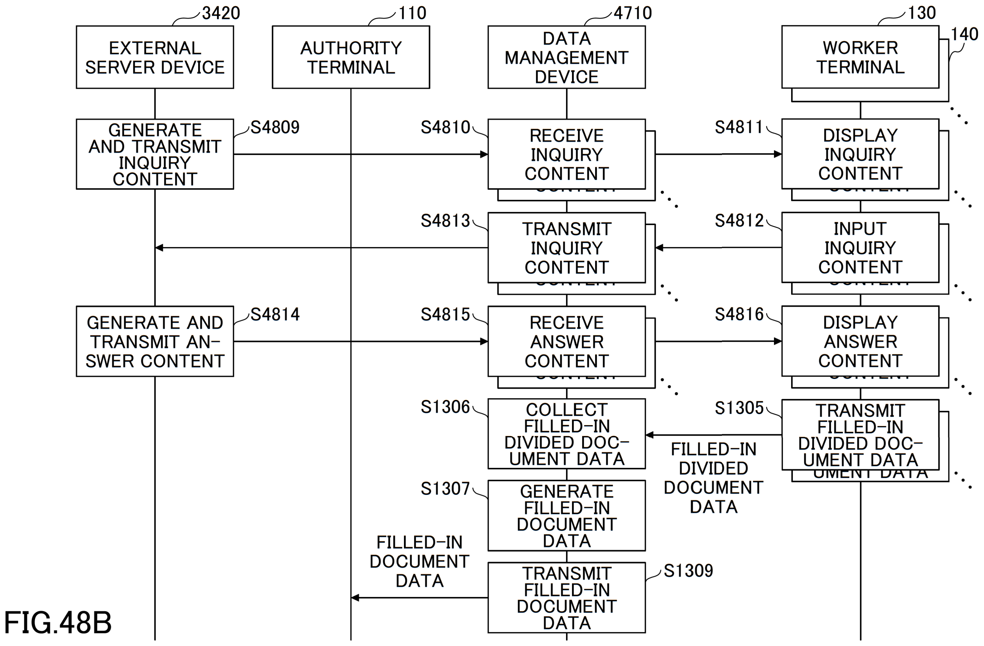

Next, the flow of processing in the pharmaceutical affairs inquiry phase of the work support system 4700 will be described. FIGS. 48A and 48B are first and second sequence diagrams showing the flow of processing in the pharmaceutical affairs inquiry phase of the work support system.

Since the processing of steps S1301 to S1303 and S1305 to S1309 is the same as the processing of steps S1301 to S1303 and S1305 to S1309 in FIG. 13, description thereof will be omitted here.

In step S4801, the worker terminals 130, 140, and the like display received divided document data, respectively.

In step S4802, the worker terminals 130, 140, and the like receive a prompt including an instruction for generation of an answer content for an inquiry content from the worker 131, 141, and the like, when it is input in response to the display of the divided document data. In addition, the worker terminals 130, 140, and the like transmit the received prompt to the data management device 4710.

In step S4803, the data management device 4710 transmits the inquiry content and the instruction for generation of an answer content for the inquiry content to the external server device 3420.

In step S4804, upon receiving the inquiry content and the instruction for generation of an answer content for the inquiry content from the data management device 4710, the external server device 3420 generates an answer content. In addition, the external server device 3420 transmits the generated answer content to the data management device 4710.

In step S4805, the data management device 4710 receives the answer content transmitted from the external server device 3420 and transmits it to the worker terminals 130, 140, and the like.

In step S4806, the worker terminals 130, 140, and the like display the answer content transmitted from the data management device 4710. Thus, the workers 131, 141, and the like can generate filled-in divided document data while referring to the answer content displayed on the worker terminals 130, 140, and the like.

In step S4807, the worker terminals 130, 140, and the like receive a prompt including an instruction for generation of an inquiry content for the filled-in divided document data generated by the workers 131, 141, and the like, when it is input. Furthermore, the worker terminals 130, 140, and the like transmit the received prompt to the data management device 4710.

In step S4808, the data management device 4710 transmits the filled-in divided document data and an instruction for generation of an inquiry content for the filled-in divided document data to the external server device 3420.

In step S4809 of FIG. 48B, upon receiving the filled-in divided document data and the instruction for generation of an inquiry content for the filled-in divided document data from the data management device 4710, the external server device 3420 generates an inquiry content. Furthermore, the external server device 3420 transmits the generated inquiry content to the data management device 4710.

In step S4810, the data management device 4710 receives the inquiry content transmitted from the external server device 3420 and transmits it to the worker terminals 130, 140, and the like.

In step S4811, the worker terminals 130, 140, and the like display the inquiry content transmitted from the data management device 4710.

In step S4812, the worker terminals 130, 140, and the like receive a prompt including the inquiry content and an instruction for generation of an answer content for the inquiry content, when it is input by the workers 131, 141, and the like. In addition, the worker terminals 130, 140, and the like transmit the received prompt to the data management device 4710.

In step S4813, the data management device 4710 transmits the inquiry content and the instruction for generation of an answer content for the inquiry content to the external server device 3420.

In step S4814, upon receiving the inquiry content and the instruction for generation of an answer content for the inquiry content from the data management device 4710, the external server device 3420 generates an answer content. In addition, the external server device 3420 transmits the generated answer content to the data management device 4710.

In step S4815, the data management device 4710 receives the answer content transmitted from the external server device 3420 and transmits it to the worker terminals 130, 140, and the like.

In step S4816, the worker terminals 130, 140, and the like display the answer content transmitted from the data management device 4710. Thus, the workers 131, 141, and the like can generate the filled-in divided document data while referring to the answer content displayed on the worker terminals 130, 140, and the like.

### <Summary>

As is clear from the above description, the work support system 4200 according to the eighth embodiment
- generates a training data set in which an authority submitted material and the inquiry content of each of a plurality of inquiry items included in authority's inquiry document data are associated with each other, and transmits the generated training data set to cause the training processing on the language model to be performed.
- When a draft of the material to be transmitted to the authority is generated and the generated draft of the material to be submitted to the authority is transmitted to the language model subjected to training processing, the work support system 4500 according to the eighth embodiment repeats a process of acquiring an inquiry content and a process of transmitting a revised draft of the material to be submitted to the authority, revised based on the acquired inquiry content, to the language model subjected to training processing.
- The work support system 4500 according to the eighth embodiment transmits the material to be transmitted to the authority, completed by being repeatedly revised by repeatedly acquiring an inquiry content, to the authority.
- The work support system 4700 according to the eighth embodiment transmits inquiry contents included in a plurality of divided document data generated by dividing authority's inquiry document data to be processed, to a language model subjected to training processing, and acquires answer contents for the inquiry contents.
- When a plurality of filled-in divided document data are generated based on the acquired answer contents, the work support system 4700 according to the eighth embodiment repeats:
   a process of transmitting the plurality of filled-in divided document data to the language model subjected to training processing, and acquiring inquiry contents for the plurality of filled-in divided document data; and
   a process of transmitting the acquired inquiry contents to the language model subjected to training processing, and acquiring answering contents for the acquired inquiry contents.
- The work support system 4700 according to the eighth embodiment transmits filled-in document data to the authority based on the plurality of filled-in divided document data completed by repeatedly acquiring answer contents.

Thus, according to the work support system according to the eighth embodiment, it is possible to support the work of the worker who generates filled-in divided document data.

### [Ninth Embodiment]

In the seventh and eighth embodiments, training processing is performed on the language model in advance, and the language model is fine-tuned such that appropriate answers can be acquired from the language model. In contrast, the ninth embodiment is configured such that appropriate answers can be acquired from the language model regardless of whether the language model is fine-tuned or not. Specifically, the work support system according to the ninth embodiment is configured such that when transmitting an instruction for generation of an answer content, auxiliary information useful for generating an appropriate answer content is transmitted together, such that the language model can generate an answer content while referring to the auxiliary information. Hereinafter, the ninth embodiment will be described mainly on the differences from the seventh or eighth embodiment.

### <System Configuration of Work Support System (Search Phase)>

First, the system configuration of the work support system according to the ninth embodiment will be described. In the ninth embodiment, the work support system performs the processing in a search phase for searching for auxiliary information useful for generating answer contents and the processing in a generation phase for generating filled-in document data based on the answer content generated by referring to the auxiliary information. Here, the system configuration of the work support system in the search phase will be described.

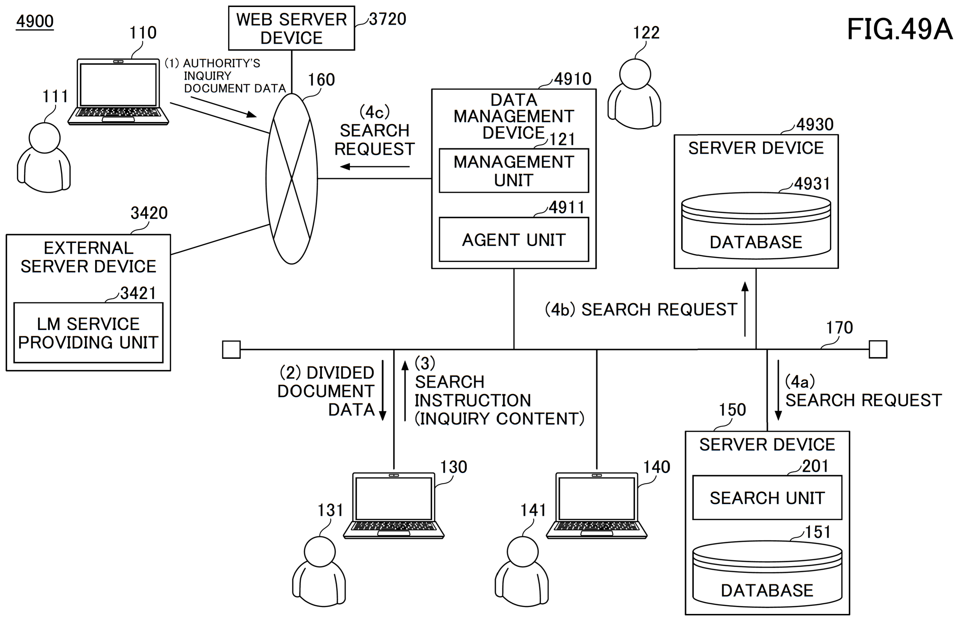

FIG. 49A is a fourteenth diagram showing an example of the system configuration of the work support system, and shows the system configuration in the search phase. The differences from the work support system 4000 described with reference to FIG. 40 in the seventh embodiment are that in the case of a work support system 4900 in FIG. 49A,
- the function of a data management device 4910 is different from the function of the data management device 4010,
- the data management device 4910 include an agent unit 4911, and
- the server device 150 and a server device 4930 are connected to the internal network 170.

As shown in FIG. 49A, when the authority's inquiry document data is transmitted from the authority terminal 110 ((1)), the management unit 121 of the data management device 4910 generates a plurality of divided document data by dividing the received authority's inquiry document data per inquiry item. The management unit 121 of the data management device 4910 transmits the generated plurality of divided document data to the corresponding worker terminals 130, 140, and the like ((2)).

When the divided document data is transmitted from the data management device 4910, the worker 131 extracts an inquiry content from the divided document data and generates a prompt including the extracted inquiry content. The worker 131 transmits the generated prompt to the agent unit 4911 of the data management device 4910 via the worker terminal 130, thereby instructing search of auxiliary information useful for generating an answer content for the extracted inquiry content ((3)).

The agent unit 4911 determines a search destination based on the prompt received from the worker terminal 130, and transmits a search request for auxiliary information to the determined search destination. The example of FIG. 49A shows that the search destinations to be searched for the auxiliary information include:
- the server device 150 in which registration data including divided document data, filled-in divided document data, filled-in document data, and the like are stored;
- any server device 4930 other than the server device 150, that is connected to the internal network 170 (the server device 4930 including a database 4931 other than a specific database (other than the database 151)); and
- any Web server device 3720 accessible via the external network 160; and
the like.

The agent unit 4911 transmits a search request for auxiliary information to the server device 150, the server device 4930, and the Web server device 3720 ((4a), (4b), (4c)).

The agent unit 4911 may be configured to transmit a search request to a preset search destination, or may be configured to narrow down preset search destinations in accordance with the inquiry content included in the prompt and then transmit the search request.

Alternatively, the worker 131 may generate a prompt guiding a search destination and transmit it to the agent unit 4911. The prompt guiding the search destination refers to a prompt in which an object to be included within the search destinations is designated, a prompt in which an object to be excluded from within the search destinations is designated, and the like.

The worker 131 may also generate a prompt guiding the search content and transmit it to the agent unit 4911. The prompt guiding the search content refers to a prompt in which a material to be searched out (for example, the latest guideline) is designated, a prompt in which a material to be excluded is designated, and the like.

### <System Configuration of Work Support System (Generation Phase)>

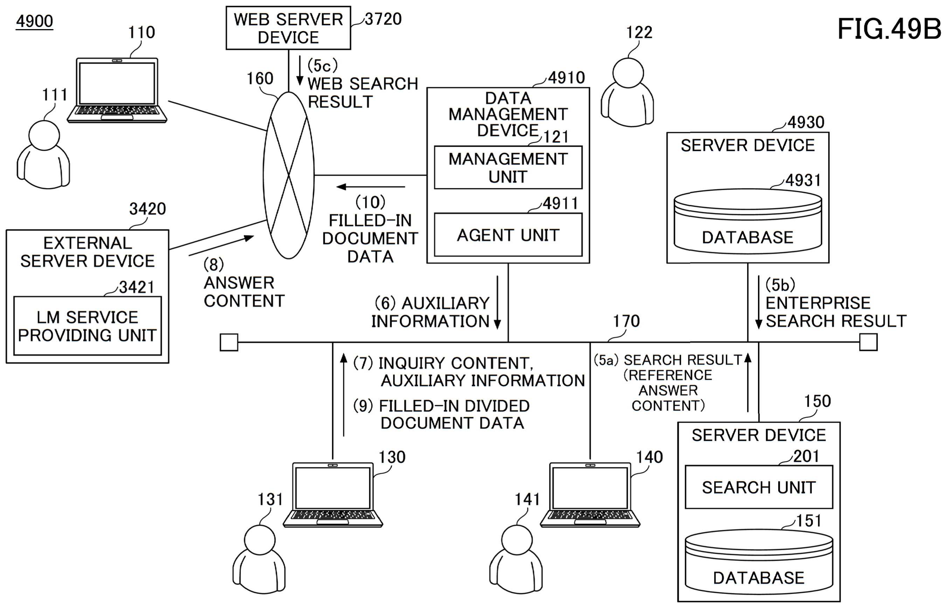

Next, the system configuration of the work support system in the generation phase will be described. FIG. 49B is a fifteenth diagram showing an example of the system configuration of the work support system, and shows the system configuration in the generation phase.

As shown in FIG. 49B, in response to the search request from the agent unit 4911, the server device 150 transmits a search result to the agent unit 4911 ((5a)). The search result transmitted by the server device 150 includes, for example, answer contents associated with past inquiry contents similar to the inquiry content included in the search request. The answer contents transmitted by the server device 150 as the search result are answer contents that can be referred to as references when the language model generates answer contents (referred to as reference answer contents).

In response to the search request from the agent unit 4911, the server device 4930 transmits a search result to the agent unit 4911 ((5b)). The search result transmitted by the server device 4930 includes, for example, enterprise search results. The enterprise search result refers to a desirable search result searched out from an enormous amount of digital data scattered in an enterprise.

In response to the search request from the agent unit 4911, the Web server device 3720 transmits a Web search result to the agent unit 4911 ((5c)).

The agent unit 4911 transmits the search result transmitted from the server device 150, the enterprise search result transmitted from the server device 4930, and the Web search result transmitted from the Web server device 3720 to the worker terminal 130 as auxiliary information ((6)).

When the worker terminal 130 receives the auxiliary information from the agent unit 4911, the worker 131 appropriately selects or rejects the auxiliary information. The worker 131 generates a prompt including the inquiry content and the selected auxiliary information, and transmits it to the agent unit 4911 of the data management device 4910 via the worker terminal 130 ((7)). The agent unit 4911 may select or reject the auxiliary information and generate a prompt including the inquiry content and the selected auxiliary information.

Upon receiving the prompt including the inquiry content and the selected auxiliary information from the worker terminal 130, the agent unit 4911 instructs the external server device 3420 to generate an answer content for the inquiry content while referring to the auxiliary information. The agent unit 4911 may transmit a prompt including the inquiry content and the auxiliary information selected by the agent unit 4911, and instruct the external server device 3420 to generate an answer content for the inquiry content while referring to the auxiliary information.

Upon receiving the inquiry content, the auxiliary information, and the instruction for generation of an answer content for the inquiry content while referring to the auxiliary information from the data management device 4910, the LM service providing unit 3421 of the external server device 3420 generates an answer content in accordance with the generation instruction.

The answer content generated by the external server device 3420 is acquired by the agent unit 4911 of the data management device 4910 ((8)) and transmitted to the worker terminal 130 that is the instruction issuer. Thus, the worker 131 inputs an answer content for the inquiry content while referring to the answer content generated by the language model, and generates filled-in divided document data.

The filled-in divided document data generated by the worker 131 is transmitted to the management unit 121 of the data management device 4910 via the worker terminal 130 ((9)).

The management unit 121 of the data management device 4910 generates filled-in document data based on the filled-in divided document data collected from the worker terminal 130, the worker terminal 140, and the like, and transmits it to the authority terminal 110 via the external network 160 ((10)).

Thus, according to the work support system 4900, when transmitting an instruction for generation of an answer content, the worker 131, the worker 141, and the like can also transmit auxiliary information useful for generating an appropriate answer content. Alternatively, according to the work support system 4900, the agent unit 4911 may select or reject the auxiliary information, generate a prompt including the inquiry content and the selected auxiliary information, and instruct the external server device 3420 to generate an answer content for the inquiry content while referring to the auxiliary information.

Thus, according to the work support system 4900, the language model can generate an answer content while referring to the auxiliary information. As a result, the worker 131, the worker 141, and the like can acquire an appropriate answer content regardless of whether the language model is fine-tuned or not.

In the explanation of FIGS. 49A and 49B, it has been assumed that the worker 131 generates the prompt for searching for the auxiliary information and the prompt for generating the answer content separately. However, the worker 131 may generate the prompt for searching for the auxiliary information and the prompt for generating the answer content as an integrated prompt. In addition, the agent unit 4911 may generate the prompt for searching for the auxiliary information and the prompt for generating the answer content as an integrated prompt without the involvement of the worker 131. In this case, when collection of auxiliary information is completed, the agent unit 4911 automatically transmits the collected auxiliary information together with the inquiry content to the external server 3420. Upon receiving the answer content from the external server 3420, the agent unit 4911 transmits it to the worker terminal 130 that is the instruction issuer.

### <Processing of Work Support System (Search Phase and Generation Phase) >

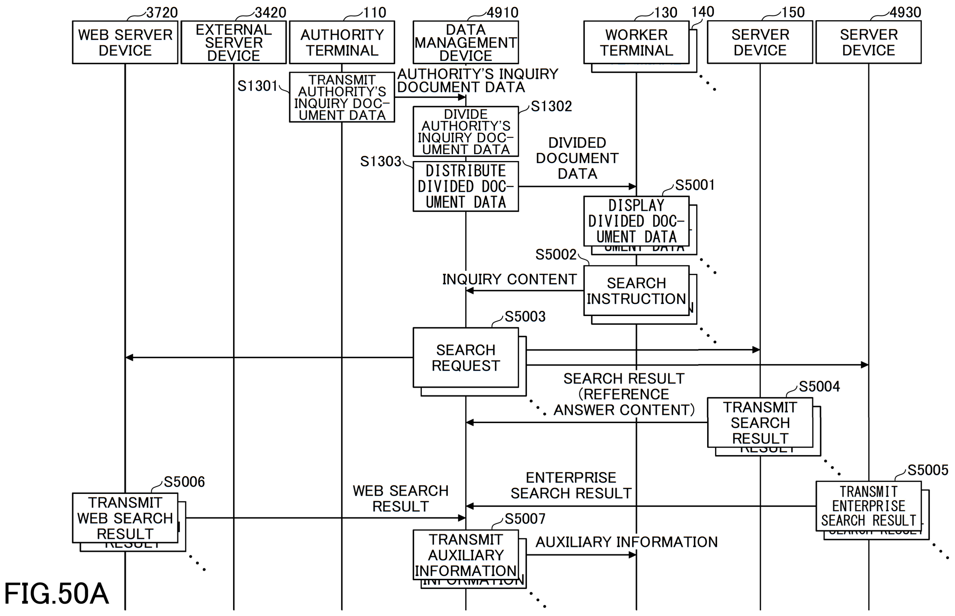

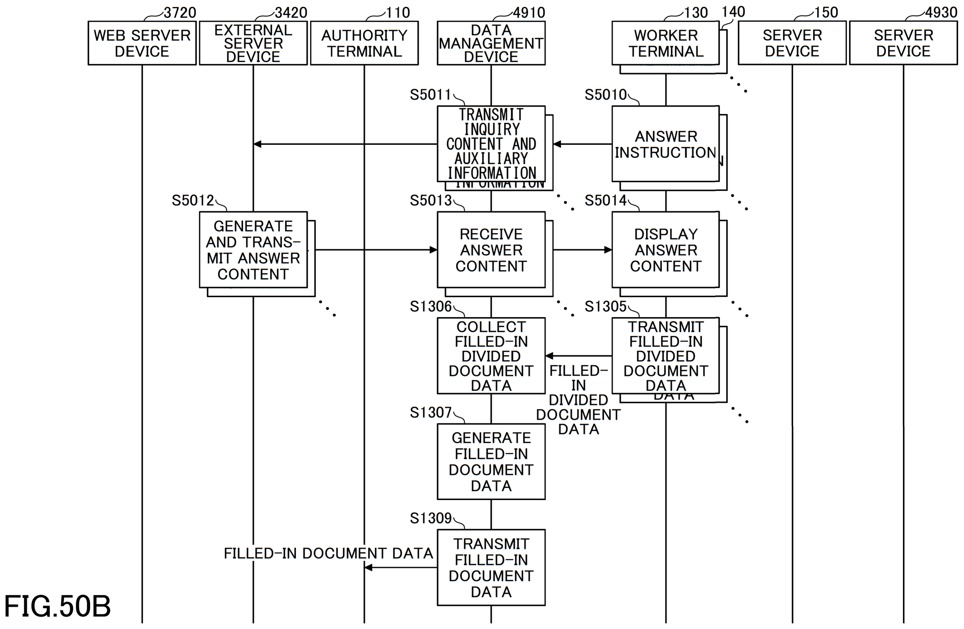

Next, the flow of processing in the search phase and the generation phase of the work support system 4900 will be described. FIGS. 50A and 50B are first and second sequence diagrams showing the flow of processing in the search phase and the generation phase of the work support system.

Of these, the processing of steps S1301 to S1303 and S1305 to S1309 is the same as the processing of steps S1301 to S1303 and S1305 to S1309 in FIG. 13, so description thereof will be omitted here.

In step S5001, the worker terminals 130, 140, and the like display received divided document data, respectively.

In step S5002, the worker terminals 130, 140, and the like receive a prompt instructing search of auxiliary information useful for generating an answer content for an inquiry content from the worker 131, 141, and the like, when it is input in response to the display of the divided document data. In addition, the worker terminals 130, 140, and the like transmit the received prompt to the data management device 4910.

In step S5003, the data management device 4910 transmits a search request to the server device 150, the server device 4930, the web server device 3720, and the like.

In step S5004, the server device 150 transmits a search result including a reference answer content to the data management device 4910.

In step S5005, the server device 4930 transmits an enterprise search result to the data management device 4910.

In step S5006, the web server device 3720 transmits a web search result to the data management device 4910.

In step S5007, the data management device 4910 transmits the search result including the reference answer content, the enterprise search result, and the Web search result to the worker terminals 130, 140, and the like as auxiliary information.

In step S5010 of FIG. 50B, upon receiving a prompt including the inquiry content and the auxiliary information, the worker terminals 130, 140, and the like transmit it to the data management device 4910.

In step S5011, the data management device 4910 instructs the external server device 3420 to generate an answer content for the inquiry content while referring to the auxiliary information, based on the prompt received from the worker terminals 130, 140, and the like. The data management device 4910 may instruct the external server device 3420 to generate an answer content for the inquiry content while referring to auxiliary information, based on a prompt including the inquiry content and auxiliary information selected by the agent unit 4911 by bypassing steps S5007 and S5010. Furthermore, the prompt may include the inquiry content, the auxiliary information selected by the worker terminal 130, and the like, and the auxiliary information selected by the agent unit 4911.

In step S5012, the external server device 3420 generates an answer content in accordance with the instruction from the data management device 4910 and transmits the answer content to the data management device 4910.

In step S5013, the data management device 4910 receives the answer content transmitted from the external server device 3420 and transmits it to the worker terminals 130, 140, and the like.

In step S5014, the worker terminals 130, 140, and the like display the answer content transmitted from the data management device 4910. The workers 131, 141, and the like generate filled-in divided document data while referring to the answer content displayed on the worker terminals 130, 140, and the like.

### <Summary>

As is clear from the above description, in the work support system 4900 according to the ninth embodiment,
- when a plurality of divided document data of authority's inquiry document data to be processed are generated and a search instruction based on inquiry contents included in the plurality of divided document data is received, auxiliary information to be referred to by the language model for generating answer contents for the inquiry contents are collected,
- as the auxiliary information, answer contents included in filled-in divided document data suitable for the inquiry contents, an enterprise search result searched out based on the inquiry contents, and a Web search result searched out based on the inquiry contents are collected, and
- the collected auxiliary information is transmitted to the language model together with the inquiry contents, and answer contents for the inquiry contents are acquired.

Thus, according to the work support system according to the ninth embodiment, appropriate answer contents can be acquired from the language model regardless of whether the language model is fine-tuned or not. Thus, according to the work support system according to the ninth embodiment, it is possible to support the work of the worker who generates filled-in divided document data.

### [Other Embodiments]

It should be noted that the present invention is not limited to the configurations shown here, such as the configurations and the like mentioned in the above embodiments, combinations with other elements, and the like. These particulars can be modified to the extent until which they do not depart from the spirit of the present invention, and can be appropriately specified in accordance with how they are applied.

This application claims priority based on Japanese Patent Application No. 2022-209989, filed on December 27, 2022, the entire contents of which are incorporated herein by reference.

### REFERENCE SIGNS LIST

- 100 :: work support system
- 110 :: authority terminal
- 120 :: data management device
- 121 :: management unit
- 130, 140 :: worker terminal
- 150 :: server device
- 151 :: database
- 200 :: work support system
- 201 :: search unit
- 400 :: authority's inquiry document data
- 501 :: document data acquisition unit
- 502 :: user interface
- 503 :: division unit
- 504 :: distribution unit
- 505 :: attribute information extraction unit
- 506 :: collection unit
- 507 :: document data generation unit
- 508 :: document data transmission unit
- 610, 620 :: divided document data
- 710, 720 :: filled-in divided document data
- 800 :: filled-in document data
- 900 :: attribute information
- 1000 :: registration data
- 1101 :: search screen providing unit
- 1102 :: search condition acquisition unit
- 1103 :: search control unit
- 1210, 1220:: search screen
- 1500 :: work support system
- 1510 :: training device
- 1511 :: training unit
- 1600 :: work support system
- 1610 :: prediction device
- 1611 :: prediction unit
- 1801 :: storage unit
- 2100 :: work support system
- 2101 :: search unit
- 2201 :: search screen providing unit
- 2202 :: extraction unit
- 2203 :: first vectorization unit
- 2204 :: separation unit
- 2205 :: second vectorization unit
- 2206 :: similarity degree calculation unit
- 2207 :: output unit
- 2310 :: search screen
- 2401 :: morphological analysis unit
- 2402 :: vectorization model
- 2411 :: morphological analysis unit
- 2412 :: vectorization model
- 2601 :: extraction unit
- 2602 :: filter unit
- 2710 :: search screen
- 2800 :: work support system
- 2810 :: analysis device
- 2811 :: analysis unit
- 3010 :: feedback information acquisition unit
- 3021 :: addition term extraction unit
- 3022 :: deletion term extraction unit
- 3023 :: glossary updating unit
- 3031 :: hyperparameter updating unit
- 3041 :: training data generation unit
- 3042 :: training unit
- 3043 :: model updating unit
- 3201, 3202:: vectorization model
- 3211, 3212:: vectorization model
- 3400 :: work support system
- 3410 :: data management device
- 3411 :: LM training data generation unit
- 3420 :: external server device
- 3421 :: LM service providing unit
- 3500 :: LM training data set
- 3700 :: work support system
- 3710 :: second LM training data generation unit
- 3711 :: learning object information collection unit
- 3712 :: self-supervised training data generation unit
- 3721 :: first generation control unit
- 3722 :: second generation control unit
- 3820 :: second LM training data set
- 4000 :: work support system
- 4010 :: data management device
- 4011 :: LM utilization unit
- 4200 :: work support system
- 4211 :: LM training data generation unit
- 4220 :: server device
- 4300 :: LM training data set
- 4500 :: work support system
- 4510 :: data management device
- 4511 :: material generation unit
- 4512 :: LM utilization unit
- 4520 :: server device
- 4700 :: work support system
- 4710 :: data management device
- 4711 :: LM utilization unit
- 4900 :: work support system
- 4910 :: data management device
- 4911 :: agent unit
- 4930 :: server device

## Claims

1. A work support system, comprising:
a division unit configured to generate a plurality of divided document data by dividing a plurality of inquiry items included in document data of an authority's inquiry per inquiry item;
a first acquisition unit configured to acquire a plurality of filled-in divided document data in each of which an answer content for an inquiry content of a corresponding one of the plurality of inquiry items has been input;
a second acquisition unit configured to acquire filled-in document data that is document data in one file format, generated from the plurality of filled-in divided document data acquired; and
a storage unit configured to store each of the plurality of filled-in divided document data acquired, in a database in association with the filled-in document data.

2. The work support system according to claim 1, further comprising:
an attribute information extraction unit configured to extract attribute information from the document data of the authority's inquiry or from the filled-in document data,
wherein the storage unit stores each of the plurality of filled-in divided document data acquired, in the database in association with the attribute information and the filled-in document data.

3. The work support system according to claim 2,
wherein the attribute information includes at least one type of information selected from a timing of the authority's inquiry, a disease category of an inquiry content, an event about which an inquiry is made, an article of an inquiry content, and a timing of an answer to the authority's inquiry.

4. The work support system according to claim 2, further comprising:
a third acquisition unit configured to acquire a keyword imagined from the inquiry content and the answer content included in each of the filled-in divided document data acquired,
wherein the storage unit stores each of the plurality of filled-in divided document data acquired, in the database in association with the keyword, the attribute information, and the filled-in document data.

5. The work support system according to claim 4, further comprising:
a memory unit configured to store a trained model trained by using a training data set including: the inquiry content and the answer content included in each of the filled-in divided document data; and the keyword imagined from the inquiry content and the answer content included in each of the filled-in divided document data,
wherein the third acquisition unit acquires a keyword imaginable from each inquiry content and each answer content included in the filled-in document data acquired, by inputting each inquiry content and each answer content included in the filled-in document data acquired, into the trained model.

6. The work support system according to claim 4 or 5, further comprising:
a search unit configured to search out filled-in divided document data matching a predetermined condition from among the plurality of filled-in divided document data acquired and stored in the database.

7. The work support system according to claim 6,
wherein the filled-in divided document data matching the predetermined condition includes:
filled-in divided document data including a predetermined character string;
filled-in divided document data, the keyword associated with which matches a predetermined character string;
filled-in divided document data, the attribute information associated with which includes a timing of the authority's inquiry or a timing of an answer to the authority's inquiry that falls within a predetermined period;
filled-in divided document data, the attribute information associated with which includes a disease category that is a predetermined disease category;
filled-in divided document data, the attribute information associated with which includes an event about which an inquiry is made, that is a predetermined event; or
filled-in divided document data, the attribute information associated with which includes an article that is a predetermined article.

8. The work support system according to claim 6,
wherein the search unit outputs the attribute information, the filled-in document data, or the keyword stored in association with the filled-in divided document data that is searched out, upon receiving a details display instruction.

9. The work support system according to claim 1, further comprising:
a first generation unit configured to generate a first training data set in which the inquiry contents and the answer contents included in the plurality of filled-in divided document data acquired by the first acquisition unit are associated with each other, and transmit the first training data set generated, to instruct training processing on a language model.

10. The work support system according to claim 9, further comprising:
a second generation unit configured to generate a second training data set for performing self-supervised training, by collecting information contributing to generation of answer contents via a network at a predetermined cycle, and instruct training processing on the language model based on the second training data set generated.

11. The work support system according to claim 10, further comprising:
a first generation control unit configured to select or reject combinations of the inquiry contents and the answer contents to be included in the first training data set based on the second training data set; and
a second generation control unit configured to change a source from which the information contributing to generation of answer contents is collected, based on the first training data set.

12. The work support system according to claim 9, further comprising:
a utilization unit configured to, when the plurality of divided document data are generated by the division unit from the document data of the authority's inquiry to be processed, transmit the inquiry content of each of the plurality of inquiry items to the language model having been subjected to the training processing, to acquire the answer content for the inquiry content of each of the plurality of inquiry items,
wherein the first acquisition unit acquires the plurality of filled-in divided document data generated based on the answer contents acquired by the utilization unit.

13. The work support system according to claim 1, further comprising:
a generation unit configured to generate a training data set in which submitted document data submitted to an authority and the inquiry content of each of the plurality of inquiry items included in the document data of the authority's inquiry are associated with each other, and transmit the training data set generated, to instruct training processing on a language model.

14. The work support system according to claim 13, further comprising:
a material generation unit configured to generate submission document data to be submitted to the authority; and
a utilization unit configured to, when the submission document data to be submitted to the authority is transmitted to the language model having been subjected to the training processing, repeat
a process for acquiring an inquiry content about the submission document data to be submitted to the authority, and
a process for transmitting to the language model having been subjected to the training processing, the submission document data to be submitted to the authority that is revised based on the inquiry content about the submission document data to be submitted to the authority,
wherein the material generation unit transmits to the authority, the submission document data to be submitted to the authority that is revised by inquiry contents being repeatedly acquired by the utilization unit.

15. The work support system according to claim 13, further comprising:
a utilization unit configured to, when the plurality of filled-in divided document data are generated by transmitting the inquiry contents included in the plurality of divided document data to the language model having been subjected to the training processing and acquiring answer contents generated for the inquiry contents, the plurality of divided document data being generated by the division unit from the document data of the authority's inquiry to be processed, repeat
a process for transmitting the plurality of filled-in divided document data to the language model having been subjected to the training processing, to acquire inquiry contents about the plurality of filled-in divided document data, and
a process for transmitting the inquiry contents acquired, to the language model having been subjected to the training processing, to acquire answer contents for the inquiry contents acquired,
wherein the first acquisition unit acquires the plurality of filled-in divided document data generated by answer contents being repeatedly acquired by the utilization unit.

16. The work support system according to claim 9 or 13, further comprising:
an agent unit configured to, upon receiving a search instruction based on the inquiry contents included in the plurality of divided document data generated by the division unit from the document data of the authority's inquiry to be processed, collect auxiliary information that the language model having been subjected to the training processing refers to for generating the answer contents for the inquiry contents.

17. The work support system according to claim 16,
wherein the auxiliary information includes the answer contents included in the filled-in divided document data suitable for the inquiry contents of the search instruction, which are a search result collected by searching the database, an enterprise search result collected by searching a database other than the database, or a Web search result collected by searching a Web server device.

18. The work support system according to claim 17,
wherein the agent unit transmits the inquiry contents included in the document data of the authority's inquiry to be processed, and the auxiliary information collected, to the language model, and acquires the answer contents for the inquiry contents included in the document data of the authority's inquiry to be processed.

19. The work support system according to claim 9 or 13,
wherein the language model is a large language model.

20. A work support method, comprising a computer executing:
a generation step of generating a plurality of divided document data by dividing a plurality of inquiry items contained in document data of an authority's inquiry per inquiry item;
a first acquisition step of acquiring a plurality of filled-in divided document data in each of which an answer content for an inquiry content of a corresponding one of the plurality of inquiry items has been input;
a second acquisition step of acquiring filled-in document data that is document data in one file format, generated from the plurality of filled-in divided document data acquired; and
a storing step of storing the plurality of filled-in divided document data acquired, in a database in association with the filled-in document data.

21. A data management program causing a computer to execute:
a generation step of generating a plurality of divided document data by dividing a plurality of inquiry items included in document data of an authority's inquiry per inquiry item;
a first acquisition step of acquiring a plurality of filled-in divided document data in each of which an answer content for an inquiry content of a corresponding one of the plurality of inquiry items has been input;
a second acquisition step of acquiring filled-in document data that is document data in one file format, generated from the plurality of filled-in divided document data acquired; and
a storing step of storing each of the plurality of filled-in divided document data acquired, in a database in association with the filled-in document data.

22. A work support system, comprising:
a database configured to store registration data including a plurality of filled-in divided document data, which are obtained by answer contents being input respectively into a plurality of divided document data generated by dividing inquiry contents of a plurality of inquiry items included in document data of an authority's inquiry per inquiry item;
a search unit configured to calculate a degree of similarity with respect to vector data obtained by vectorizing an inquiry content included in document data of an authority's inquiry to be processed, to thereby search out an inquiry content including vector data satisfying a predetermined similarity condition from the database; and
an output unit configured to output the filled-in divided document data corresponding to the inquiry content searched out, or data that is included in the registration data corresponding to the inquiry content searched out and that is other than the filled-in divided document data.

23. The work support system according to claim 22,
wherein the search unit includes:
a morphological analysis unit configured to perform a morphological analysis on inquiry contents included in the document data of the authority's inquiry to be processed, by using a glossary including terms specific to pharmaceutical development;
a vectorization unit configured to vectorize the inquiry contents included in the document data of the authority's inquiry to be processed, based on each word extracted by the morphological analysis from the inquiry contents included in the document data of the authority's inquiry to be processed; and
a similarity degree calculation unit configured to calculate the degree of similarity with respect to the vector data generated by the vectorizing from the inquiry contents included in the document data of the authority's inquiry to be processed.

24. The work support system according to claim 23,
wherein the vectorization unit vectorizes each word extracted from the inquiry contents included in the document data of the authority's inquiry to be processed with a value matching a frequency of appearance of the word.

25. The work support system according to claim 24,
wherein the vectorization unit performs the vectorizing based on TF-IDF.

26. The work support system according to claim 22,
wherein the database further stores, as the registration in association with the plurality of filled-in divided document data:
filled-in document data that is document data in one file format, generated from the plurality of filled-in divided document data;
attribute information extracted from the document data of the authority's inquiry or from the filled-in document data; and
a keyword imagined from each inquiry content and each answer content included in the plurality of filled-in divided document data.

27. The work support system according to claim 26,
wherein the attribute information includes information regarding at least one of a timing of the authority's inquiry, a disease category of an inquiry content, an event about which an inquiry is made, an article of an inquiry content, and a timing of an answer to the authority's inquiry.

28. The work support system according to claim 27,
wherein the search unit searches out filled-in divided document data satisfying a predetermined filter condition from among the plurality of filled-in divided document data included in the registration data stored in the database.

29. The work support system according to claim 28,
wherein the filled-in divided document data satisfying the predetermined filter condition includes:
filled-in divided document data including a predetermined character string;
filled-in divided document data, the keyword associated with which matches a predetermined character string;
filled-in divided document data, the attribute information associated with which includes a timing of the authority's inquiry or a timing of an answer to the authority's inquiry that falls within a predetermined period;
filled-in divided document data, the attribute information associated with which includes a disease category that is a predetermined disease category;
filled-in divided document data, the attribute information associated with which includes an event about which an inquiry is made, that is a predetermined event; or
filled-in divided document data, the attribute information associated with which includes an article that is a predetermined article.

30. The work support system according to claim 26,
wherein the output unit outputs the attribute information, the filled-in document data, or the keyword stored in association with the filled-in divided document data corresponding to the inquiry content searched out, upon receiving a details display instruction.

31. The work support system according to claim 23, further comprising:
a first updating unit configured to update a glossary including terms specific to pharmaceutical development, based on a result of evaluation on the inquiry content searched out.

32. The work support system according to claim 23, further comprising:
a second updating unit configured to update a parameter used when the vectorization unit performs the vectorizing, based on a result of evaluation on the inquiry content searched out.

33. The work support system according to claim 32, further comprising:
a training unit configured to generate a trained model by performing training processing using a training data set including the inquiry content included in the document data of the authority's inquiry, the inquiry content searched out, and the result of evaluation; and
a third updating unit configured to update the vectorization unit using the trained model.

34. The work support system according to claim 33,
wherein the training unit generates the trained model by performing training processing on a model such that a degree of similarity between vector data that is output when the inquiry content included in the document data of the authority's inquiry, read out from the training data set, is input into the model and vector data that is output when the inquiry content searched out, read out from the training data set, is input into the model becomes close to a degree of similarity matching the result of evaluation read out from the training data set.

35. The work support system according to claim 22, further comprising:
an agent unit configured to, upon receiving a search instruction based on the inquiry content included in the document data of the authority's inquiry to be processed, collect auxiliary information that a language model refers to for generating an answer content for the inquiry content.

36. The work support system according to claim 35,
wherein the auxiliary information includes: the answer content included in the filled-in divided document data suitable for the inquiry content of the search instruction, the answer content included in the filled-in divided document data being a search result collected by searching the database; an enterprise search result collected by searching a database other than the database; or a Web search result collected by searching a Web server device.

37. The work support system according to claim 36,
wherein the agent unit transmits the inquiry content included in the document data of the authority's inquiry to be processed, and the auxiliary information collected, to the language model, and acquires an answer content for the inquiry content included in the document data of the authority's inquiry to be processed.

38. The work support system according to claim 35,
wherein the language model is a language model that has been subjected to training processing by using a training data set in which the inquiry content and the answer content included in each of the plurality of filled-in divided document data are associated with each other or a training data set in which submitted document data submitted to an authority and the inquiry contents of the plurality of inquiry items included in the document data of the authority's inquiry are associated with each other.

39. A work support method in which a computer of a server device including a database configured to store registration data including a plurality of filled-in divided document data, which are obtained by answer contents being input respectively into a plurality of divided document data generated by dividing inquiry contents of a plurality of inquiry items included in document data of an authority's inquiry per inquiry item, executes:
a searching step of calculating a degree of similarity with respect to vector data obtained by vectorizing an inquiry content included in document data of an authority's inquiry to be processed, to thereby search out an inquiry content including vector data satisfying a predetermined similarity condition from the database; and
an outputting step of outputting the filled-in divided document data corresponding to the inquiry content searched out, or data that is included in the registration data corresponding to the inquiry content searched out and that is other than the filled-in divided document data.

40. A search program causing a computer of a server device including a database configured to store registration data including a plurality of filled-in divided document data, which are obtained by answer contents being input respectively into a plurality of divided document data generated by dividing inquiry contents of a plurality of inquiry items included in document data of an authority's inquiry per inquiry item, to execute:
a searching step of calculating a degree of similarity with respect to vector data obtained by vectorizing an inquiry content included in document data of an authority's inquiry to be processed, to thereby search out an inquiry content including vector data satisfying a predetermined similarity condition from the database; and
an outputting step of outputting the filled-in divided document data corresponding to the inquiry content searched out, or data that is included in the registration data corresponding to the inquiry content searched out and that is other than the filled-in divided document data.
